# EUROPEAN PATENT APPLICATION

(11) **EP 4 733 912 A1**
(43) Date of publication of application: **29.04.2026**
(21) Application number: 24838318.4
(22) Date of filing: 05.03.2024
(51) Int. Cl.: G06F 3/04817

(54) **CROSS-TERMINAL INTERACTION METHOD AND RELATED DEVICE THEREOF**

(30) Priority: 12.07.2023 CN 202310863214
(71) Applicant: Honor Device Co., Ltd., Shenzhen, Guangdong 518040 (CN)
(72) Inventor: ZHANG, Zhuohua, Shenzhen, Guangdong 518040 (CN); WANG, Long, Shenzhen, Guangdong 518040 (CN); SONG, Xiaoxu, Shenzhen, Guangdong 518040 (CN)
(74) Representative: Epping - Hermann - Fischer
(86) International application number: PCT/CN2024/080179
(87) International publication number: WO 2025/011057

(57) **Abstract**

This application provides a cross-end interaction method and a related device, and relates to the field of terminal technologies. According to the method, when displaying a first element, a first electronic device starts a target application and displays a hidden-representation icon through a first stage of a first operation; collects the first element into the target application and switches the hidden-representation icon to a collection-representation icon through a second stage of the first operation; and switches the collection-representation icon to the hidden-representation icon again after the first element is collected. Before the first element is collected, a second electronic device displays the hidden-representation icon. After the first element is collected, the hidden-representation icon on the second electronic device is switched to the floating-representation icon through a third operation. In this case, the floating-representation icon includes a first icon indicating the first element and a first corner mark indicating that the first element is from an electronic device other than the second electronic device. In this application, an element is collected on one device, and an icon of the element is automatically synchronized on another device, to improve cross-end interaction efficiency.

## Description

This application claims priority to Chinese Patent Application No. 202310863214.0, filed with the China National Intellectual Property Administration on July 12, 2023 and entitled "CROSS-END INTERACTION METHOD AND RELATED DEVICE", which is incorporated herein by reference in its entirety.

### TECHNICAL FIELD

This application relates to the field of terminal technologies, and in particular, to a cross-end interaction method and a related device.

### BACKGROUND

With continuous development of terminal technologies, an electronic device may support collection of different types of elements in different forms. For example, for a mobile phone, a user may copy and save text, take a screenshot, and record audio, videos, and the like by using the mobile phone, and may further add web pages, videos, and the like obtained from some applications (for example, a news application) to Favorites. In addition, the electronic device may further support organizing of the elements. For example, the user may copy, edit, and delete a collected element by using the mobile phone.

During actual processing, an element collection and organizing process not only relates to various collection forms and various types of elements, but also relates to a plurality of applications, and relates to a plurality of times of collection and a plurality of times of organization. In addition, cross-end processing is more likely to be involved as types of terminals continue to be abundant and multi-device collaboration is widely applied. In view of this, currently provided corresponding methods corresponding to a file management application, a Notes application, and the like have dispersed and limited functions, and are not convenient enough. Consequently, use experience of users is seriously affected.

Therefore, how to improve cross-end element processing efficiency of an electronic device is an urgent problem that needs to be resolved currently.

### SUMMARY

This application provides a cross-end interaction method and a related device. According to the method, an electronic device can collect and synchronize different types of elements across ends to a Global Favorites application, and may further perform secondary organization and centralized and unified use on the collected elements This manner can greatly improve efficiency of elements collection, organization, and sharing, to improve user experience.

According to a first aspect, this application provides a cross-end interaction method, which can be applied to a cross-end interaction system including a first electronic device and a second electronic device. The method may include:
displaying, by the first electronic device, a first interface, where the first interface includes a first element;
in the first electronic device, in response to a first stage of a first operation on the first element, starting a target application, and displaying a hidden-representation icon corresponding to the target application in the first interface in a floating manner;
in the first electronic device, in response to a second stage of the first operation on the first element, switching from the hidden-representation icon to a collection-representation icon corresponding to the target application, and collecting the first element into the target application by using the collection-representation icon, where a size of the hidden-representation icon is smaller than a size of the collection-representation icon, the collection-representation icon is displayed in the first interface in a floating manner, and the first stage and the second stage are continuous;
in the first electronic device, switching from the collection-representation icon to the hidden-representation icon after the first element is collected;
in the first electronic device, in response to a second operation on the hidden-representation icon existing after the collection, switching from the hidden-representation icon to a floating-representation icon corresponding to the target application, where the floating-representation icon is displayed in the first interface in a floating manner, and the floating-representation icon includes a first icon indicating the first element;
displaying, by the second electronic device, a second interface before the first element is collected, where the hidden-representation icon corresponding to the target application is displayed in the second interface in a floating manner;
detecting, by the second electronic device, a third operation on the hidden-representation icon in the second interface after the first element is collected; and
in the second electronic device, in response to the third operation, switching from the hidden-representation icon to the floating-representation icon, where the floating-representation icon is displayed in the second interface in a floating manner, the floating-representation icon includes the first icon indicating the first element and a first corner mark, and the first corner mark indicates that the first element is from an electronic device other than the second electronic device.

In some embodiments of this application, the first electronic device is a mobile phone, and the second electronic device is a tablet computer or a desktop computer.

The target application is a Global Favorites application in this embodiment of this application. The hidden-representation icon displayed on a second electronic device side indicates that the target application is started.

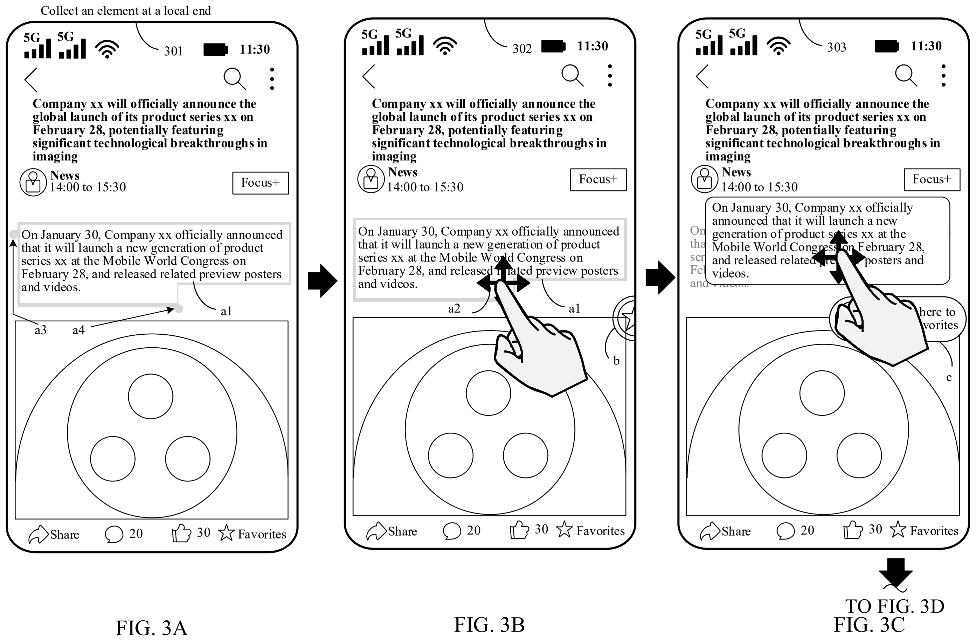

In some embodiments of this application, the first element collection process may indicate a text collection process shown in FIG. 3A to FIG. 3F.

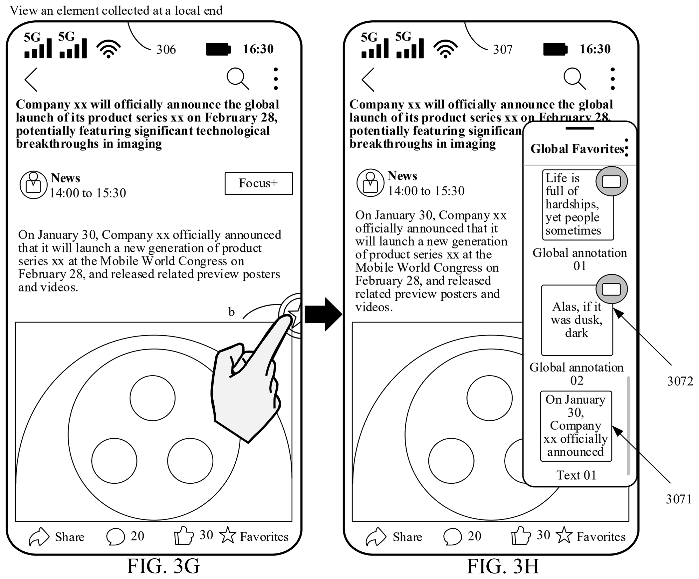

In some embodiments of this application, the process of viewing the first icon on the first electronic device may indicate a process shown in FIG. 3G and FIG. 3H.

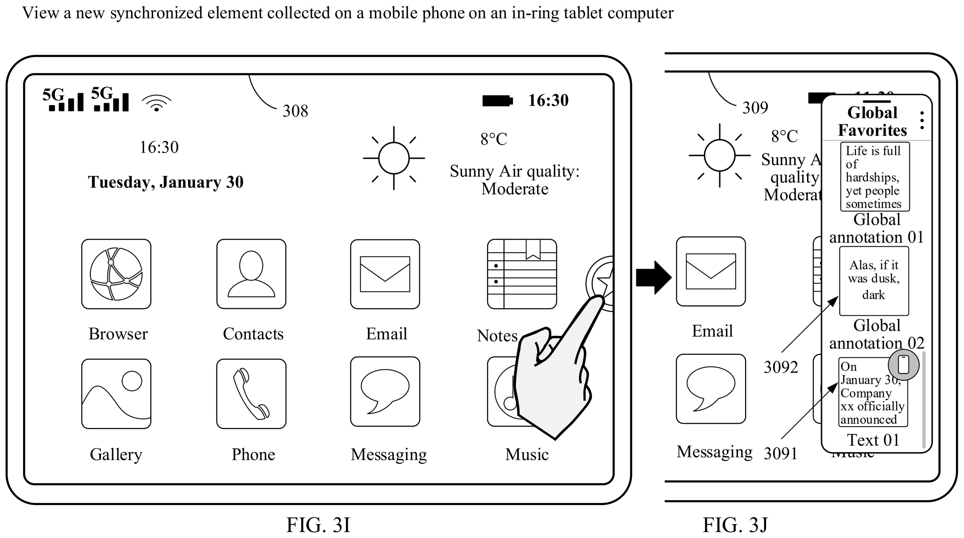

In some embodiments of this application, the process of viewing the first icon on the second electronic device may indicate a process shown in FIG. 3I and FIG. 3J.

In the solution provided in this application, when displaying the first element, the first electronic device starts the target application and displays the hidden-representation icon through the first stage of the first operation; collects the first element into the target application and switches from the hidden-representation icon to the collection-representation icon through the second stage of the first operation; and switches from the collection-representation icon to the hidden-representation icon again after the first element is collected. After the second operation is performed on the hidden-representation icon, the first icon corresponding to the first element can be seen in the floating-representation icon obtained after switching.

Meanwhile, before the first element is collected, the second electronic device displays the hidden-representation icon. After the first element is collected, the hidden-representation icon on the second electronic device is switched to the floating-representation icon through the third operation. In this case, the floating-representation icon includes the first icon indicating the first element and the first corner mark indicating that the first element is from an electronic device other than the second electronic device. According to this application, an element can be collected into the first electronic device, and an icon of the element can be automatically synchronized in another in-ring device (for example, the second electronic device). This can implement synchronization without manual interaction, to improve cross-end interaction efficiency. In addition, an element icon displayed on the collection device carries no corner mark, and an element icon displayed on the synchronization device carries a corner mark. Through this difference, a user can intuitively learn of a source of the element. This improves user experience.

With reference to the first aspect, in a possible implementation, the floating-representation icon in the second electronic device includes a first control, and after the floating-representation icon is displayed in the second interface in a floating manner, the method further includes:
in the second electronic device, in response to a fourth operation on the first control, displaying a first card in the second interface in a floating manner, where the first card includes at least a plurality of invokable service options corresponding to the first electronic device, and the invokable service options include a shooting option;
in the second electronic device, in response to a fifth operation on the shooting option, sending, by the second electronic device, a first instruction to the first electronic device, where the first instruction instructs to start a camera application of the first electronic device;
after receiving the first instruction, starting, by the first electronic device, the camera application and displaying a shooting interface; and
in the second electronic device, switching from the first card to a multi-screen collaboration interface, where the multi-screen collaboration interface is displayed in the second interface in a floating manner, and the multi-screen collaboration interface includes the shooting interface corresponding to the first electronic device.

In some embodiments of this application, the first control indicates a "more" control.

In some embodiments of this application, the shooting option may include a photographing option and a video recording option.

With reference to the first aspect, in a possible implementation, the shooting interface includes a shooting control, and the method further includes:
in the second electronic device, in response to a sixth operation on the shooting control included in the multi-screen collaboration interface, sending a second instruction to the first electronic device, where the second instruction instructs to perform shooting;
after receiving the second instruction, shooting, by the first electronic device, and collecting a captured second element into the target application of the first electronic device, where
after the second element is collected, the floating-representation icon of the first electronic device includes a second icon indicating the second element; and
sending, by the first electronic device, the second icon and a second corner mark to the second electronic device, where the second corner mark indicates that the second element is from an electronic device other than the second electronic device.

In some embodiments of this application, the shooting control may include a photographing control and a video recording control.

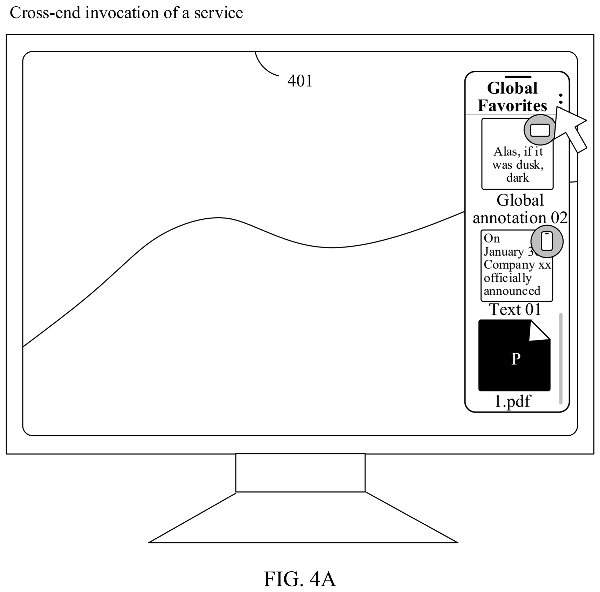

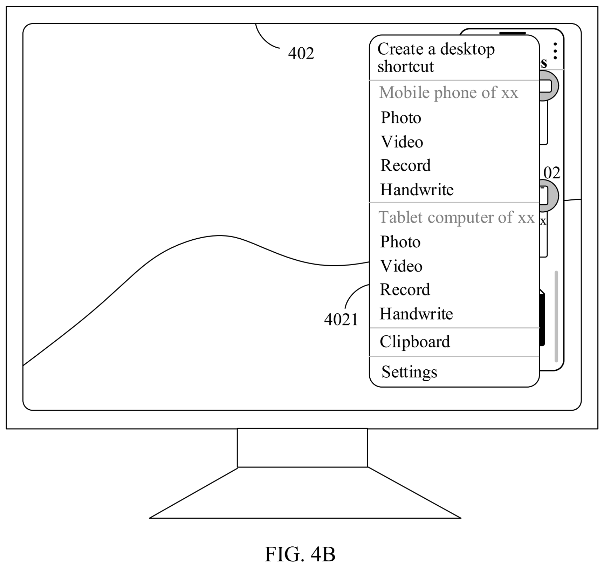

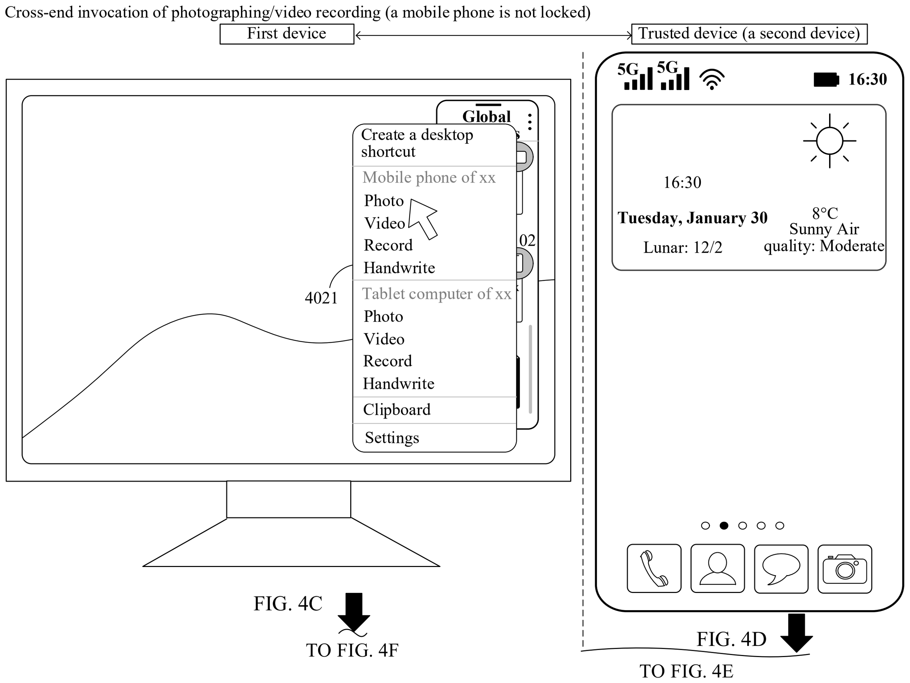

In some embodiments of this application, the second electronic device triggers the shooting option across ends, and invokes a shooting function on the first electronic device to collect the second element. The second element is an image or a video. The process may indicate a process of cross-end invocation of a camera service on a mobile phone side from a desktop computer side for shooting shown in FIG. 4A and FIG. 4B, and FIG. 4C to FIG. 4F.

According to this implementation, the second electronic device may invoke, across ends, a camera service on the first electronic device for shooting, to collect an image or a video. Then, the first electronic device displays the second icon and sends the second icon to the second electronic device.

It may be understood that when the first electronic device is locked, the first electronic device does not need to be unlocked, and the second electronic device may invoke the camera service for shooting.

It may be understood that the first electronic device may send only the second icon to the second electronic device, and when receiving the second icon, the second electronic device adds the second corner mark for marking.

With reference to the first aspect, in a possible implementation, the invokable service options further include an audio recording option, and the method further includes:
in the second electronic device, in response to a seventh operation on the audio recording option, sending, by the second electronic device, a third instruction to the first electronic device, where the third instruction instructs to start a Recorder application of the first electronic device;
starting, by the first electronic device, the Recorder application, and displaying an audio recording interface after receiving the third instruction; and
in the second electronic device, switching from the first card to the multi-screen collaboration interface, where the multi-screen collaboration interface is displayed in the second interface in a floating manner, and the multi-screen collaboration interface includes the audio recording interface corresponding to the first electronic device.

With reference to the first aspect, in a possible implementation starting, by the first electronic device, the Recorder application, and displaying the audio recording interface after receiving the third instruction includes:
displaying, by the first electronic device, a lock screen; and
in the first electronic device, in response to an unlock operation on the lock screen, starting the Recorder application and displaying the audio recording interface; and
that in the second electronic device, the multi-screen collaboration interface includes the audio recording interface corresponding to the first electronic device includes:
   when the first electronic device displays the lock screen, the multi-screen collaboration interface in the second electronic device displays a lock screen prompt interface, where the lock screen prompt interface is used to prompt that the first electronic device is locked; and
   when the first electronic device starts the Recorder application and displays the audio recording interface, in the second electronic device, switching from the lock screen prompt interface included in the multi-screen collaboration interface to the audio recording interface corresponding to the first electronic device.

With reference to the first aspect, in a possible implementation, the audio recording interface includes an audio recording control, and the method further includes:
in the second electronic device, in response to an eighth operation on the audio recording control included in the multi-screen collaboration interface, sending a fourth instruction to the first electronic device, where the fourth instruction instructs to perform audio recording;
after receiving the fourth instruction, performing, by the first electronic device, audio recording, and collecting a recorded third element into the target application of the first electronic device, where
after the third element is collected, the floating-representation icon of the first electronic device includes a third icon indicating the third element; and
sending, by the first electronic device, the third icon and a third corner mark to the second electronic device, where the third corner mark indicates that the third element is from an electronic device other than the second electronic device.

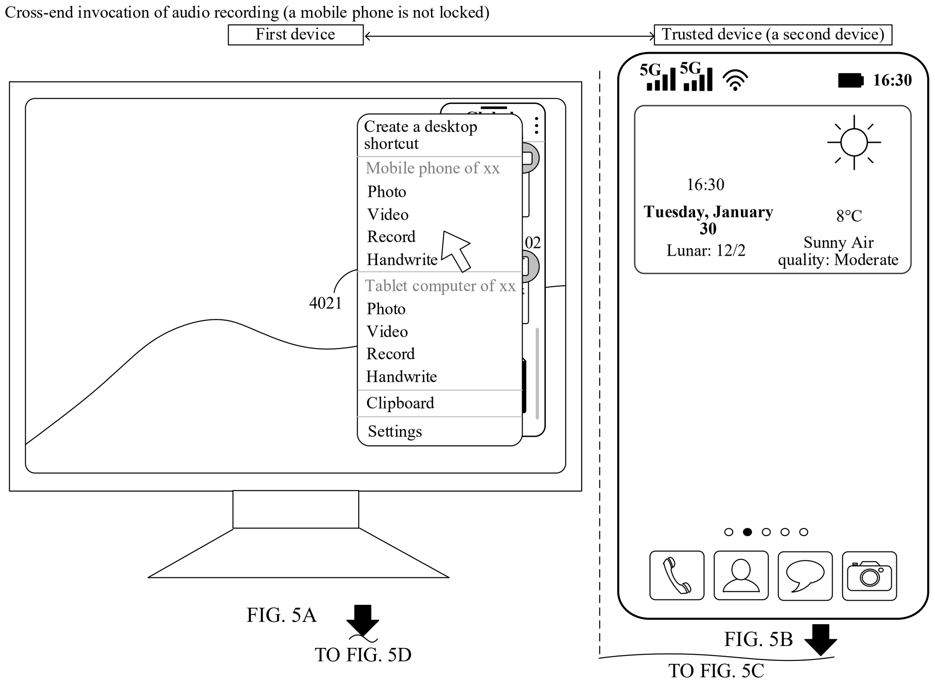

In some embodiments of this application, the second electronic device triggers the audio recording option across ends, and invokes a recording function on the first electronic device to collect the third element. The third element is audio. The process may indicate a process of cross-end invocation of an audio service on the mobile phone side from the desktop computer side for recording shown in FIG. 5A to FIG. 5H.

According to this implementation, the second electronic device may invoke, across ends, an audio service on the first electronic device for recording, to collect audio. Then, the first electronic device displays the third icon and sends the third icon to the second electronic device.

It may be understood that when the first electronic device is locked, the first electronic device needs to be unlocked. The second electronic device can invoke the audio service for recording only after the first electronic device is unlocked.

It may be understood that the first electronic device may send only the third icon to the second electronic device, and when receiving the third icon, the second electronic device adds the third corner mark for marking.

With reference to the first aspect, in a possible implementation, the invokable service information further includes a handwriting option, and the method further includes:
in the second electronic device, in response to a ninth operation on the handwriting option, sending, by the second electronic device, a fifth instruction to the first electronic device, where the fifth instruction instructs to start a Notes application of the first electronic device;
starting, by the first electronic device, the Notes application and displaying a handwriting input interface after receiving the fifth instruction; and
in the second electronic device, switching from the first card to the multi-screen collaboration interface, where the multi-screen collaboration interface is displayed in the second interface in a floating manner, and the multi-screen collaboration interface includes the handwriting input interface corresponding to the first electronic device.

With reference to the first aspect, in a possible implementation, starting, by the first electronic device, the Notes application, and displaying the handwriting input interface after receiving the fifth instruction includes:
displaying, by the first electronic device, a lock screen; and
in the first electronic device, in response to an unlock operation on the lock screen, starting, by the first electronic device, the Notes application and displaying the handwriting input interface; and
that in the second electronic device, the multi-screen collaboration interface includes the handwriting input interface corresponding to the first electronic device includes:
   when the first electronic device displays the lock screen, the multi-screen collaboration interface in the second electronic device displays a lock screen prompt interface, where the lock screen prompt interface is used to prompt that the first electronic device is locked; and
   when the first electronic device starts the Notes application and displays the handwriting input interface, in the second electronic device, switching from the lock screen prompt interface included in the multi-screen collaboration interface to the handwriting input interface corresponding to the first electronic device.

With reference to the first aspect, in a possible implementation, the handwriting input interface includes a handwriting input area and a complete control, and the method further includes:
in the second electronic device, in response to an input operation on the handwriting input area included in the multi-screen collaboration interface, sending handwritten input content to the first electronic device;
in response to a tenth operation on the complete control, sending a sixth instruction to the first electronic device, where the sixth instruction instructs to complete a handwriting input;
after receiving the sixth instruction, collecting, by the first electronic device, a fourth element obtained based on the received handwritten input content into the target application of the first electronic device, where
after the fourth element is collected, the floating-representation icon of the first electronic device includes a fourth icon indicating the fourth element; and
sending, by the first electronic device, the fourth icon and a fourth corner mark to the second electronic device, where the fourth corner mark indicates that the fourth element is from an electronic device other than the second electronic device.

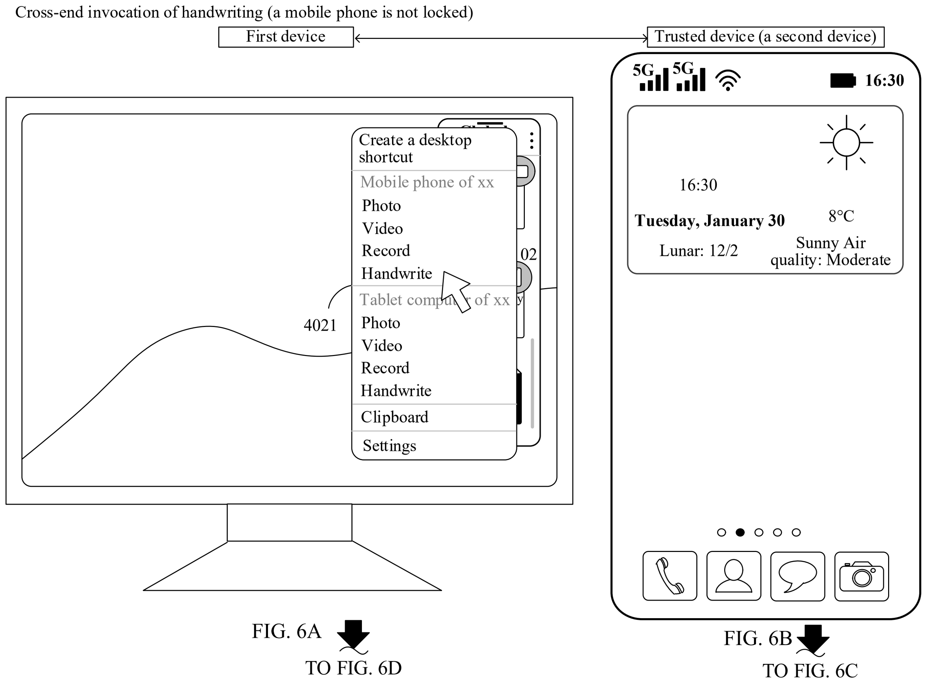

In some embodiments of this application, the second electronic device triggers the handwriting option across ends, and invokes a handwriting function on the first electronic device to collect a fourth element. The fourth element is a note. The process may indicate a process of cross-end invocation of a handwriting input service on the mobile phone side from the desktop computer side for handwriting shown in FIG. 6A to FIG. 6D.

According to this implementation, the second electronic device may invoke, across ends, a handwriting input service on the first electronic device for handwriting, to collect a note. Then, the first electronic device displays the fourth icon and sends the fourth icon to the second electronic device.

It may be understood that when the first electronic device is locked, the first electronic device needs to be unlocked. The second electronic device can invoke the handwriting input service for recording only after the first electronic device is unlocked.

It may be understood that the first electronic device may send only the fourth icon to the second electronic device, and when receiving the fourth icon, the second electronic device adds the fourth corner mark for marking.

With reference to the first aspect, in a possible implementation, the multi-screen collaboration interface further includes an exit control, and the method further includes:
in the second electronic device, in response to an eleventh operation on the exit control, closing the multi-screen collaboration interface, and switching to the floating-representation icon, where the floating-representation icon is displayed in the second interface in a floating manner, where
the floating-representation icon of the second electronic device includes the second icon and the second corner mark, or includes the third icon and the third corner mark, or includes the fourth icon and the fourth corner mark.

After the second electronic device exits the multi-screen collaboration interface, the second icon and the second corner mark, the third icon and the third corner mark, and the fourth icon and the fourth corner mark may be displayed on the second electronic device. Device sources of the elements are distinguished by using the corner marks.

With reference to the first aspect, in a possible implementation, the method further includes:
before the first element is collected, displaying, by the second electronic device, the second interface, where the second interface includes a sidebar displayed in a floating manner, and the sidebar includes an application icon corresponding to the target application;
after the first element is collected, detecting, by the second electronic device, a twelfth operation on the application icon;
in the second electronic device, in response to the twelfth operation, starting the target application, and switching from the sidebar to the floating-representation icon, where the floating-representation icon is displayed in the second interface in a floating manner, and the floating-representation icon includes the first icon and the first corner mark, where
when the second electronic device starts the target application for the first time, the floating-representation icon further includes a prompt card, and the prompt card is used to prompt that the first element is from an electronic device other than the second electronic device; and
in the second electronic device, in response to a thirteenth operation on a top bar control included in the floating-representation icon, switching from the floating-representation icon to the hidden-representation icon, where the hidden-representation icon is displayed in the second interface in a floating manner.

It may be understood that before the first electronic device collects the first element, the target application on the second electronic device may not be started. In this case, the second electronic device may display the sidebar, and the sidebar includes the application icon of the target application.

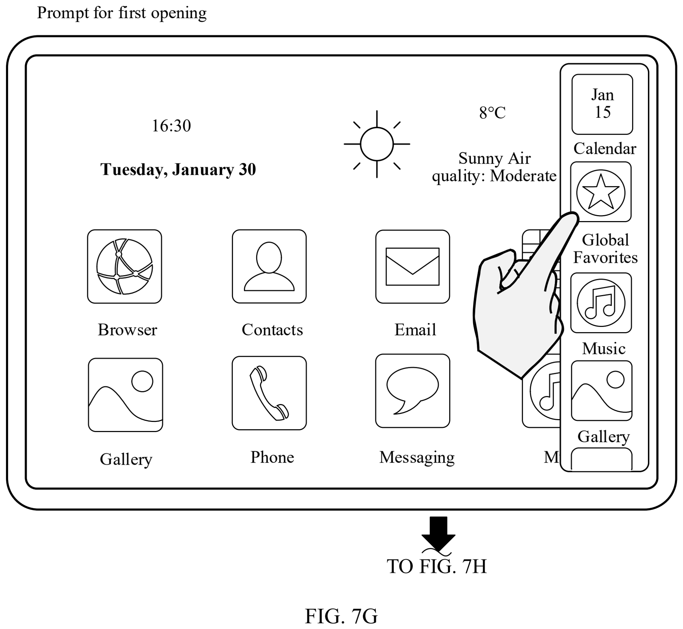

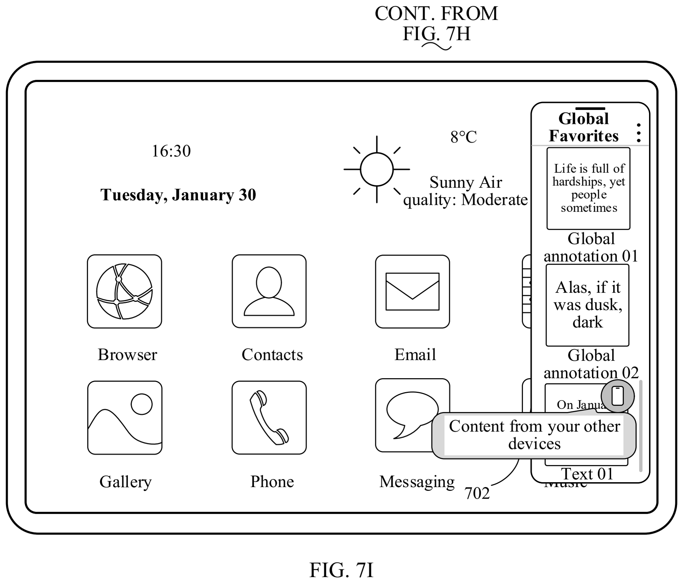

In some embodiments of this application, a process in which the first electronic device collects the first element, the second electronic device starts the target application for the first time, and views the first icon from the first electronic device may indicate a process shown in FIG. 7G to FIG. 7I.

According to this implementation, a prompt card may prompt a user to learn an icon synchronization method when the target application on the second electronic device is started for the first time.

With reference to the first aspect, in a possible implementation, the method further includes:
displaying, by the second electronic device, a third interface, where the third interface includes the floating-representation icon displayed in a floating manner, and the floating-representation icon includes the first icon, the first corner mark, the second icon, and the second corner mark;
in the second electronic device, in response to a fourteenth operation, switching from the first icon and the second icon to a first group icon after the first icon is moved to a position of the second icon or after the second icon is moved to a position of the first icon; and
in the first electronic device, synchronously switching from the first icon and the second icon to the first group icon.

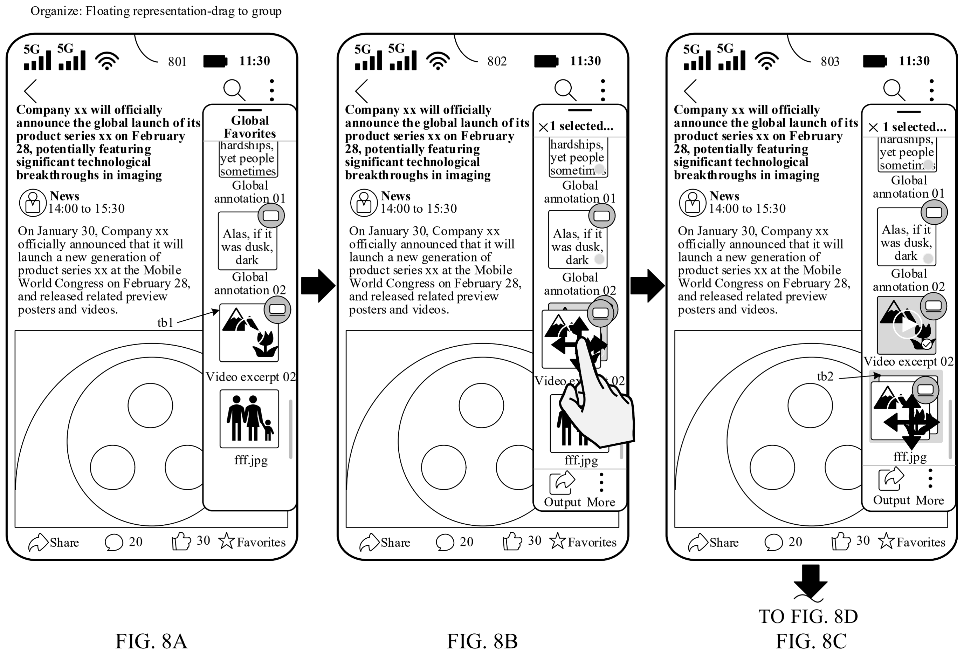

In some embodiments of this application, the fourteenth operation may be a drag operation, and the process of switching from the first icon and the second icon to the first group icon may indicate a drag-to-group process shown in FIG. 8A to FIG. 8F.

According to this implementation, a plurality of elements may be dragged to form a group, and a grouping result may be synchronized to another device.

With reference to the first aspect, in a possible implementation, the method further includes:
displaying, by the second electronic device, a fourth interface, where the fourth interface includes the floating-representation icon displayed in a floating manner, and the floating-representation icon includes the first icon, the first corner mark, the second icon, and the second corner mark;
in the second electronic device, in response to a fifteenth operation, moving a position of the first icon or the second icon in the floating-representation icon; and
in the first electronic device, synchronously moving a position of the first icon or the second icon.

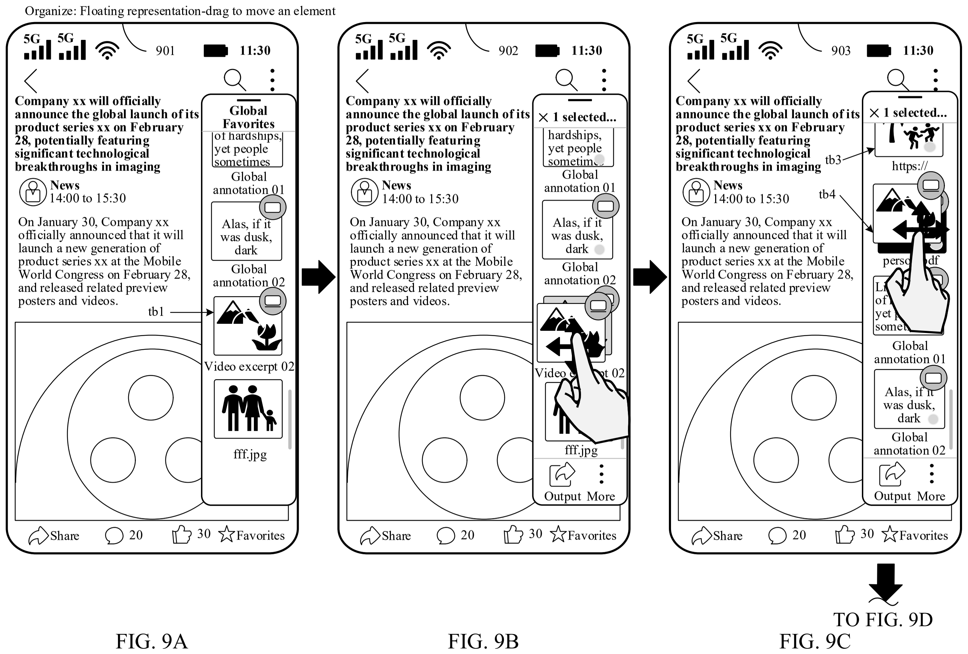

In some embodiments of this application, the fifteenth operation may be a drag operation, and a moving process of the first icon or the second icon may indicate a moving process shown in FIG. 9A to FIG. 9E.

According to this implementation, a position of each icon may be moved, and a moving result may be synchronized to another device.

With reference to the first aspect, in a possible implementation, the method further includes:
displaying, by the second electronic device, a full-screen interface corresponding to the target application, where the first icon included in the full-screen representation interface is in an icon-selected state, and the full-screen representation interface further includes a rename control;
in the second electronic device, in response to a sixteenth operation on the rename control, displaying a fifth interface, where the fifth interface includes an input field;
in the second electronic device, in response to an input operation on the input field, naming the first icon as a target name, where
in the second electronic device, after the naming, the full-screen representation interface includes the first icon named as the target name; and
in the first electronic device, synchronously naming the first icon as the target name.

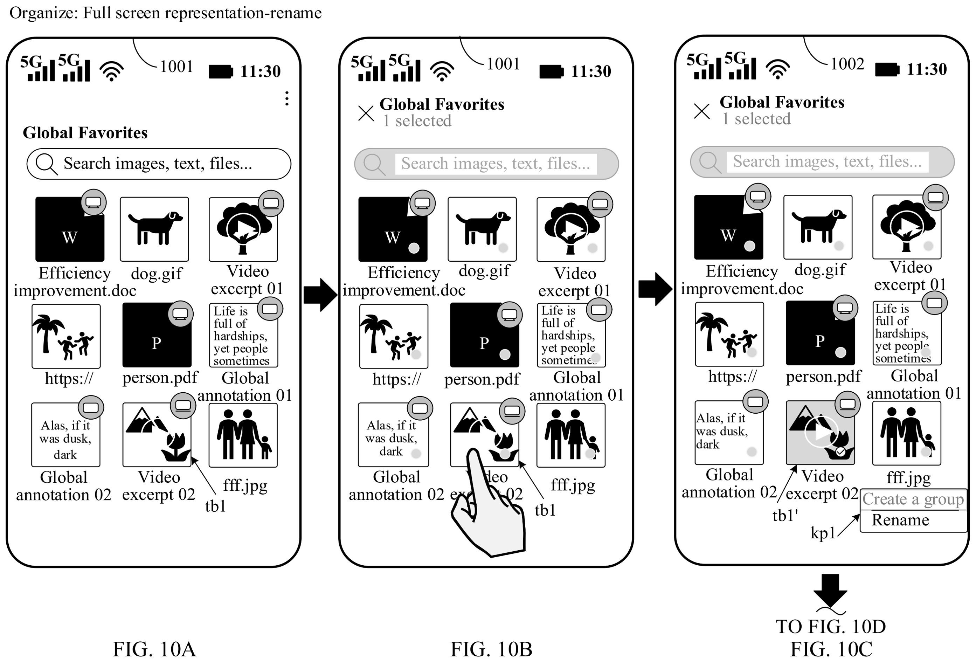

In some embodiments of this application, the sixteenth operation may be a click operation, and a renaming process for the first icon may indicate a renaming process shown in FIG. 10A to FIG. 10H.

According to this implementation, each icon may be renamed, and a naming result may be synchronized to another device.

With reference to the first aspect, in a possible implementation, the method further includes:
displaying, by the second electronic device, a full-screen interface, where the first icon and the second icon in the full-screen representation interface are in an icon-selected state, and the full-screen representation interface further includes a delete control;
in the second electronic device, in response to a seventeenth operation on the delete control, deleting the first element and the second element, where
in the second electronic device, after the deletion, the full-screen representation interface does not include the first icon and the second icon; and
in the first electronic device, synchronously deleting the first element and the second element, where the first icon and the second icon are not included after the deletion.

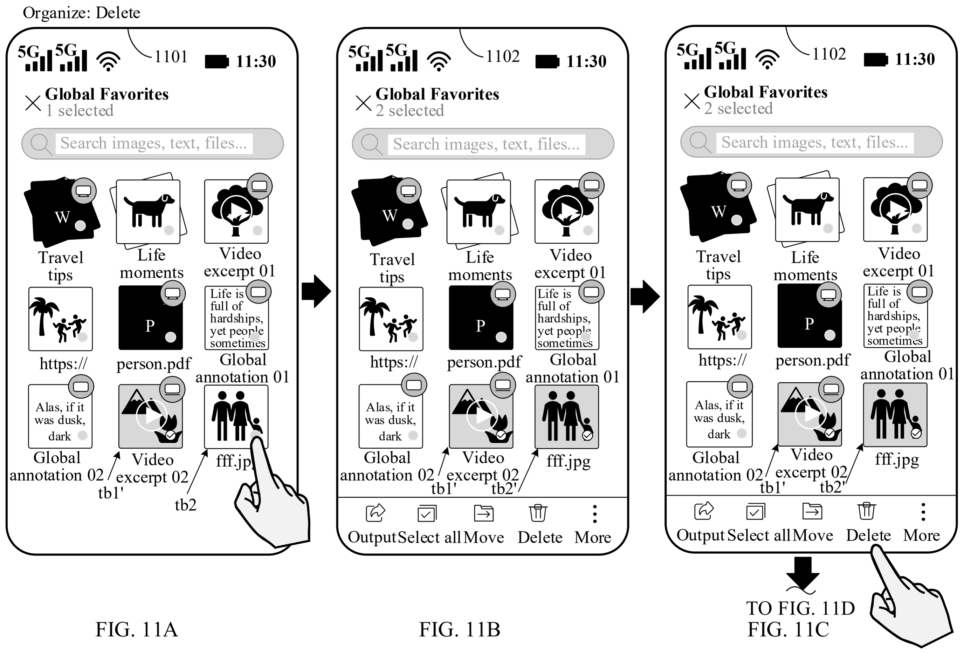

In some embodiments of this application, the seventeenth operation may be a click operation, and a process of deleting the first icon and the second icon may indicate a deletion process shown in FIG. 11A to FIG. 11F.

According to this implementation, a plurality of icons may be deleted, and a deletion result may be synchronized to another device.

It may be understood that deletion means deleting both an icon and an element corresponding to the icon.

With reference to the first aspect, in a possible implementation, after the floating-representation icon includes the first icon indicating the first element and the first corner mark, the method further includes:
in the second electronic device, in response to an interface switching operation on the second electronic device, displaying, by the second electronic device, a sixth interface, where the floating-representation icon is displayed in the sixth interface in a floating manner; and
in the second electronic device, in response to an eighteenth operation on the first icon, downloading, by the second electronic device, the first element indicated by the first icon and displaying a seventh interface, where the seventh interface includes the first element, the floating-representation icon is displayed in the seventh interface in a floating manner, and the floating-representation icon does not include the first icon or the first corner mark.

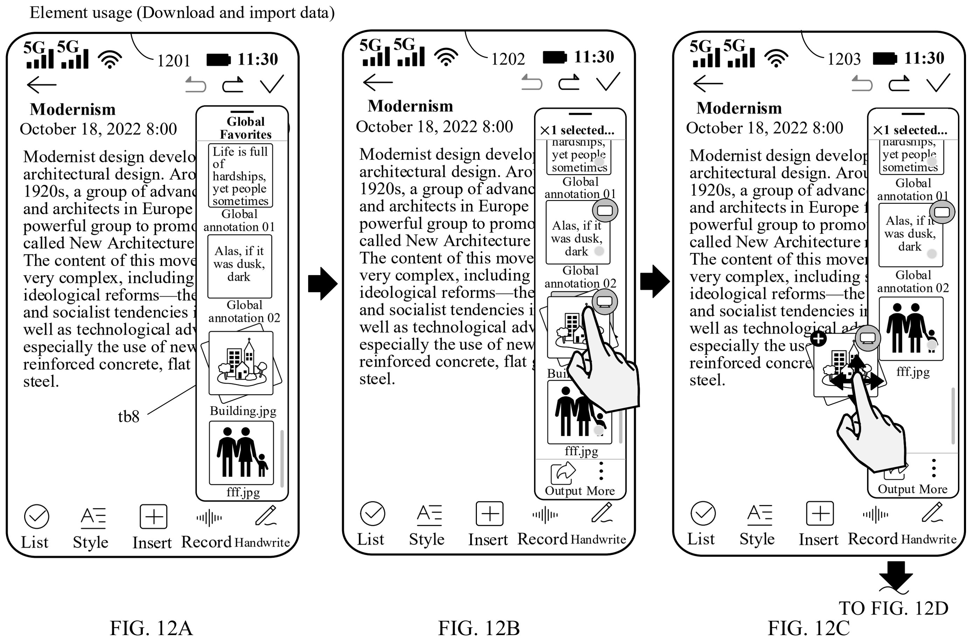

In some embodiments of this application, the eighteenth operation may be a drag operation, and a process of downloading and using the first element may indicate a process shown in FIG. 12A to FIG. 12F.

According to this implementation, the first icon is dragged to an application interface, the first element corresponding to the first icon may be downloaded and used, and after use, the second electronic device does not include the first icon and the first corner mark. The result may be synchronized to another device.

With reference to the first aspect, in a possible implementation, the method further includes:
displaying, by the second electronic device, a full-screen interface, where the first icon and a fifth icon in the full-screen representation interface are in an icon-selected state, and the full-screen representation interface further includes a share control; and the fifth icon indicates a fifth element collected by using the target application in the second electronic device;
in the second electronic device, in response to a nineteenth operation on the share control, displaying a second card, where the second card includes a plurality of options indicating different formats, different devices, different applications, saving, and printing; and
in the second electronic device, in response to a twentieth operation on the second card, sharing the first element and the fifth element based on the selected option.

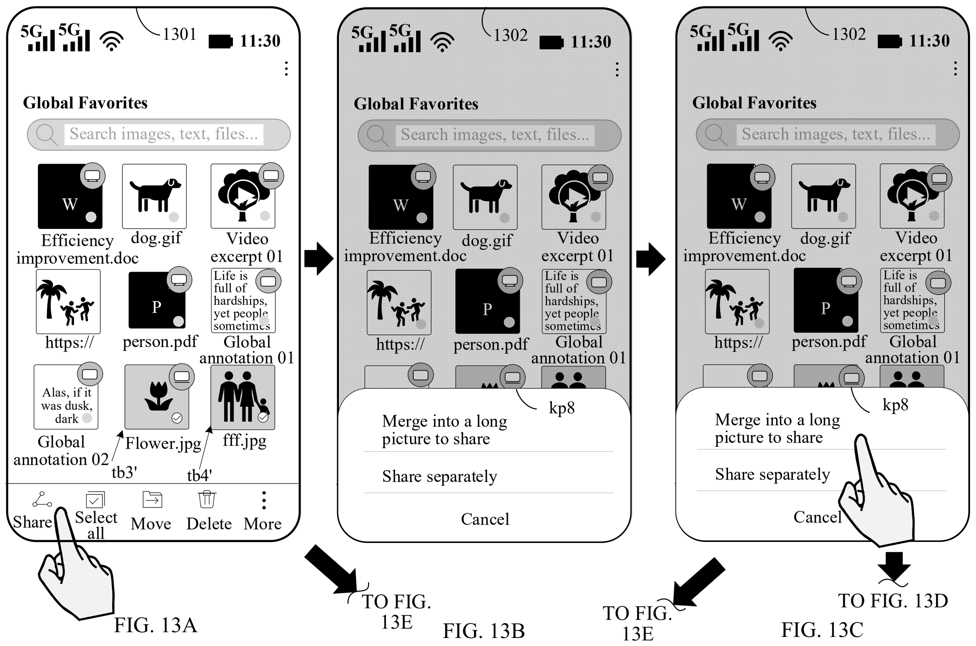

In some embodiments of this application, the sharing process may indicate an element sharing process shown in FIG. 13A to FIG. 13E.

According to this implementation, different types of sharing can be performed based on options on the second card.

With reference to the first aspect, in a possible implementation, after the response to the nineteenth operation on the share control, before a third card is displayed, the method further includes:
displaying a third card, where the third card includes a merge option; and
in response to a twenty-first operation on the merge option, merging the first element and the fifth element; and
sharing the first element and the fifth element based on the selected option includes:
sharing the merged first element and fifth element based on the selected option.

In some embodiments of this application, the sharing process may indicate an element sharing process shown in FIG. 13A to FIG. 13E.

According to this implementation, the elements may be first merged and then shared.

With reference to the first aspect, in a possible implementation, the method further includes:
in the second electronic device, in response to a twenty-second operation on the first icon, downloading and displaying the first element.

In some embodiments of this application, a full-screen preview interface corresponding to the first element may be downloaded and displayed, or the first element may be downloaded and displayed in a manner of a floating window. A process of triggering display of another element is similar, and details are not described herein again.

With reference to the first aspect, in a possible implementation, in the first electronic device, switching from the collection-representation icon to the hidden-representation icon includes:
switching from the collection-representation icon to a feedback-representation icon corresponding to the target application, where the feedback-representation icon is used to prompt that collection succeeds; and
switching from the feedback-representation icon to the hidden-representation icon.

According to this implementation, a collection status can be fed back in real time, to improve user experience.

With reference to the first aspect, in a possible implementation, types of the first element include at least: text, figure, image, audio, or table; and the first stage of the first operation is a touch and hold operation, and the second stage of the first operation is drag or throw.

According to this implementation, different types of elements may be collected based on a same operation manner, to reduce learning difficulty of a user.

With reference to the first aspect, in a possible implementation, the hidden-representation icon is in a translucent semi-circular shape, and the collection-representation icon is in a shape of a capsule or a window.

This implementation can avoid interference to sight of the user and interference to operations of the user.

With reference to the first aspect, in a possible implementation, the first corner mark, the second corner mark, the third corner mark, and the fourth corner mark are the same.

This implementation can simplify display effect, and distinguish only whether the local device is from the local device.

According to a second aspect, this application provides an electronic device. The electronic device includes: one or more processors and a memory. The memory is coupled to the one or more processors, the memory is configured to store computer program code, the computer program code includes computer instructions, and the one or more processors invoke the computer instructions to enable the electronic device to perform the method performed by the first electronic device or the second electronic device in the first aspect or any implementation of the first aspect.

According to a third aspect, this application provides a cross-end interaction system. The cross-end interaction system includes a first electronic device and a second electronic device, and the first electronic device and the second electronic device perform the method according to the first aspect or any implementation of the first aspect.

According to a fourth aspect, this application provides a computer-readable storage medium. The computer-readable storage medium stores a computer program. When the computer program is run by an electronic device, the electronic device is enabled to perform the method according to the first aspect or any implementation of the first aspect.

According to a fifth aspect, an embodiment of this application provides a chip system. The chip system may be used in an electronic device, the chip system includes one or more processors, and the processor is configured to invoke computer instructions, so that the electronic device performs the method according to the first aspect or any implementation of the first aspect.

According to a sixth aspect, an embodiment of this application provides a computer program product including instructions. When the computer program product runs on an electronic device, the electronic device is enabled to perform the method according to the first aspect or any implementation of the first aspect.

It may be understood that the electronic device in the fourth aspect, the fifth aspect, and the sixth aspect may indicate the electronic device provided in the second aspect, that is, may indicate the first electronic device or the second electronic device in the first aspect.

It may be understood that the electronic device provided in the second aspect, the cross-end interaction system provided in the third aspect, the computer storage medium provided in the fourth aspect, the chip system provided in the fifth aspect, and the computer program product provided in the sixth aspect are all configured to perform the method according to the first aspect and any possible implementation of the first aspect. Therefore, for beneficial effects that can be achieved by the electronic device, the cross-end interaction system, the computer storage medium, the chip system, and the computer program product, refer to the beneficial effects in any possible implementation of the first aspect. Details are not described herein again.

### BRIEF DESCRIPTION OF DRAWINGS

FIG. 1 is a diagram of a plurality of devices in a same trust ring;
FIG. 2A(1) to FIG. 2A(3) to FIG. 2I are diagrams of various representations of a Global Favorites application;
FIG. 3A to FIG. 3H are a group of example user interfaces related to collecting and viewing text at a local end;
FIG. 3I and FIG. 3J are a group of example user interfaces related to viewing synchronized text on a trusted device;
FIG. 4A and FIG. 4B are a group of example user interfaces related to an entry for cross-end invocation of a related service on a trusted device;
FIG. 4C to FIG. 4F are a group of example user interfaces related to cross-end invocation of a camera service on a trusted device;
FIG. 4G and FIG. 4H are a group of example user interfaces related to exiting of cross-end invocation of a related service on a trusted device;
FIG. 4I is a diagram of downloading a synchronized element;
FIG. 5A to FIG. 5D are a group of example user interfaces related to cross-end invocation of an audio service on a trusted device;
FIG. 5E to FIG. 5H are another group of example user interfaces related to cross-end invocation of an audio service on a trusted device;
FIG. 6A to FIG. 6D are a group of example user interfaces related to cross-end invocation of a handwriting service on a trusted device;
FIG. 7A to FIG. 7I are a group of example user interfaces related to successfully collecting a notification across ends for the first time;
FIG. 8A to FIG. 8F are a group of example user interfaces related to dragging to group in a floating representation;
FIG. 9A to FIG. 9E are another group of example user interfaces related to dragging to move in a floating representation;
FIG. 10A to FIG. 10H are still another group of example user interfaces related to element renaming in a full-screen representation;
FIG. 11A to FIG. 11F are a group of example user interfaces related to element deletion in a full-screen representation;
FIG. 12A to FIG. 12F are a group of example user interfaces related to element use;
FIG. 13A to FIG. 13E are a group of example user interfaces related to element sharing in a full-screen representation;
FIG. 14 is an example flowchart of a cross-end interaction method according to an embodiment of this application;
FIG. 15 is a diagram of a hardware structure of an electronic device according to an embodiment of this application; and
FIG. 16 is a diagram of a software structure of an electronic device according to an embodiment of this application.

### DESCRIPTION OF EMBODIMENTS

The following clearly and completely describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and indicates that three relationships may exist. For example, A and/or B may represent the following three cases: Only A exists, both A and B exist, and only B exists. In addition, in the descriptions of embodiments of this application, "a plurality of" means two or more.

It should be understood that the terms "first", "second", and the like in the specification, claims, and accompanying drawings of this application are used to distinguish between different objects, and are not used to describe a specific sequence. In addition, the terms "include", "have", and any variant thereof are intended to cover a non-exclusive inclusion. For example, a process, method, system, product, or device that includes a series of steps or units is not limited to the listed steps or units; and instead, further optionally includes a step or unit that is not listed, or further optionally includes another step or unit that is intrinsic to the process, method, product, or device.

An "embodiment" in this application means that specific features, structures, or characteristics described with reference to this embodiment may be included in at least one embodiment of this application. The phrase appearing in various positions in the specification may not necessarily refer to a same embodiment, and is not an independent or optional embodiment exclusive from another embodiment. It is explicitly or implicitly understood by a person skilled in the art that embodiments described in this application may be combined with another embodiment.

For ease of understanding, terms in embodiments of this application are first described.
1. An element may include information of various types such as text, figure, image, video, file, audio, web page, and table in this application. The image may be a static image or a dynamic image, and the file may be in various formats such as PDF, word, and excel. This is not limited in this application.
2. An annotation (or referred to as graffiti) is content drawn by a user on a display by using a stylus tip or a fingertip in this application. Information included in annotation content may include a start position, an end position, and the like during the annotation. The start position is a position in which a user touches and presses a display for annotation. The end position is a position in which the user lifts a finger or stylus from the display after the annotation.
3. A trust ring and a trusted device in this application mean that a plurality of electronic devices undergo trusted authentication and access a same local area network or are directly connected (for example, a Wi-Fi direct connection or a Bluetooth connection is established), and have a capability of communicating with each other. That is, these electronic devices form the trust ring. The electronic devices in the trust ring may be cooperatively managed and share resources. In this application, the electronic device in the trust ring is capable of cross-end service invocation to implement functions such as element collection, element synchronization, element organization, and synchronization of an organization result.

Trusted authentication may be performed between the electronic devices by using any one of the following methods, to establish a trusted relationship and form the trust ring: (1) Two or more electronic devices log in to a same account, and the electronic devices with the same account perform trusted authentication by using the account, to establish a trusted relationship and form a trust ring. (2) Two or more electronic devices perform trusted authentication by using a private protocol, to establish a trusted relationship and form a trust ring. (3) Two or more electronic devices perform trusted authentication by logging in to a cloud, to establish a trusted relationship and form a trust ring. The foregoing methods are merely examples and this is not limited in this application.

It may be understood that in this application, the electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (for example, a smart watch, and a smart band), a vehicle-mounted device, a smart home device (for example, a smart TV and a large screen), and/or a smart city device. A specific type of the electronic device is not specifically limited in embodiments of this application.

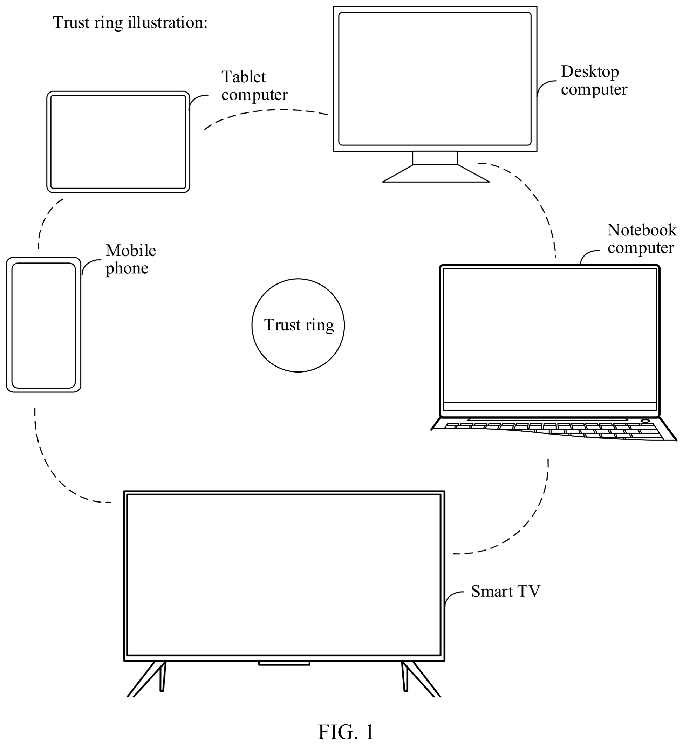

For example, as shown in FIG. 1, devices such as a mobile phone, a tablet computer, a desktop computer, a notebook computer, and a smart TV may log in to a same account and access a same local area network, to form a trust ring. A current task of the mobile phone can be continued on a collaborative device in the trust ring. For example, a video on the mobile phone can continue to be watched on a smart screen, or a file on the mobile phone can be easily browsed and edited on a computer.

A terminal device in the trust ring may be referred to as a trusted device of another device. That is, terminal devices in a trusted relationship that undergo trusted authentication are referred to as trusted devices. For example, a mobile phone and a tablet computer in a same trust ring may be referred to as trusted devices of each other. That is, the tablet computer is a trusted device of the mobile phone, and the mobile phone is also a trusted device of the tablet computer.

The above is a brief introduction to the terms in embodiments of this application, and details are not described in the following.

The electronic device may support collecting different types of elements in different forms, and may also support organizing and sharing the collected elements. In this way, a user can collect an element, organize an element, and share an element by using the electronic device.

However, during actual processing, in an example of a file management application in the mobile phone, the file management application can only be used to collect elements such as picture, video, audio, and file, and types of the elements are limited and collection forms are correspondingly limited. The elements in the file management application are usually classified according to names, time, sizes, or types of the elements, and an organization manner is conventional and simple. Correspondingly, it is inconvenient for a user to search for a required element in the elements. In an example of a Notes application in the mobile phone, in addition to collecting text, pictures, videos, audio, and the like, the Notes application may be further used to collect a web page obtained from a news application, an annotation obtained from a reading application, and the like. A web page may be added to the Notes application by three-finger swiping down. Annotation content may be added to the Notes application when a save instruction of the user is received.

In the foregoing two examples, although the Notes application can collect slightly more types of elements than the file management application, in a process of organizing notes, if a plurality of types of elements need to be organized into one note, the user needs to frequently switch between different applications in a collection process, and elements in different applications also need to be collected in different collection manners. Learning costs are high and collection efficiency is low for the user. The elements collected by different electronic devices are also isolated from each other, resulting in cumbersome transfer. It is very inconvenient when the user needs to use different elements across a plurality of electronic devices.

In view of this, an embodiment of this application provides a cross-end interaction method. The cross-end interaction method may be used to implement cross-end collection of elements from different sources, elements of different types, and for a plurality of times, to shorten a collection path of the user, unify a collection manner, and improve collection efficiency. In addition, the collected elements may be further quickly classified based on a personal requirement of the user, and secondary organization, sharing, multi-end synchronization and invoking, and the like may be performed.

In addition, all the related technologies provide independent organization tools, which are not closed-loop in scenarios. Compared with the existing technology, this application provides a closed-loop tool that can connect scenarios, has simple operations, low learning costs, and can further satisfy a personal use requirement and habit of the user, to improve user experience.

It should be understood that the element in this application includes, but is not limited to, text, figure, image, video, audio, web page, table, or the like. Element collection in this application may include obtaining an element, and processing the obtained element and using a result obtained after the processing as collected content. For example, element collection may include: converting an obtained audio element into a text element, converting an obtained text element into an audio element, and editing or marking input text or picture. Element organization may include: grouping, moving, renaming, and deleting elements of different types. Element sharing may include: sharing or printing content in different formats, or sharing the content to a third-party application.

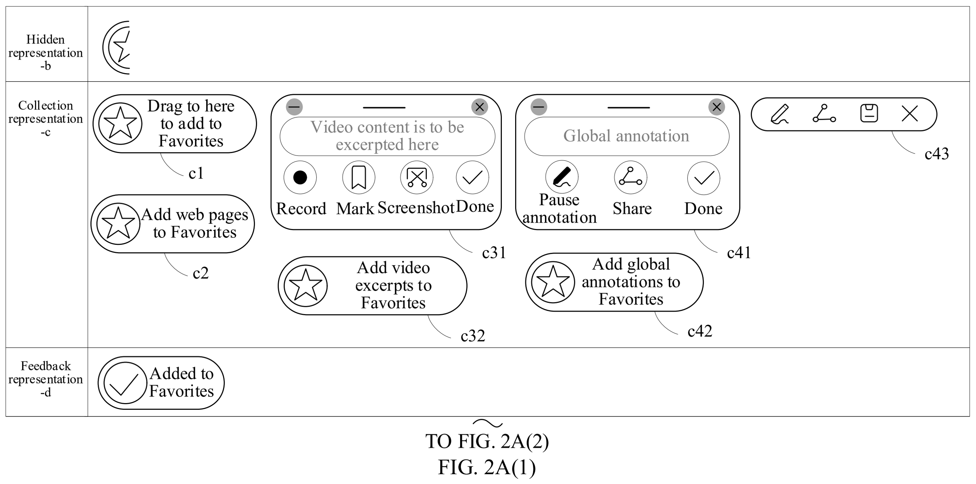

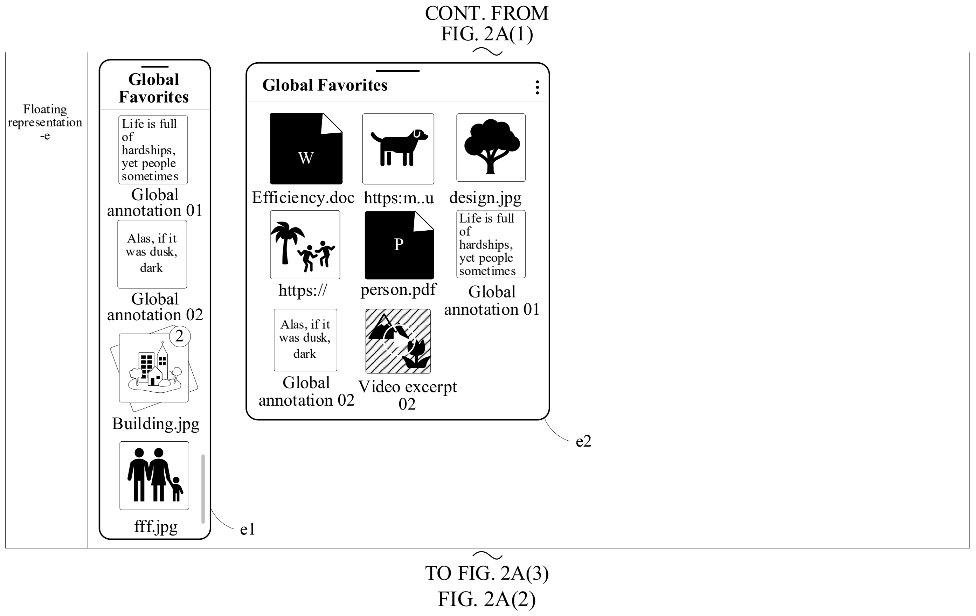

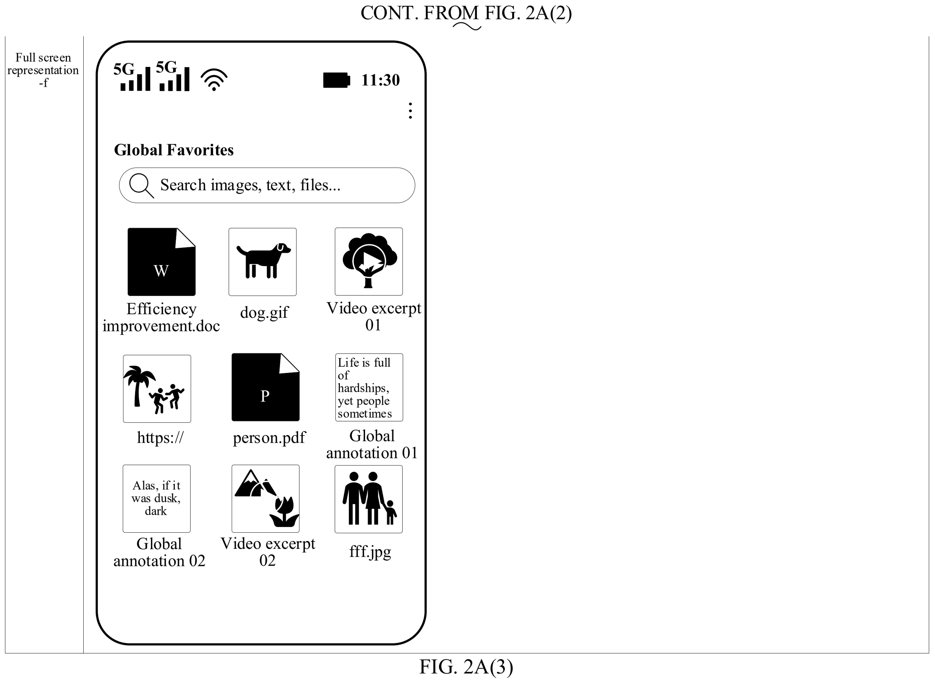

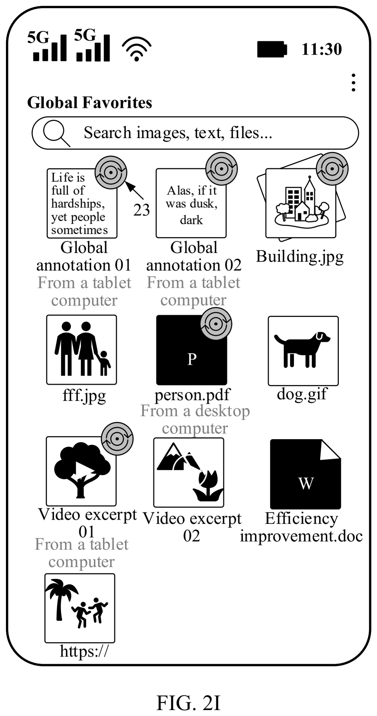

**The following first describes a Global Favorites mode and a plurality of representations of the Global Favorites mode provided in this application with reference to** FIG. 2A(1) to FIG. 2A(3) to FIG. 2I**.**

Global Favorites is a management application APP, and may perform functions such as element collection, organization, and sharing. That is, a user may implement requirements of element collection, element organization, and element sharing by using the Global Favorites application. Further, the Global Favorites application may be built into a personal learning space, working space, and the like. A data retention rule in Global Favorites is permanent retention.

In a process in which the user uses Global Favorites, a plurality of representations may be presented, to indicate that the electronic device is in different processing stages or is performing different processing. For example, the representations in Global Favorites may include a hidden representation (also referred to as a hidden-representation icon), a collection representation (also referred to as a collection-representation icon), a feedback representation (also referred to as a feedback-representation icon), a floating representation (also referred to as a floating-representation icon), and a full-screen representation (also referred to as a full-screen representation interface). Herein, the names are provided merely as examples. For example, the hidden representation may also be referred to as a minimized representation, and the floating representation may also be referred to as a distribution representation. This is not limited in this application. Each representation of Global Favorites may further include one or more styles, and the styles may be switched between each other in response to triggering by the user. FIG. 2A(1) to FIG. 2A(3) show an example of Global Favorites in different representations according to an embodiment of this application.

The hidden representation of Global Favorites indicates that Global Favorites has been invoked in the foreground or run in the background. The collection representation indicates a position of an element collection entry or indicates that Global Favorites is in an element collection process. The feedback representation indicates a feedback provided for a user during element collection, to inform the user whether the collection succeeds. The floating representation is used to display, in some areas in a current display interface, an element that has been collected into Global Favorites. The full-screen representation is used to display, in an entire display area, an element that has been collected into Global Favorites. It may be understood that the floating representation is equivalent to a presentation window of the Global Favorites application, and the full-screen representation is equivalent to a main interface of the Global Favorites application. The floating representation and the full-screen representation may support the user in element organization.

Optionally, the hidden-representation icon of Global Favorites may be circular or semi-circular in shape, and may be in a non-transparent or translucent state. For example, when Global Favorites is in a hidden representation, the hidden-representation icon may be presented in a translucent and semi-circular effect attracted to an inner side of a screen edge, for example, a hidden-representation icon b shown in FIG. 2A(1) to FIG. 2A(3). In this case, when the icon b is located at the inner side of the screen edge, the icon b does not affect normal viewing of displayed content by the user, and the icon b in a translucent state does not visually attract attention of the user and therefore does not interfere with normal use by the user.

It should be noted that a position of the inner side of the screen edge described in this embodiment of this application may be specifically located on the top, bottom, left, or right of the inner side of the edge. This is not limited in this application.

Optionally, the collection-representation icon of Global Favorites may be switched to different styles based on different collection scenarios. For example, when an element such as text or image is collected, a style of the collection representation may be switched to a collection-representation icon c1 shown in FIG. 2A(1) to FIG. 2A(3). When web content is collected, a style of the collection representation may be switched to a collection-representation icon c2 shown in FIG. 2A(1) to FIG. 2A(3). When an extracted video is collected, a style of the collection representation may be switched to a collection-representation icon c31 and a collection-representation icon c32 shown in FIG. 2A(1) to FIG. 2A(3). When a global annotation is collected, a style of the collection representation may be switched to a collection-representation icon c41, a collection-representation icon c43, and a collection-representation icon c42 shown in FIG. 2A(1) to FIG. 2A(3). A style of the collection mode may be specifically set based on a type of a collected element. This is not limited in this application.

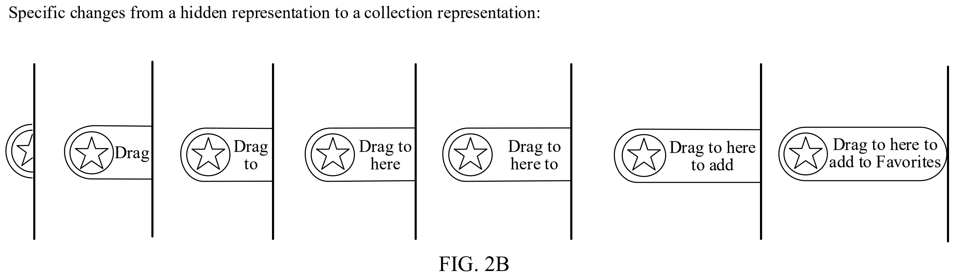

It should be noted that Global Favorites may be switched from the hidden representation to the collection representation, or otherwise, may be switched from the collection representation to the hidden representation. Different styles of the collection representation may also be switched. Optionally, the switching may be animation effect such as scrolling or scaling. For example, as shown in FIG. 2B, a hidden representation of Global Favorites may be switched from a leftmost icon to a rightmost collection representation through smooth extending animation effect. In an extending process, the hidden-representation icon b may be first switched to a circular shape, and then extends from the circular shape to a capsule shape, with the full text progressively revealed. This is merely an example, and is not limited in this this application.

Optionally, after the element is collected, Global Favorites may switch from the collection representation to the feedback representation. As shown in FIG. 2A(1) to FIG. 2A(3), the feedback representation may be consistent with styles of the collection-representation icons c1, c2, c32, c42, c43, and the like, and text "Added to Favorites" is displayed, to provide a textual indication that the current element has been successfully added to Favorites. Optionally, an icon in the feedback representation may be further switched to a check mark, to feed back, in a form of an animation, that the current element has been successfully added to Favorites.

Optionally, the floating representation of Global Favorites may move in a display area based on a drag operation of the user, and may also change in size based on a drag operation of the user. For example, the floating representation of Global Favorites may specifically include two styles. One style is a long strip, for example, a first floating representation e1 shown in FIG. 2A(1) to FIG. 2A(3). The other style is card-shaped, for example, a second floating representation e2 shown in FIG. 2A(1) to FIG. 2A(3). The first floating representation e1 in the long strip and the card-shaped second floating representation e2 correspond to different positions and sizes. The first floating representation e1 of Global Favorites may be presented in effect of being adsorbed to an inner side of an edge of a display during displaying, to avoid interference with currently displayed content. The second floating representation e2 of Global Favorites may be displayed in a central area of the display during displaying, to facilitate viewing by the user.

Optionally, in a possible implementation, in response to a drag operation on an edge of the first floating representation e1, the first floating representation e1 may be switched to the second floating representation e2. Otherwise, in response to a drag operation performed by the user on an edge of the second floating representation e2, the second floating representation e2 may also be switched to the first floating representation e1. In another possible implementation, in response to a two-finger spread swipe operation on the first floating representation e1, the first floating representation e1 may be switched to the second floating representation e2. Otherwise, in response to a two-finger pinch operation on the second floating representation e2, the second floating representation e2 may also be switched to the first floating representation e1. In addition, the first floating representation e1 may be display one or two columns of icons corresponding to elements, and may display an icon corresponding to a minimum of one element. The second floating representation e2 may display two or more columns of icons corresponding to elements, but a quantity of columns and a quantity of rows are smaller compared with those in the full-screen representation, and may be specifically set according to a requirement. This is not limited in this application.

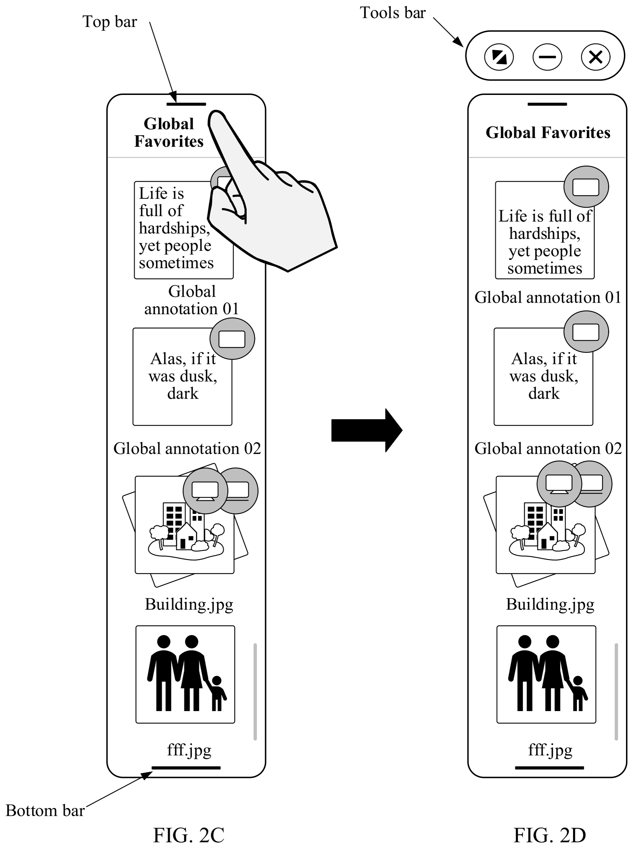

Optionally, the floating representation of Global Favorites may further include a top bar (top bar) control, and/or a bottom bar (bottom bar) control. In response to a tap operation on the top bar control, as shown in FIG. 2C, the first floating representation e1 may be switched to a floating-representation style with a tool bar shown in FIG. 2D. The tool bar in the style may include three controls: a zoom-in control, a zoom-out control, and a close control. The zoom-in control is used to trigger switching from the first floating representation e1 to the full-screen representation. The zoom-out control is used to trigger switching from the first floating representation e1 to the hidden representation b. The close control is used to trigger termination of Global Favorites.

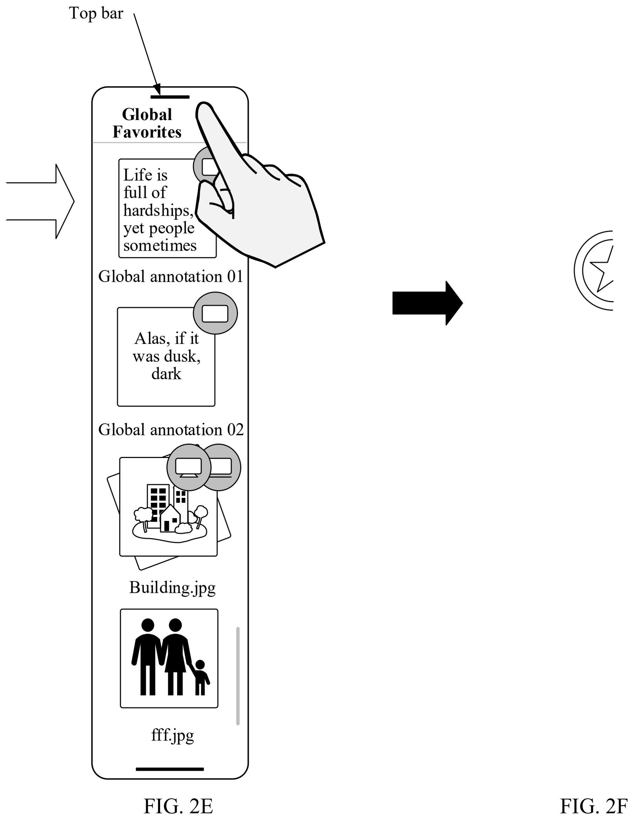

Optionally, as shown in FIG. 2E and FIG. 2F, in response to a slide operation on the top bar control of the first floating representation e1, Global Favorites may be switched from the first floating representation e1 to the hidden representation b. A direction of the slide operation may be leftward or rightward. FIG. 2E shows only sliding rightward.

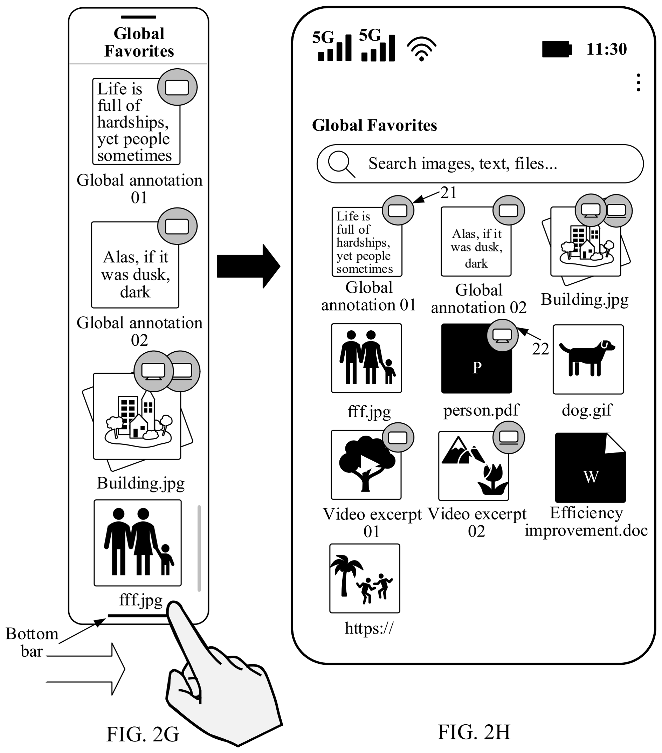

Optionally, as shown in FIG. 2G and FIG. 2H, in response to a slide operation on the bottom bar control of the first floating representation e1, Global Favorites may be switched from the first floating representation e1 to a full-screen representation f. A direction of the slide operation may be leftward or rightward. FIG. 2G shows only sliding rightward.

Similarly, the second floating representation e2 may also be switched to a floating-representation style with a tool bar. The second floating representation e2 may also include a top bar control and a bottom bar control. A slide operation may also be performed on the top bar control and the bottom bar control in the second floating representation e2, to correspondingly switch to a hidden representation or a full-screen representation. For descriptions of functions of the second floating representation e2, refer to the foregoing descriptions. Details are not described herein again.

It should be additionally noted that although Global Favorites is switched between a plurality of representations during use, the Global Favorites application in each representation is located at a top layer (or referred to as pinning to the top) of a plurality of display layers included in a display interface, and is not covered and affected by content displayed below.

**With reference to Global Favorites and a plurality of representations of Global Favorites during use, the cross-end interaction method provided in this application is implemented. A plurality of electronic devices in a same trust ring may perform one or more of the following three processing stages (collection, organization, and sharing), and this is not limited to the following process and sequence.**

A first device is used as an example for description below. The first device may be any electronic device in the same trust ring.

It may be understood that elements are of a plurality of types, and the plurality of types of elements herein may include a fragmented element such as text, figure, image, table, annotation, and may further include a non-fragmented element such as web page, video, and file. The figure may indicate a partial image captured by using a lasso tool, and the like.

### First processing stage: Element collection and element synchronization.

**Function 1:** The first device may support collection of an element at the local end by using Global Favorites.

**Function 2:** The first device may further support cross-end synchronization of an icon and device source information corresponding to the element to Global Favorites of a trusted device for display and use after the local end successfully collects the element. There may be one or more trusted devices.

Optionally, a corner mark may be displayed at any corner of the cross-end synchronized element icon. The corner mark indicates that the element is an element that is collected on another device and synchronized through the trust ring, rather than an element collected at the local end. It may be understood that, based on a same trust ring, any in-ring device successfully collects an element, and an icon corresponding to the element may be synchronized to all other in-ring devices.

Herein, a corner mark may be set at any one of the upper left corner, the lower left corner, the upper right corner, or the lower right corner of the cross-end synchronized element icon. This is not limited in this application.

For example, the corner mark may include a device icon, and the device icon indicates a device source. In an example of a mobile phone, as shown in FIG. 2H, in an element icon included in the full-screen representation, a corner mark displayed at the upper right corner may include a tablet computer mark 21, to indicate that a device source corresponding to the element is a tablet computer. The corner mark may also include a desktop computer mark 22, to indicate that a device source corresponding to the element is a tablet computer. The other corner marks are similar, and details are not described herein again. In addition, the 3^{rd} icon is a group icon, and includes two elements. Therefore, the group icon may correspondingly include two corner marks, to respectively indicate respective device sources corresponding to the two elements.

For example, the corner mark may also include a trust ring mark, and the trust ring mark indicates that the element is cross-end synchronized through a trust ring. For example, as shown in FIG. 2I, corner marks displayed at the upper right corners of cross-end synchronized element icons all include a trust ring mark 23; and/or a device source may be further displayed in a form of text below a name of each element icon. In addition, as shown in FIG. 2I, for a group icon including a cross-end synchronized element, a corner mark including a trust ring mark may be displayed at the upper right corner, but a device source may not be displayed below a name. Certainly, this is merely an example, there may be another form for displaying, and this is not limited in this application.

For example, an example in which the corner mark of the cross-end synchronized element icon includes a device mark is used. After successfully collecting a text element, the mobile phone may synchronize an element icon corresponding to the collected text to Global Favorites on a tablet computer for displaying. The user can view the element icon corresponding to the text by viewing the Global Favorites application on the tablet computer. In addition, a corner mark including a mobile phone mark may be further displayed at the upper right corner of the icon, to indicate that the element is synchronized from the mobile phone.

**Function 3:** The first device may support cross-end invocation of a related service of a trusted device, and collect an element through the trusted device. There may be one or more trusted devices.

**Function 4:** After collecting an element, the trusted device may further support synchronizing an icon and device source information corresponding to the element to Global Favorites on the first device and another trusted device for displaying.

For example, the first device may support starting a camera application of a second device and invoking a camera service in response to an operation of a user on a photographing option or a video recording option (the photographing option and the video recording option may also be combined into a shooting option) in the Global Favorites application of the first device, and further take a photo or record a video by using a camera of the second device, to generate an image element or a video element, and collect the image element or the video element into the Global Favorites application of the second device. It may be understood that the generated image or video is also saved to a Gallery application of the second device.

For example, the first device may support starting a Recorder application of the second device and invoking an audio service in response to an operation of the user on an audio recording option in Global Favorites of the first device, and may further record audio by using the audio service of the second device, to generate an audio file, and collect the audio file into the Global Favorites application of the second device. It may be understood that the generated audio file is also saved to the Recorder application of the second device.

For another example, the first device may further support starting a Notes application of the second device and invoking a handwriting service in Notes in response to an operation of the user on a handwriting option in Global Favorites of the first device, and may further support the handwriting service in Notes of the second device for a handwriting input, to generate a note file, and collect the note file into the Global Favorites application of the second device. It may be understood that the generated note file is also saved in the Notes application at the same time.

In the foregoing three examples, after successfully collecting the element, the second device may further synchronize the icons and the device source information (herein a source is the second device) corresponding to the generated image, video, audio, and note to Global Favorites of the first device for displaying. In addition, when there is further a third device in the same trust ring, the element icons and the device source information collected by the first device by invoking a service of the second device across ends may be further synchronized to Global Favorites of the third device for displaying.

**Function 5:** The first device may support pop-up of a notification on a trusted device across ends after an element is successfully collected for the first time, to prompt a user on the trusted device side that the first device has collected a new element by using Global Favorites.

### Second processing stage: Element organization and organization result synchronization.

**Function 1:** During element organization, the first device may support grouping of a plurality of elements.

This application may support grouping of a plurality of elements of the same type, and may also support grouping of a plurality of elements of different types. This application may also support grouping of a plurality of individual elements, grouping of one or more individual elements and one or more groups of elements, grouping of a plurality of groups of elements, and the like. It should be noted that element grouping may be understood as placing a plurality of elements in one folder. When elements in a group are organized into a new group, the new group includes individual elements in the original group.

**Function 2:** During element organization, the first device may support moving one or more elements at a time.

It may be understood that the moving may indicate moving in a plane, or may indicate moving in a depth of a display path. For example, the moving may indicate translation of a display position of an element in a display interface from top to bottom, from left to right, or the like. Alternatively, the moving may indicate moving one or more elements to grouped elements, or may indicate grouping one or more elements. Both the manners indicate moving from a first-level interface to a second-level interface. The first-level interface may indicate the full-screen representation or the floating representation of Global Favorites, and the second-level interface may indicate an interface corresponding to a group of elements or an interface corresponding to a folder.

**Function 3:** During element organization, the first device may support renaming one element or a group of elements at a time.

**Function 4: During element organization,** the first device may support deleting one element or a group of elements.

It should be noted that for the function 1 to the function 4, the first device performs organization actions of grouping, moving, renaming, and deleting on a collected element in response to a user operation, and synchronizes an organization result to a trusted device after the organization. For example, element grouping is performed on the first device, and an element grouping result is synchronized to all trusted devices based on a same trust ring. An element is deleted from the first device, and the element is synchronously deleted from all trusted devices based on a same trust ring.

For the function 1 to the function 4, elements on the first device may include an element collected by the first device and/or an element synchronized from the trusted device.

The foregoing merely shows four functions during element organization, and certainly, another function may be further included, for example, element screening. Functions at the organization stage are not limited in this application. According to the organization method provided in this application, with reference to the Global Favorites application, quick classification and secondary organization of collected elements can be implemented, so that a display manner of the collected elements satisfies a personal requirement of a user, and user experience is improved.

It should be noted that, when Global Favorites is in the floating representation or the full-screen representation, elements already collected from Global Favorites may be partially or completely displayed. Therefore, organizing the collected elements mainly relates to the floating representation and the full-screen representation of the Global Favorites application.

### Third processing stage: Element sharing.

Optionally, sharing described herein may include element transferring or cross-application use of an element, element sharing, and the like.

During use of an element, the first device may drag the element in Global Favorites to an application in response to a drag operation of a user, and then import the element into the application of the first device in response to a release operation. The element may include a local-end element, and may also include a cross-end synchronized element.

Herein, if the synchronized element has been downloaded to the first device, the element may be directly imported into the application of the first device. If the synchronized element has not been downloaded, the synchronized element may be first downloaded during importing to the application of the first device, and then is imported.

It may be understood that a sharing function described above is separately implemented in each device. A new element included in Global Favorites has been automatically synchronized to devices based on a same trust ring, and therefore, does not need to be manually shared cross devices.

It should be noted that in addition to the first processing stage to the third processing stage, the electronic device may further implement other processing. The electronic device can collect, organize, and share the element more conveniently based on the first processing stage to the third processing stage. For related content in a scenario of element collection, organization, and sharing, refer to the following descriptions. Details are not described herein.

**The following describes the first processing stage (element collection) in detail.**
**1. The first device collects a local element and a synchronized element (as shown in** **FIG. 3A to FIG. 3J****)**

In an example of a news application, the first device may detect a user operation on the news application, and in response to the user operation, the first device may start the news application, and display a main interface (that is, an interface displayed by default after starting) of the news application. The main interface of the news application may include thumbnails of a plurality of news messages. The thumbnails of the plurality of news messages may be used to trigger the first device to display specific content of the news messages. The first device may detect a user operation on any thumbnail, and in response to the user operation, the first device displays a display interface of a news message corresponding to the corresponding thumbnail.

Optionally, the first device may detect a user operation on a piece of text in the display interface, and in response to the user operation, the part of text may be in a text-selected state. Then, the first device may detect a user operation on the part of text in the text-selected state. In response to the user operation, the first device may enter the Global Favorites mode.

Optionally, when the part of text is in a text-selected state or a text-unselected state, text background colors may be different for distinction. For example, when a part of text is in the text-unselected state, a background color of the text may be white, and when a part of text is in a text-selected state, a background color of the text may be gray.

It may be understood that the user operation in embodiments of this application may include, but is not limited to, a touch (for example, a tap, and touch and hold), voice control, a gesture, and other operations. This is not limited in this application.

For example, the first device is a mobile phone, as shown in a display interface 301 in FIG. 3A, the display interface 301 is a web page of a news message in the news application. The mobile phone may detect a selection operation (for example, an operation of sliding left or right after touch and hold) on a piece of text in the display interface 301, and in response to the selection operation, the part of text may be in the text-selected state. For ease of description, in this application, a part of text in the text-selected state may be recorded as text a1 (for example, the text whose background color is gray in FIG. 3A).

The mobile phone may detect a touch and hold operation on the text a1, and in response to the touch and hold operation, the mobile phone may display a display interface 302 shown in FIG. 3B. Relative to the display interface 301, a hidden-representation icon b of Global Favorites is displayed on the right in the display interface 302. The icon b is used to prompt the user that triggered by the touch and hold operation on the text a1 in this case, the mobile phone enters the Global Favorites mode, and the text a1 in a text-selected state may be collected by the Global Favorites application.

Optionally, when the mobile phone detects the touch and hold operation on a piece of text in the text-selected state, a moving icon a2 (an arrow shown in FIG. 3B to FIG. 3D) may be further displayed in the display interface. The moving icon a2 is used to prompt the user that in a plane parallel to the display interface, the part of text in the text-selected state may be moved in any direction in response to a drag operation of the user.

Refer to a display interface 303 shown in FIG. 3C. The mobile phone may detect a drag operation on the text a1. In response to the drag operation, the text a1 in the text-selected state may be split and displayed as two pieces of text (which may be referred to as foreground text and background text for ease of description). The foreground text is the same as the text a1 originally in the text-selected state, or a font size is reduced, or a frame, a background color, and the like are added when the font size is reduced. The background text is the same as the original text a1, or the background text may be in gray font after switching. In addition, the foreground text may move with the drag operation of the user in the display interface 303, and the background text does not move with the drag operation of the user.

Meanwhile, as shown in FIG. 3C, in response to the drag operation, the Global Favorites application is invoked in the foreground, and the hidden-representation icon b of Global Favorites gradually extends from the right to the left in the display interface, and is switched to a collection-representation icon c of Global Favorites.

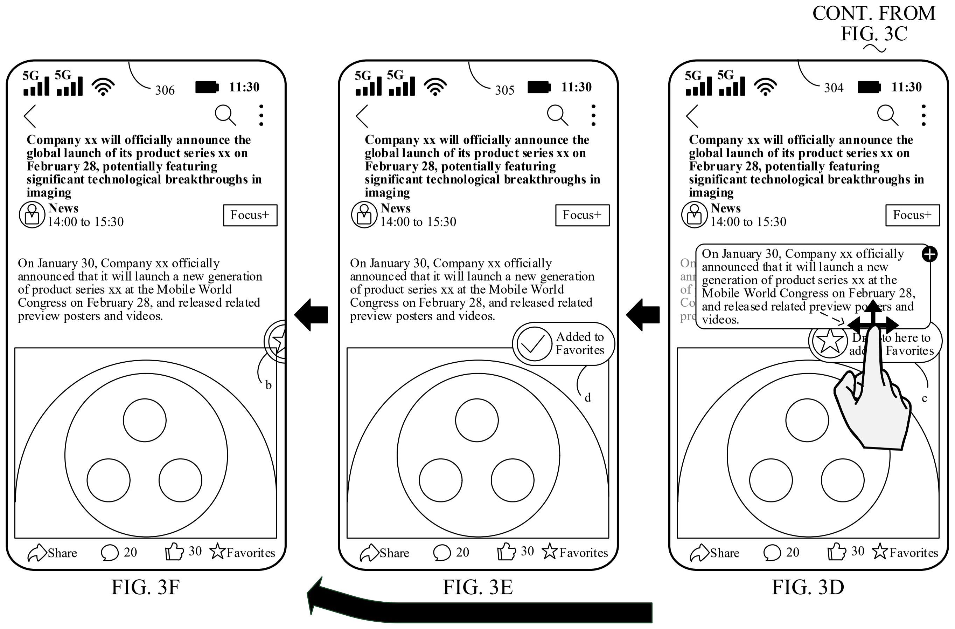

Refer to a display interface 304 shown in FIG. 3D. The mobile phone may further detect a user operation on the foreground text corresponding to the text a1. In response to the user operation, with the user operation, the foreground text may move to a position of the collection-representation icon c of Global Favorites, and then disappear.

Optionally, the user operation in embodiments of this application may include, but is not limited to drag, throw, and other operations. This is not limited in this application. A drag direction and a throwing direction both face toward a position of the collection-representation icon c of Global Favorites in the display interface. In addition, a position in which the drag operation stops overlaps the position of the collection-representation icon c of Global Favorites. If there is no overlap, content may not be collected into the Global Favorites application.

Optionally, in response to the user operation, in a process in which the foreground text moves to the position of the collection-representation icon c of Global Favorites with the user operation, because the text is of an element type that can be collected for Global Favorites, a feedback corner mark may be further displayed at the upper right corner of the foreground text. For example, as shown in FIG. 3D, a circle including "+" may be displayed at the upper right corner of the foreground text, to indicate to the user that the foreground text is allowed to be collected into the Global Favorites application in this case. It may be understood that, if the foreground text cannot be collected, another feedback corner mark may be displayed at the upper right corner. For example, a circle including "\" may be displayed at the upper right corner of the foreground text, to indicate to the user that the foreground text is not allowed to be collected into the Global Favorites application in this case.

Optionally, in response to the user operation, in a process of moving to the position of the collection-representation icon c of Global Favorites, the foreground text may further become smaller in size, to form a visual effect of gradually disappearing. Correspondingly, the collection-representation icon c of Global Favorites may show a dynamic feedback of scaling up and then scaling down in this process, and interaction between the two forms visual effect that the collection-representation icon c absorbs the foreground text.

Optionally, in a possible implementation, with reference to a display interface 304 shown in FIG. 3D and a display interface 306 shown in FIG. 3F, after the mobile phone collects the text a1 into the Global Favorites application, collection for one time ends, the background text is switched to a black font, and the collection-representation icon c of Global Favorites may be switched to the hidden-representation icon b. In another possible implementation, with reference to the display interface 304 shown in FIG. 3D, the display interface 305 shown in FIG. 3E, and the display interface 306 shown in FIG. 3F, after the mobile phone collects the text a1 into the Global Favorites application, collection for one time ends, the background text is switched to a black font, and the collection-representation icon c of Global Favorites may be first switched to a feedback-representation icon d, and then switched from the feedback-representation icon d to the hidden-representation icon b. Relative to the collection-representation icon c, a basic form of the feedback-representation icon d may remain unchanged, text on the icon may be displayed as "Added to Favorites", and a check mark may be further displayed on the icon, to feed back to the user that the text a1 has been collected into Global Favorites.

Optionally, after the collection succeeds, the Global Favorites application may continue to be displayed on the screen in a hidden-representation form, to indicate to the user that the Global Favorites application is still running in the background, and the user can collect any element into Global Favorites at any time.

It may be understood that the foregoing is an example of starting Global Favorites for text collection at the local end when the mobile phone is used as the first device.

After the collection succeeds, when the Global Favorites application is displayed on the screen in the hidden-representation form, as shown in a display interface 306 in FIG. 3G, the mobile phone may detect a user operation on the hidden-representation icon. In response to the user operation, the Global Favorites application may switch from the hidden representation to the floating representation for displaying, as shown in a display interface 307 in FIG. 3H. The floating representation of Global Favorites may include an icon 3071, for example "text 01", corresponding to the newly collected element in the foregoing example. Herein, because the mobile phone collects an element on a local device, there is no corner mark that indicates a device source at the upper right of the icon 3071.

Based on the foregoing example, the first device may support, after the first device successfully collects the element, cross-end synchronization of the icon corresponding to the element to Global Favorites of a trusted device for displaying. There may be one or more trusted devices. It may be understood that when there are a plurality of trusted devices based on a same trust ring, the icon may be synchronized to Global Favorites of the plurality of devices for displaying.

For example, after collecting the element "text 01" at the local end into Global Favorites, the mobile phone may send data such as an icon and device source information corresponding to the element to another in-ring device based on a same trust ring, for example, may send the data to a tablet computer. After receiving the data, the tablet computer may synchronously display the icon and a device source (in a manner of a corner mark) corresponding to the new element in Global Favorites of the tablet computer.

The tablet computer serving as a trusted device may display a display interface 308 shown in FIG. 3I. When detecting a user operation on Global Favorites in a hidden representation displayed on a home screen, the tablet computer may display a display interface 309 shown in FIG. 3J. A floating representation in the display interface 309 includes an icon 3091 of the synchronized new element. The icon 3091 indicates the text 01 collected at the mobile phone end. Herein, a difference between the icon 3091 and the icon 3071 is that a corner mark that indicates that a source is the mobile phone end is further displayed at the upper right corner of the icon 3091. An icon synchronized on another trusted device is the same as the icon 3091. Details are not described herein again.

It may be understood that the foregoing is an example in which the first device locally collects an element, and synchronizes an icon of a successfully collected element to Global Favorites of a trusted device.

It should be noted that when a tablet computer, a notebook computer, or the like is used as the first device, a process of starting Global Favorites to collect text at the local end and a process of viewing the text after the collection succeeds are similar to the foregoing. For details, refer to the foregoing descriptions about FIG. 3A to FIG. 3H. Details are not described herein again.

For example, an icon 3092 displayed in the floating representation in the display interface 309 shown in FIG. 3J indicates an element collected by the tablet computer. Therefore, no corner mark is displayed on the tablet computer. When the element is synchronized to a mobile phone end as a trusted device of the tablet computer, a same icon is displayed in a floating representation in a display interface 307 shown in FIG. 3H, and a corner mark indicating that the element is from the tablet computer end, for example, an icon 3072 shown in FIG. 3H, is overlaid on the icon.

It may be understood that with reference to the icon 3071 shown in FIG. 3H, subsequently, the first device (for example, the mobile phone) may further detect a tap operation on the icon 3071. In response to the tap operation, the first device may display the text element indicated by the icon 3071. Optionally, in an implementation, in response to the tap operation on the icon 3071, the first device may display a full-screen preview interface corresponding to the text element. Alternatively, in another implementation, the first device may display the text element in a manner of a floating window. Therefore, the user may view the collected text element in the Global Favorites application by tapping the icon 3071. Herein, the floating window is pinned to the top.

Similarly, with reference to the icon 3091 shown in FIG. 3J, subsequently, the tablet computer may further detect a tap operation on the icon 3091. In response to the tap operation, the tablet computer may download and display the text element indicated by the icon 3091. Optionally, in an implementation, in response to the tap operation on the icon 3091, the tablet computer may display a full-screen preview interface corresponding to the text element. Alternatively, in another implementation, the tablet computer may display the text element in a manner of a floating window. Therefore, the user may download and view the text element in the Global Favorites application collected from the first device by tapping the icon 3091.

It should be noted that the foregoing is related descriptions of displaying an element that has been collected into Global Favorites in a form of a full-screen preview interface or a floating window in response to triggering of an icon. Certainly, the element may alternatively be displayed in another manner. For example, when the first device (for example, a foldable mobile phone) is in a multi-screen display state, in response to triggering of an icon, the first device may continue to display the floating-representation icon on one of a plurality of screens, and display the text element in a full-screen manner on another screen.

It may be understood that the full-screen preview interface or the floating window further includes a return control. When detecting a tap operation on the return control, the first device or the trusted device may close the full-screen preview interface or the floating window, and then return to a display interface existing when the icon is triggered.

**2. The first device invokes a trusted device to collect an element across ends (as shown in** **FIG. 4A to FIG. 4I****,** **FIG. 5A to FIG. 5H****, and** **FIG. 6A to FIG. 6D****).**

### 1. Trigger entry on the first device.

For example, the first device is a desktop computer, as shown in FIG. 4A and FIG. 4B, the first device runs a Global Favorites application, and a floating representation of Global Favorites, for example, the floating representation e1 shown in FIG. 2A(1) to FIG. 2A(3), may be displayed in a display interface 401.

Optionally, as shown in FIG. 4A, three points indicating a "More" control may be included at the upper right corner of the floating representation of Global Favorites. The first device may detect a user operation on the "More" control, and the "More" control enables more functions. In response to the user operation, as shown in a display interface 402 in FIG. 4B, the first device may display a card 4021 below the "More" control. The card 4021 includes, but is not limited to, "Create a desktop shortcut", "Clipboard", and "Settings" options.

Optionally, as shown in FIG. 4B, when the first device, a second device (for example, a mobile phone), and a third device (for example, a tablet computer) form a trust ring, the card 4021 may further include a plurality of invokable service options related to the second device, for example "Photo", "Video", "Record", and "Handwriting". Similarly, the card 4021 may further include a plurality of invokable service options related to the third device, and the service options that can be invoked by the third device are the same as those of the second device. It may be understood that when the first device and a plurality of devices form a trust ring, the card 4021 may display service options respectively related to the plurality of devices, and service options corresponding to different devices may be the same or different. This is not limited in this application.

Optionally, the first device may also display a full-screen representation of Global Favorites, the upper right corner of the full-screen representation of Global Favorites may also include three points indicating a "More" control, and the "More" control may enable more functions. The first device may detect a user operation on the "More" control, and in response to the user operation, the first device may also display the card 4021. For details, refer to the foregoing descriptions. Details are not described herein again.

### 2. Cross-end invocation and exiting of a service on the second device by the first device.

Based on the card 4021, the first device may detect a user operation on an option that is on the card 4021 and that is related to the second device or the third device. In response to the user operation, the first device may start an application of the second device or the third device across ends, and at the same time, the first device may display a multi-screen collaboration interface. The multi-screen collaboration interface includes a display interface related to the application. The first device controls, in response to a user operation on the display interface related to the application, the second device or the third device to collect an element. In addition, the multi-screen collaboration interface further includes an exit control. In response to a user operation on the exit control, the first device may exit control over the second device or the third device.

The following describes, with reference to three embodiments, an example in which the first device invokes photographing, audio recording, and handwriting services of the second device across ends.

### Embodiment 1: Cross-end photographing or video recording

As shown in FIG. 4C, in an example in which a mobile phone is the second device, the first device may detect a user operation on a photographing option corresponding to the mobile phone in the card 4021. In response to the user operation, the first device may send an instruction for starting a camera application on the mobile phone, to instruct to invoke a camera service on the mobile phone to take a photo. In addition, in response to the user operation, the first device may enable a smart collaboration function of the trust ring, and switch from the card 4021 to a multi-screen collaboration interface for displaying.

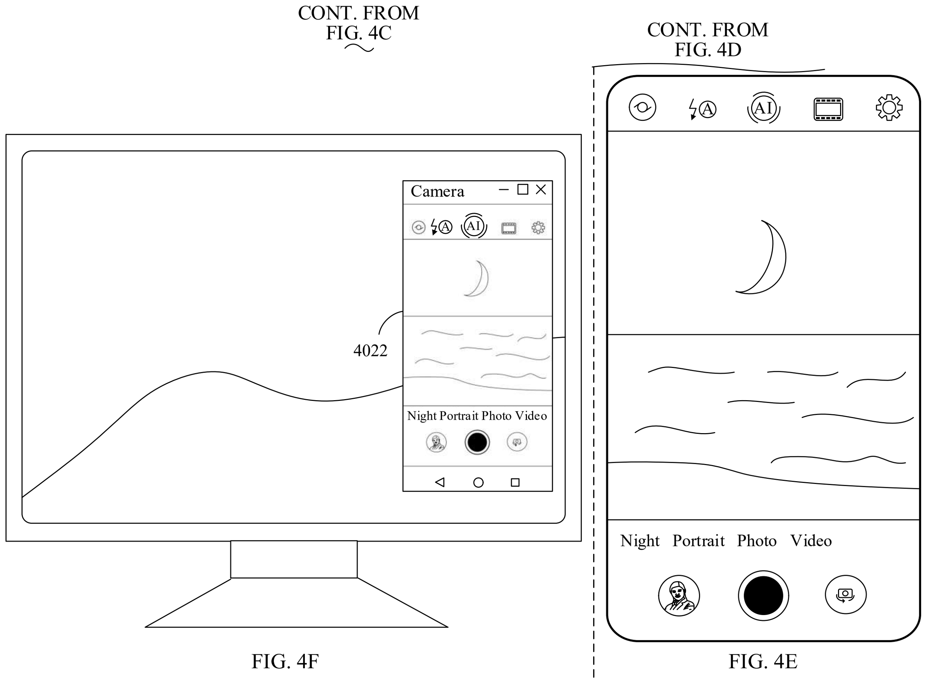

As shown in FIG. 4D, when receiving the instruction from the first device to start the camera application to take a photo, the mobile phone may start the camera application and switch from a main interface or another display interface to a photographing interface in the camera application. As shown in FIG. 4E, the photographing interface may include a preview display area, a photographing control, a thumbnail control, a camera switch control, a plurality of photographing mode options, and the like. The preview display area is used to display a real-time image of a shooting scene captured by a camera of the mobile phone. The photographing control is used to trigger photographing. The thumbnail control is used to trigger displaying an image generated during previous photographing. The camera switch control is used to trigger switching between front and rear cameras. The plurality of photographing modes are used to trigger generating an image or a video according to different algorithms.

As shown in FIG. 4F, for the first device, in response to the user operation on the photographing option corresponding to the mobile phone in the card 4021, the first device may switch from the card 4021 to a multi-screen collaboration interface 4022 for displaying. The multi-screen collaboration interface 4022 may include the photographing interface related to the camera application in the mobile phone. Based on the multi-screen collaboration interface 4022, the user performs an operation on the first device (for example, performs a tap operation on the photographing control), to control the mobile phone to take a photo across ends. An image generated from photographing this time is automatically collected into the Global Favorites application of the mobile phone after the image is generated. It may be understood that an image generated from photographing is also saved to Gallery of the mobile phone.

Optionally, when the mobile phone receives the instruction from the first device to start the camera application to take a photo, even if the mobile phone is in a screen-locked state, the mobile phone may start the camera application, and switch from a lock screen to the photographing interface in the camera application.

Optionally, the first device may continue to detect a user operation on the photographing control in the photographing interface included in the multi-screen collaboration interface 4022, and in response to the user operation, the first device may control the mobile phone to take a plurality of photos. Each image generated from photographing is automatically collected into the Global Favorites application of the mobile phone after the image is generated, and is also saved to Gallery of the mobile phone.

Optionally, when the first device switches from the card 4021 to the multi-screen collaboration interface 4022, a floating representation of Global Favorites on the first device may be hidden after being collapsed, or may continue to be displayed.

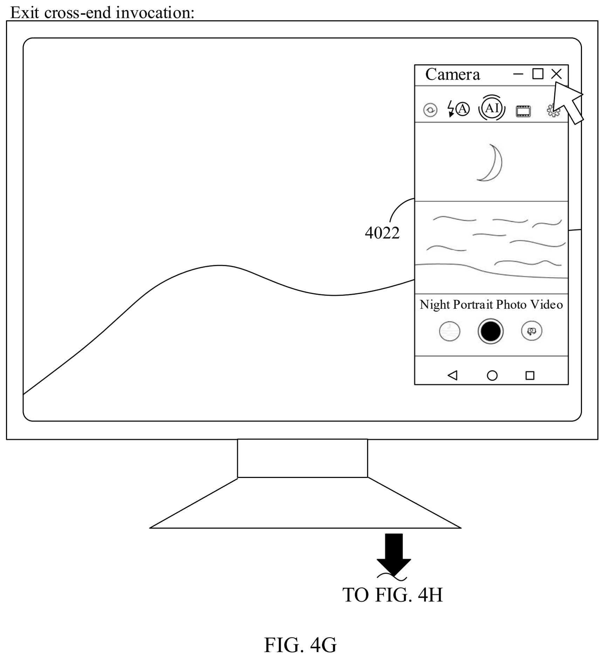

Optionally, as shown in FIG. 4G, the multi-screen collaboration interface displayed on the first device further includes an exit control at the upper right corner, and the first device may detect a user operation on the exit control. In response to the user operation, the first device exits control over the mobile phone, and closes the multi-screen collaboration interface 4022. Correspondingly, after control over the mobile phone side is released, the display interface before the control may continue to be displayed.

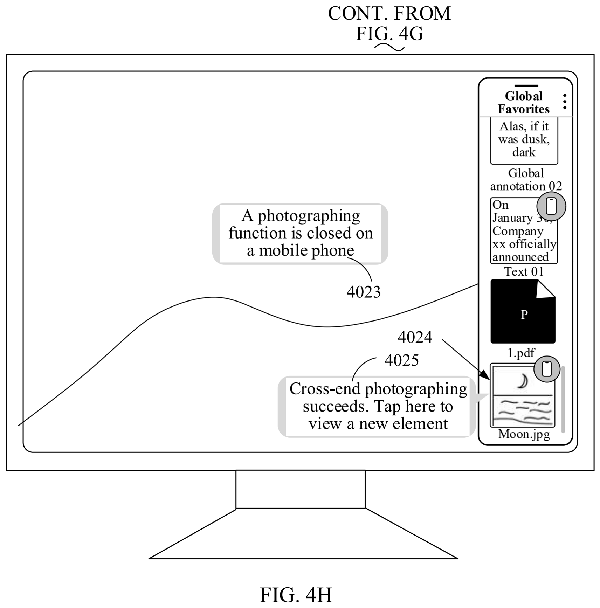

Optionally, as shown in FIG. 4H, in response to the user operation on the exit control, the first device may also display a prompt card 4023. The prompt card may display text "The photographing function is closed on the mobile phone xx", to prompt the user that the first device has exited control over the mobile phone.

Optionally, after photographing, in response to the user operation on the exit control, the first device may display a hidden representation or a floating representation of Global Favorites when closing the multi-screen collaboration interface. When the first device switches from the hidden representation to the floating representation in response to an operation on the hidden representation, or when the first device displays the floating representation of Global Favorites, as shown in FIG. 4H, the floating representation may include a synchronized icon, such as an icon 4024, of the image collected at the mobile phone end. Because the element is from the mobile phone end, when the element is displayed on the first device, there may be a corner mark at the upper right corner of the icon, to indicate that device source information is the mobile phone. It may be understood that Global Favorites in the mobile phone also includes the image icon but does not include the corner mark at the upper right corner.

Optionally, to prompt that the element collected by invoking the mobile phone across ends has been synchronized to the first device, the first device may further display a card beside the icon of the synchronized element, to indicate a position or a viewing entry of the new element. As shown in FIG. 4H, the first device may display a card 4025 including text "Cross-end photographing succeeds, and tap here to view a new element" beside the synchronized image icon 4024. Subsequently, in response to a tap operation on the icon 4024, the first device may display a full-screen preview interface corresponding to the image in Global Favorites. Alternatively, the image may be displayed in a manner of a floating window. This is not limited in this application.

It may be understood that the foregoing is an example in which the first device invokes, across ends, the camera service on the mobile phone for photographing, implements image collection, exits cross-end invocation, and displays a synchronized icon on the first device. For a process in which the first device controls another trusted device to take a photo, refer to the foregoing descriptions. Details are not described herein again.

In addition, a process in which the first device invokes the camera service on the mobile phone across ends to record a video and collect a video is similar to the foregoing process. For details, refer to the foregoing descriptions. Details are not described herein again.

### Embodiment 2: Cross-end audio recording

As shown in FIG. 5A, in an example in which a mobile phone is the second device, the first device may detect a user operation on an audio recording option corresponding to the mobile phone in the card 4021. In response to the user operation, the first device may send an instruction for starting a Recorder application on the mobile phone, to instruct to invoke an audio recording service on the mobile phone to record audio. In addition, in response to the user operation, the first device may enable a smart collaboration function of the trust ring, and switch from the card 4021 to a multi-screen collaboration interface for displaying.

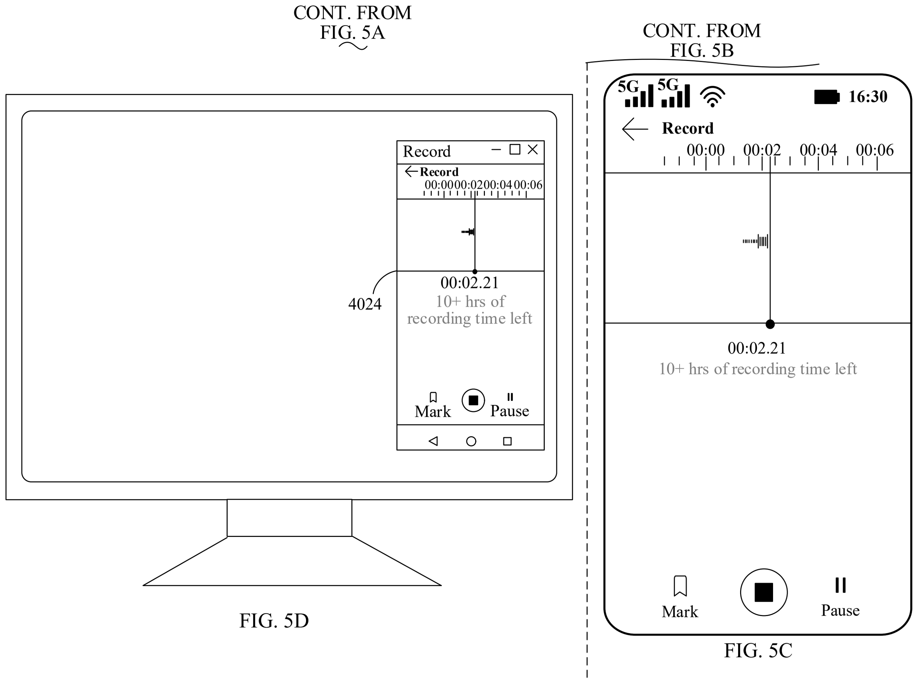

As shown in FIG. 5B, when the mobile phone receives the instruction from the first device to start the Recorder application to record audio, the mobile phone may start the Recorder application and switch from a home screen or another display interface to an audio recording interface in the Recorder application. As shown in FIG. 5C, the audio recording interface may include a recording area, an audio recording control, a mark control, a pause control, and the like. The recording area is used to display a waveform and a timeline of real-time audio recording performed by the Recorder application of the mobile phone. The audio recording control is used to trigger audio recording. The mark control is used to trigger mark of audio information at a moment. The pause control is used to trigger pause of audio recording. After the pause, the pause control may be switched to a continue control, and the continue control is used to trigger to continue audio recording.

As shown in FIG. 5D, in response to a user operation on an audio recording option corresponding to the mobile phone in the card 4021, displayed content on the first device may be switched from the card 4021 to a multi-screen collaboration interface 4024. The multi-screen collaboration interface 4024 may include an audio recording interface related to the Recorder application in the mobile phone. Based on the multi-screen collaboration interface 4024, a user may perform an operation on the first device (for example, perform a tap operation on the audio recording control), to control the mobile phone to record audio across ends. An audio file generated from audio recording this time is automatically collected into the Global Favorites application of the mobile phone after recording is completed. It may be understood that the audio file generated during audio recording may also be saved to the Recorder application at the same time.

Optionally, when the mobile phone receives an instruction from the first device to start the Recorder application to record audio, if the mobile phone is in a screen-locked state, when displayed content on the first device is switched from the card 4021 to the multi-screen collaboration interface, the multi-screen collaboration interface may first display a lock screen prompt interface including a prompt, to prompt the user that the mobile phone end is in the screen-locked state and needs to be unlocked. After the mobile phone end is unlocked, the displayed content on the first device is then switched from the lock screen prompt interface to the audio recording interface.

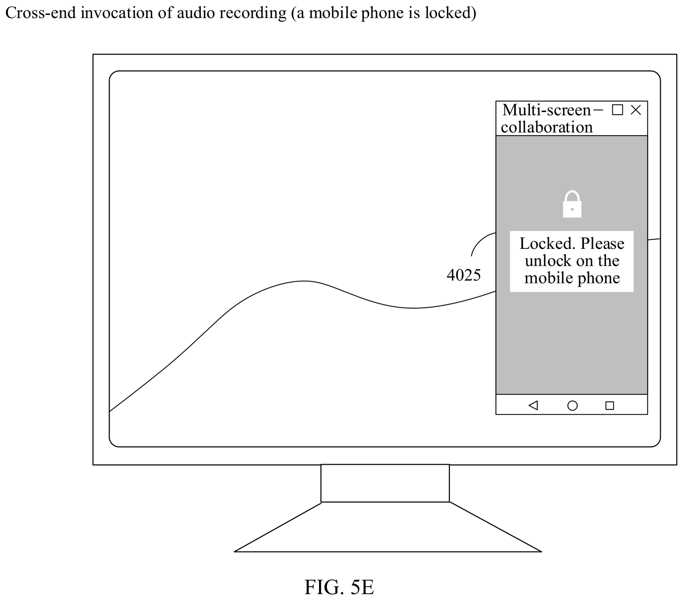

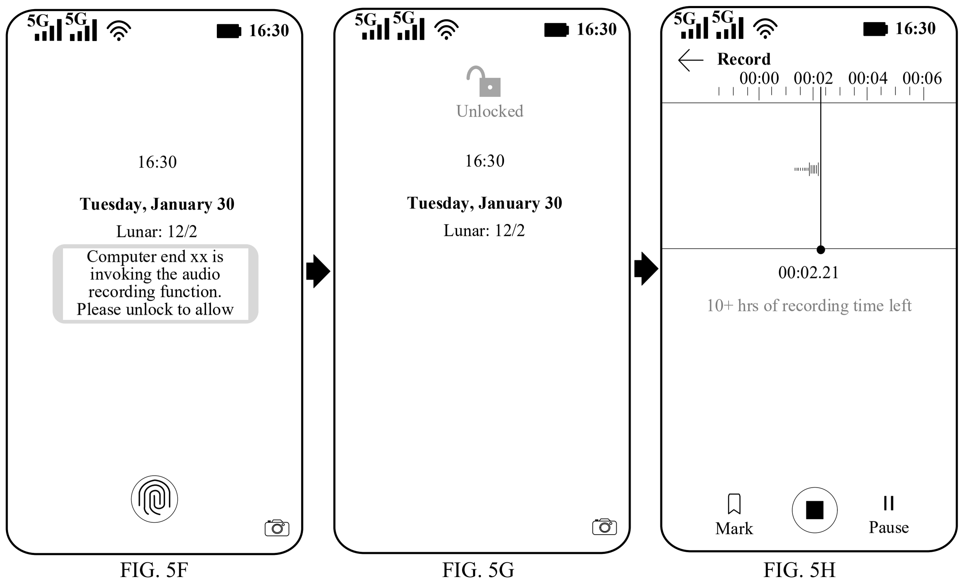

For example, as shown in FIG. 5E, if the mobile phone is in the screen-locked state, the multi-screen collaboration interface displayed on the first device may display a lock screen prompt interface 4025 including a prompt "Locked. Please unlock at the mobile phone end", to prompt the user to unlock the mobile phone. In addition, as shown in FIG. 5F, the mobile phone end in the screen-locked state may also display a prompt, such as "Computer end xx is invoking the audio recording function. Please unlock to allow", to prompt the user to perform unlocking. With reference to FIG. 5G and FIG. 5H, after the mobile phone is successfully unlocked in response to an unlock operation of the user, the Recorder application may be started, and the audio recording interface is displayed. In response to the unlock operation, the first device side also switches from the lock screen prompt interface 4025 to the multi-screen collaboration interface including the audio recording interface shown in FIG. 5D.

Optionally, the first device may continue to detect a user operation on an audio recording control in the audio recording interface included in the multi-screen collaboration interface 4024, and in response to the user operation, the first device may control the mobile phone to record audio for a plurality of times. Each audio file generated from audio recording is automatically collected into the Global Favorites application of the mobile phone after recording is completed, and is also saved to the Recorder application of the mobile phone.

Optionally, when the first device switches from the card 4021 to the multi-screen collaboration interface 4024, a floating representation of Global Favorites on the first device may be hidden after being collapsed, or may continue to be displayed.

Optionally, as shown in FIG. 5D, the multi-screen collaboration interface 4024 displayed on the first device further includes an exit control at the upper right corner, and the first device may detect a user operation on the exit control. In response to the user operation, the first device exits control over the mobile phone, and closes the multi-screen collaboration interface 4024. Correspondingly, after control over the mobile phone side is released, the display interface before the control may continue to be displayed.

Optionally, in response to the user operation on the exit control, the first device may also display a prompt card. The prompt card may display text "The audio recording function is closed on the mobile phone xx", to prompt the user that the first device has exited control over the mobile phone.

Optionally, after audio recording, in response to the user operation on the exit control, the first device may display a hidden representation or a floating representation of Global Favorites when closing the multi-screen collaboration interface. When the first device switches from the hidden representation to the floating representation in response to an operation on the hidden representation, or when the first device displays the floating representation of Global Favorites, the floating representation may include a synchronized icon of the audio collected at the mobile phone end. Because the element is from the mobile phone end, when the element is displayed on the first device, there may be a corner mark at the upper right corner of the icon, to indicate that device source information is the mobile phone. It may be understood that Global Favorites in the mobile phone also includes the audio icon but does not include the corner mark at the upper right corner.

Optionally, to prompt that the element collected by invoking the mobile phone across ends has been synchronized to the first device, the first device may further display a card beside the icon of the synchronized element, to indicate a position or a viewing entry of the new element. For example, the first device may display a card including text "Cross-end audio recording has succeeded, and tap here to view a new element" beside the synchronized audio icon. Subsequently, in response to a tap operation on the icon, the first device may display a full-screen playing interface corresponding to the audio in the Global Favorites.

It may be understood that the foregoing is an example in which the first device invokes, across ends, the audio service on the mobile phone for audio recording, implements audio collection, exits cross-end invocation, and displays content such as a synchronized icon on the first device. For a process in which the first device controls another trusted device to record audio, refer to the foregoing descriptions. Details are not described herein again.

### Embodiment 3: Cross-end handwriting

As shown in FIG. 6A, in an example in which a mobile phone is the second device, the first device may detect a user operation on a handwriting option corresponding to the mobile phone in the card 4021. In response to the user operation, the first device may send an instruction for starting a Notes application on the mobile phone, to instruct to invoke a handwriting service on the mobile phone to perform a handwriting input. In addition, in response to the user operation, the first device may enable a smart collaboration function of the trust ring, and switch from the card 4021 to a multi-screen collaboration interface for displaying.

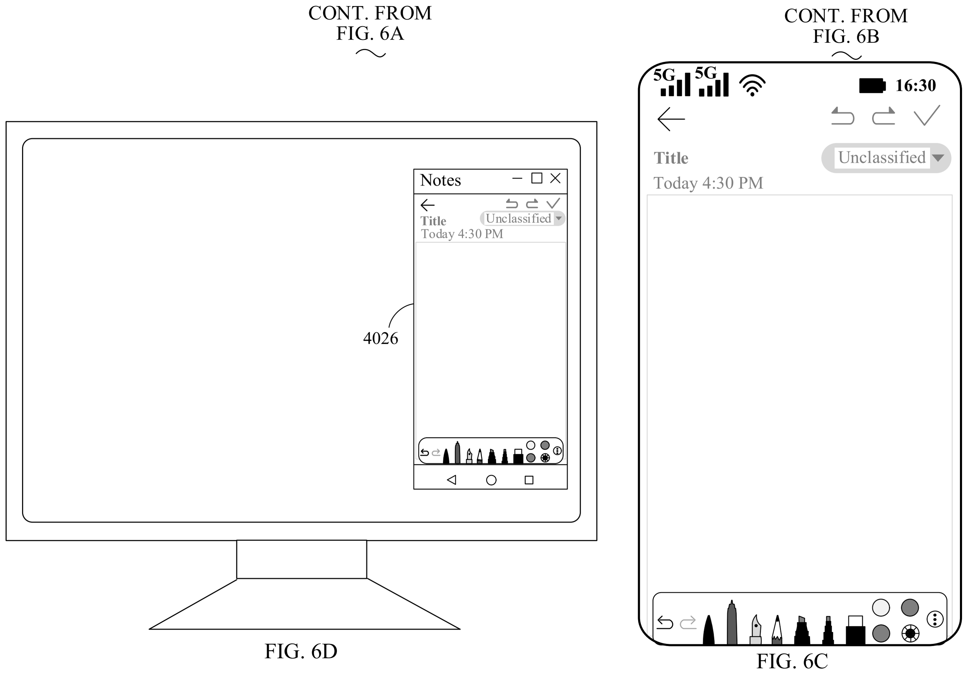

As shown in FIG. 6B, when the mobile phone receives the instruction from the first device to start the Notes application to perform a handwriting input, the mobile phone may start the Notes application and switch from a home screen or another display interface to a handwriting input interface in the Notes application. As shown in FIG. 6C, the handwriting input interface may include a title, current time, a handwriting input area, a handwriting toolbar, and the like. The handwriting input area is used to display a handwriting trace collected by the mobile phone in real time. The handwriting toolbar is used to trigger selection of a handwriting tool, a color, and the like.

As shown in FIG. 6D, in response to a user operation on the handwriting option corresponding to the mobile phone in the card 4021, displayed content on the first device may switch from the card 4021 to a multi-screen collaboration interface 4026. The multi-screen collaboration interface 4026 may include the handwriting input interface related to the Notes application in the mobile phone. Based on the multi-screen collaboration interface 4026, the user may perform an input operation on the first device (for example, writing in the handwriting input area), to control, across ends, the mobile phone to perform a handwriting input. After completing the handwriting input on the first device, the user may tap a complete control at the upper right corner of the handwriting input interface. In response to the tap operation, the handwriting input this time is completed. A note generated from the handwriting input this time is automatically collected into the Global Favorites application of the mobile phone after the input is completed. It may be understood that the note generated from the handwriting input may also be saved to the Notes application at the same time.

Optionally, when the mobile phone receives an instruction from the first device to start the Notes application to perform handwriting input, if the mobile phone is in a screen-locked state, when displayed content on the first device is switched from the card 4021 to the multi-screen collaboration interface, the multi-screen collaboration interface may first display a lock screen prompt interface including a prompt, to prompt the user that the mobile phone end is in the screen-locked state and needs to be unlocked. After the mobile phone end is unlocked, the displayed content on the first device is then switched from the lock screen prompt interface to the handwriting input interface.

Herein, descriptions about the screen lock prompt interface and the unlocking process are similar to descriptions about FIG. 5E to FIG. 5H. For details, refer to the foregoing content. Details are not described herein again.

Optionally, the first device may control the mobile phone to perform a plurality of times of handwriting inputs. Each note generated from a handwriting input is automatically collected into the Global Favorites application of the mobile phone after the input, and is also saved to the Notes application of the mobile phone.

Optionally, when the first device switches from the card 4021 to the multi-screen collaboration interface 4026, the floating representation of Global Favorites on the first device may be hidden after being collapsed, or may continue to be displayed.

Optionally, as shown in FIG. 6D, the multi-screen collaboration interface 4026 displayed on the first device further includes an exit control at the upper right corner, and the first device may detect a user operation on the exit control. In response to the user operation, the first device exits control over the mobile phone, and closes the multi-screen collaboration interface 4026. Correspondingly, after control over the mobile phone side is released, the display interface before the control may continue to be displayed.

Optionally, in response to the user operation on the exit control, the first device may also display a prompt card. The prompt card may display text "The handwriting function is closed on the mobile phone xx", to prompt the user that the first device has exited control over the mobile phone.

Optionally, after the handwriting input, in response to the user operation on the exit control, the first device may display a hidden representation or a floating representation of Global Favorites when closing the multi-screen collaboration interface. When the first device switches from the hidden representation to the floating representation in response to an operation on the hidden representation, or when the first device displays the floating representation of Global Favorites, the floating representation may include a synchronized icon of the note collected at the mobile phone end. Because the element is from the mobile phone end, when the element is displayed on the first device, there may be a corner mark at the upper right corner of the icon, to indicate that device source information is the mobile phone. It may be understood that Global Favorites in the mobile phone also includes the note icon but does not include the corner mark at the upper right corner.

Optionally, to prompt that the element collected by invoking the mobile phone across ends has been synchronized to the first device, the first device may further display a card beside the icon of the synchronized element, to indicate a position or a viewing entry of the new element. For example, the first device may display a card including text "Cross-end handwriting succeeds, and tap here to view a new element" beside the synchronized note icon. Subsequently, in response to a tap operation on the icon, the first device may display a full-screen display interface corresponding to the note in the Global Favorites.

It may be understood that the foregoing is an example in which the first device invokes, across ends, the handwriting service on the mobile phone for handwriting, implements note collection, exits cross-end invocation, and displays content such as a synchronized icon on the first device. For a process in which the first device controls another trusted device to perform handwriting, refer to the foregoing descriptions. Details are not described herein again.

It may be understood that, because the element icons for the icon 3091 shown in FIG. 3J and the icon 4024 shown in FIG. 4H are synchronized, when the user needs to view or use the element icon on the current device subsequently, the element icon is first downloaded to the current device for displaying in response to a user operation. Optionally, during downloading, if element data is small, there is no feedback, and the user correspondingly does not sense the element data. If the element data is large, a downloading progress may be fed back, and the user is prompted with downloading start time and downloading end time.

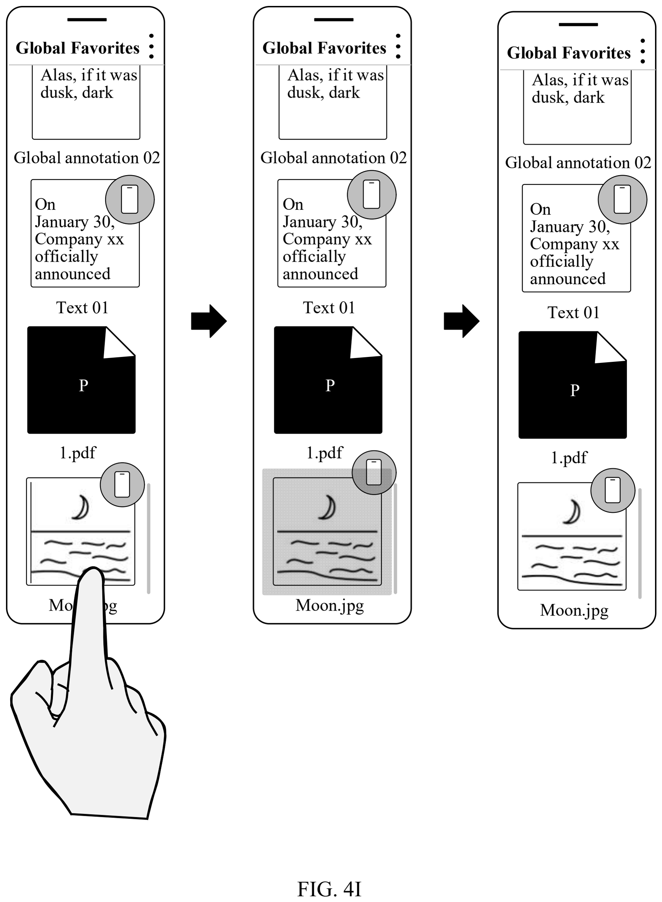

For example, for an icon 4024 shown in FIG. 4H, as shown in FIG. 4I, if the image data is large, after detecting a tap operation on the icon 4024, the first device may trigger first downloading the image data to the first device, and then displaying a full-screen preview interface corresponding to the image in Global Favorites. Herein, when downloading of the icon 4024 starts, a mask layer may be added, and after downloading ends, the mask layer may be removed to restore an original display state. Therefore, the feedback may be prompt the user with the downloading start time and the downloading end time. It may be understood that the feedback in the downloading process may also be performed in another manner, for example, including a downloading progress bar. This is not limited in this application.

It should be noted that according to the method provided in this application, the Global Favorites function may be combined with a trust ring. Cross-end service invocation may be implemented based on two devices of a same trust ring, to implement cross-end collection of an element and element synchronization, and expand an element collection scenario. This facilitates cross-end operation and use when a user cannot directly operate a device, and improves user experience.

In this embodiment of this application, regardless of whether the first device locally collects an element, and synchronizes an icon of a successfully collected element to Global Favorites of a trusted device, or invokes a service on the trusted device across ends to perform cross-end element collection and element synchronization, the successfully collected element is stored in a source device, and further an icon is first synchronized when being synchronized on another device, and a transmitted data volume is small. This improves synchronization efficiency, and further improves user experience.

### 3. Perform cross-end notification after element collection for the first time.

Optionally, the first device may support pop-up of a notification on the trusted device across ends after the local end successfully collects an element, to prompt the user that the new element is collected into Global Favorites on the first device.

For example, as shown in FIG. 3A to FIG. 3H, when the mobile phone is used as the first device, Global Favorites is started to collect a text element at the local end for the first time. After the collection succeeds, Global Favorites may include an icon corresponding to the collected text element. As shown in FIG. 3H, the icon 3071 named "text 01" may be included in the floating representation of Global Favorites.

With reference to the example, if a tablet computer is used as a trusted device of the mobile phone, after text is successfully collected at the mobile phone end, the mobile phone end may send a notification prompt instruction to the tablet computer. After receiving the notification prompt instruction, the tablet computer end may pop up a notification card, to prompt the user that the new element "text 01" is collected into Global Favorites at the mobile phone end.

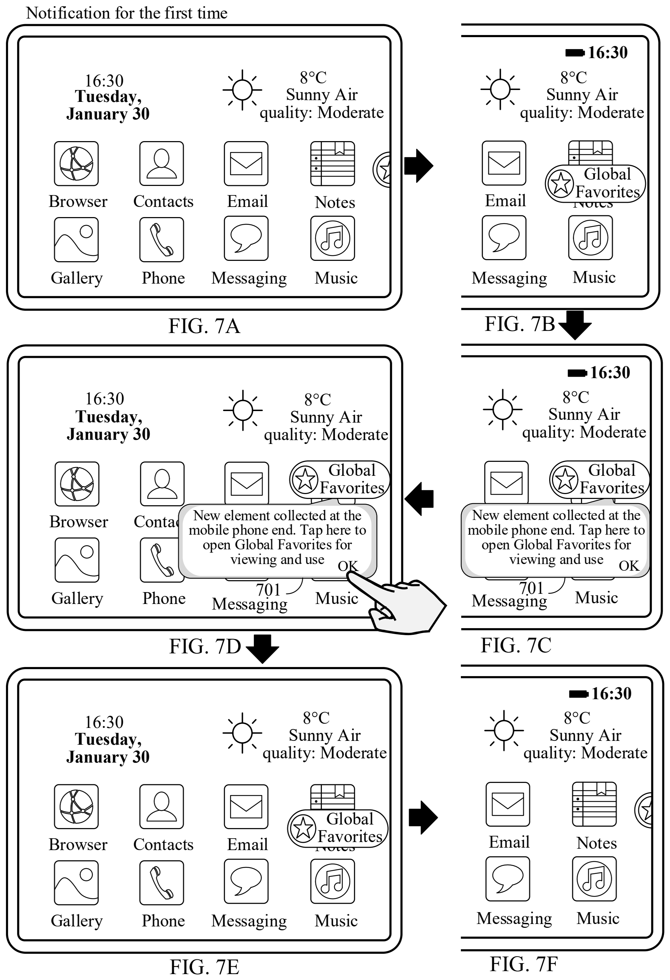

If the tablet computer end does not start Global Favorites, in this case, after receiving the notification prompt instruction, the tablet computer may start the Global Favorites application. As shown in FIG. 7A and FIG. 7B, Global Favorites is first displayed in the hidden representation, then slides from the hidden representation on right to left to appear, and gradually transitions into a capsule-state icon. In this process, as shown in FIG. 7C, a notification card 701 may appear below the capsule-state icon, and the card 701 may display a prompt "New element collected at the mobile phone end. Tap here to view and use".

After the card 701 appears, the card 701 may automatically disappear after a preset time period, or the card 701 may further display a button including text "OK". Then, as shown in FIG. 7D, the tablet computer may detect a user operation on the button. As shown in FIG. 7E and FIG. 7F, in response to the user operation, the card 701 may disappear, and the content displayed on the tablet computer may be switched from the capsule-state icon of Global Favorites to the hidden-representation icon again.

If the tablet computer end already runs Global Favorites, Global Favorites is displayed in the display interface in a hidden representation, a floating representation, or a full-screen representation. In this case, when Global Favorites is presented in the hidden representation, Global Favorites may be switched from the hidden representation to the capsule-state icon, and then the notification card is displayed. For details, refer to the foregoing descriptions about FIG. 7A to FIG. 7F. Details are not described herein again. When Global Favorites is presented in the floating representation or the full-screen representation, the notification card may be displayed in a display area in the full-screen representation, or may be displayed in or beside a display area in the floating representation. It may be understood that, after the notification card disappears, the tablet computer end continues to display a display interface existing before the notification card appears.

Optionally, the first device may further support pop-up of a notification on another trusted device after cross-end collection of an element on a trusted device succeeds for the first time, to prompt the user that the new element is collected into Global Favorites of the trusted device.

For example, as shown in FIG. 4A to FIG. 4H, when a desktop computer is used as the first device and a mobile phone is used as a trusted device (the second device), the desktop computer uses the mobile phone to take a photo across ends. After image collection at the mobile phone end succeeds, an image named "Moon.jpg" is collected into Global Favorites at the mobile phone end for the first time. In this case, an icon corresponding to the image, for example, the icon 4024 shown in FIG. 4H, may also be synchronized at the desktop computer end.

With reference to this example, if a tablet computer is used as another trusted device (a third device) of the desktop computer, after image element collection at the mobile phone end succeeds, the mobile phone may feed back a collection success message to the desktop computer, and the desktop computer may send a notification prompt instruction to the tablet computer based on the feedback message, or the mobile phone may directly send a notification prompt instruction to the tablet computer. After receiving the notification prompt instruction, the tablet computer end may pop up a notification card, to prompt the user that the new element "Moon.jpg" is collected into Global Favorites at the mobile phone end.

It may be understood that regardless of whether the first device invokes a service at the local end or across ends to collect an element, as long as an element is successfully collected for the first time, a notification prompt instruction may be sent to a trusted device in a same trust ring or a trusted device other than the trusted device on which a service is invoked. A device receiving the notification prompt instruction may pop up a notification card, to prompt the user that the first device or the trusted device on which a service is invoked collects the new element.

It may be understood that the foregoing is an example of performing cross-end notification after an element is collected for the first time.

It should be noted that in the method provided in this application, a cross-end prompt may be provided only after an element is collected successfully for the first time, or a prompt may be provided each time an element is collected successfully, or no prompt may be provided. This may be specifically set according to requirements, and this is not limited in this application. When a cross-end prompt is performed only after an element is collected successfully for the first time, a main objective is to help the user learn a function that the Global Favorites application can synchronize an element across ends based on a same trust ring.

**4. A prompt is provided when Global Favorites is opened on a trusted device for the first time.**

Optionally, after the first device supports an element collection function at a local end, when a user opens the Global Favorites application on a trusted device for the first time, an element collected by the first device is synchronized, and after the synchronization, the user is prompted that the element is from the first device or another device.

For example, as shown in FIG. 3A to FIG. 3H, when the mobile phone is used as the first device, Global Favorites is started to collect a text element at the local end. After the collection succeeds, Global Favorites may include an icon corresponding to the collected text element. As shown in FIG. 3H, the icon 3071 named "text 01" may be included in the floating representation of Global Favorites.

With reference to the example, as shown in FIG. 7G to FIG. 7I, if a tablet computer is used as a trusted device of the mobile phone, when the user triggers and starts the Global Favorites application at the tablet computer end for the first time, to remind the user that Global Favorites has a cross-end element synchronization function, when displaying the floating representation or the full-screen representation of Global Favorites in response to the triggering of the user, the tablet computer end first performs cross-end element synchronization and then may display a prompt card below a cross-end synchronized element icon. The prompt card may include text "Content from your other devices", to remind the user that the element is synchronized from the mobile phone.

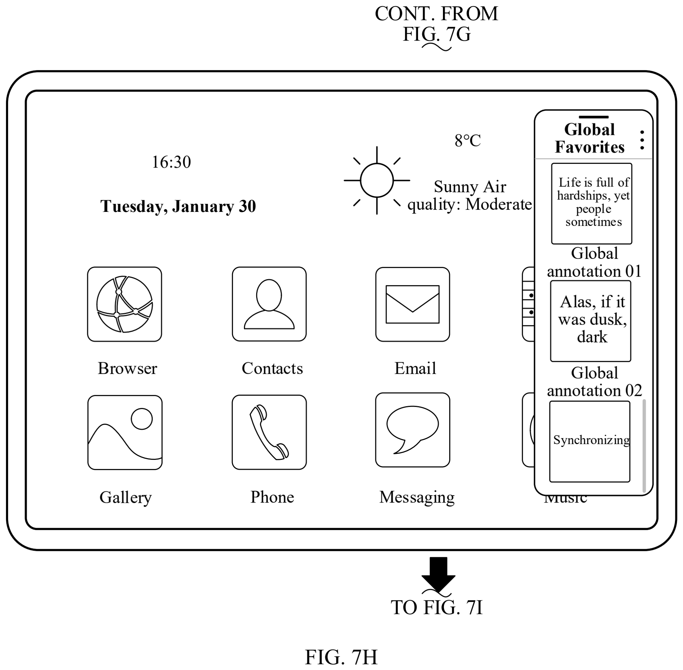

Optionally, as shown in FIG. 7H, during cross-end element synchronization, text "Synchronizing" may be displayed before a synchronization result appears, to prompt the user that the element is being synchronized across ends.

It may be understood that the foregoing is an example of prompting when Global Favorites is opened on the trusted device for the first time after the element is collected at the local end.

It should be noted that according to the method provided in this application, when the trusted device opens the floating representation or the full-screen representation of Global Favorites for the first time, a prompt may be provided for only one cross-end synchronized element, or prompts may be separately provided for a plurality of cross-end synchronized elements. Alternatively, each time a trusted device is turned on, a prompt is provided for a newly cross-end synchronized element. Specifically, the prompt may be set according to a requirement. This is not limited in this application.

**Next, the second processing stage (that is, element organization) is described in detail.**

When the Global Favorites application is in the full-screen representation, an element that has been collected into Global Favorites may be presented. In this case, a displayed main interface may include a plurality of individual icons and/or a plurality of group icons. The individual icon indicates one element, and the individual icon may be used to trigger the first device to display specific content of the element corresponding to the individual icon. The group icon indicates a plurality of elements grouped into one group. The group icon may be used to trigger the first device to display a secondary interface corresponding to the group icon. The secondary interface may include a plurality of individual icons included in the group, and each individual icon may be further used to trigger the first device to display specific content of an element corresponding to the individual icon.

In addition, in the main interface and the secondary interface, in addition to displaying the individual icon and the group icon, a name corresponding to the element or the group of elements is further displayed below the individual icon or the group icon respectively.

Optionally, because an individual icon and a group icon indicate different content, the individual icon and the group icon may be displayed with different visual effect for intuitive visual distinction. For example, the individual icon may be represented as a rounded corner square pattern. The group icon may be represented as a plurality of overlapped rounded corner square patterns, with each two staggered at an angle, or the group icon may be in a stacked card form. In addition, a number may be further displayed at the upper right corner of the group icon, and the number indicates a quantity of individual elements included in the group of elements. This is merely an example herein, and is not limited in this application.

Optionally, because there are a plurality of types of collected elements, individual icons corresponding to different types of elements may be displayed with different visual effects for intuitive visual distinction. For example, when an element is a document, a corresponding individual icon may use a first character of a format of the document as a pattern in the icon. When an element is a video, a video icon or the like may be overlaid on a corresponding individual icon.

It may be understood that the collected elements are of various types, and the user may need to use a plurality of elements of a same type or different types. For ease of using by the user, the collected elements in Global Favorites may be organized as required by the user. For example, a plurality of elements of the same type may be grouped together, or a plurality of elements of different types may be grouped together. Alternatively, elements of a device source may be grouped together. This is not limited in this application.

### 1. Element grouping (as shown in FIG. 8A to FIG. 8F)

The following describes an example of a process of grouping different types of elements by dragging with reference to the floating representation of Global Favorites.

For example, a mobile phone is the first device. FIG. 8A shows a display interface 801. For example, display content included in the interface is an article of a public account. The floating representation of Global Favorites is further included in a partial display area of the display interface, and the floating representation is located on an inner side of a right edge of the display interface. The floating representation includes a plurality of individual icons, a name corresponding to each individual icon is further displayed below the individual icon, and a corner mark that can indicate a device source is further displayed at the upper right corner. As shown in FIG. 8A, the floating representation of the Global Favorites application includes an individual icon corresponding to a video element, that is, a first individual icon tb1, "Video extract 02" is a name of the element corresponding to the individual icon, and a corner mark indicating that a device source is a notebook computer is displayed at the upper right corner.

The mobile phone may detect a user operation on the first individual icon tb1. In response to the user operation, the mobile phone may display a display interface 802 shown in FIG. 8B. In the display interface 802, the floating representation of the Global Favorites application may be switched to an organization window, and the first individual icon tb1 may be in an icon-selected state. In this case, in the organization window, the first individual icon in the icon-selected state may be split into two individual icons (a foreground icon and a background icon) for displaying. The foreground icon is the same as the original first individual icon tb1, and the foreground icon may move in the display interface 802 with a drag operation of the user. The background icon and the original first individual icon tb1 are all the same except for different colors. The background icon does not move with the drag operation of the user, or the background icon keeps still at a display position of the original first individual icon tb1.

Optionally, as shown in FIG. 8B, when the first individual icon tb1 is split into two individual icons for displaying, a circular selection box including blank content may be further displayed on the lower right side of another icon. The circular selection box including blank content indicates that the icon is not in the selected state. A circular selection box including a check mark may be further displayed on the lower right side of the background icon split from the first individual icon tb1, and the circular selection box including the check mark indicates that the current individual icon is selected by the user. In addition, when the first individual icon tb1 is selected by the user, as shown in FIG. 8B, a close control may be further displayed at the upper left corner of the organization window. The close control is used to trigger exit of an organization function of the floating representation.

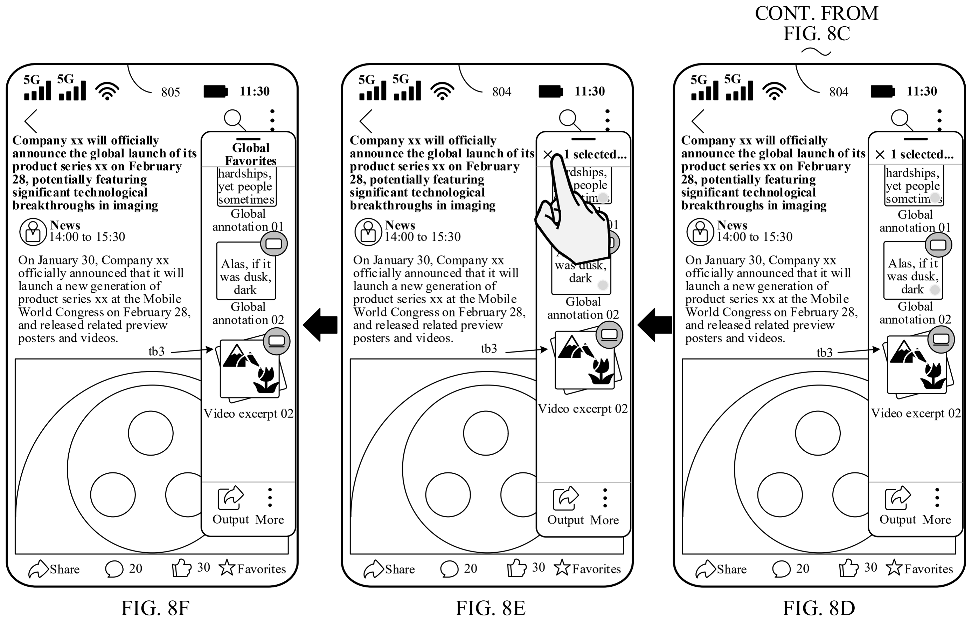

Then, as shown in a display interface 803 in FIG. 8C, in response to a drag operation performed by the user on the foreground icon in the organization window, the foreground icon may move above another individual icon, for example, a second individual icon tb2. The second individual icon tb2 is an individual icon corresponding to a picture element, "fff.jpg" is an element name corresponding to the individual icon, and no corner mark is displayed at the upper right corner, to indicate that a device source is the local end, the mobile phone. When the mobile phone detects that the foreground icon corresponding to the first individual icon tb1 overlaps a projection of the second individual icon tb2, the mobile phone may automatically merge the first individual icon tb1 and the second individual icon tb2, and switch the icons to a group icon tb3 for displaying. Refer to a display interface 804 shown in FIG. 8D. In the organization window, the group icon tb3 is a group icon corresponding to a group formed by the first individual icon tb1 and the second individual icon tb2, and "Video extract 02" is a name automatically named by the mobile phone for the group icon tb3.

Optionally, as shown in FIG. 8C, when the electronic device detects that the foreground icon corresponding to the first individual icon tb1 partially overlaps the projection of the second individual icon tb2, a gray block may be added at the background of the second individual icon tb2, to prompt the user that the second individual icon can be grouped with the first individual icon tb1.

Optionally, in a possible implementation, a group icon may be directly formed by overlapping of included individual icons. In another possible implementation, a group icon may be formed by scaling down included individual icons, or may be in a form of stacked cards. For example, as shown in FIG. 8D, when the first individual icon tb1 and the second individual icon tb2 are grouped together, the corresponding group icon tb3 is formed by overlapping the first individual icon tb1 and the second individual icon tb2. Alternatively, the group icon tb is formed by splicing the first individual icon tb1 and the second individual icon tb1. The foregoing is merely two examples. Styles, colors, and the like of the group icon may be set according to requirements, provided that the group icon is easily visually distinguished from the individual icons.

Then, the mobile phone may detect a user operation on the close control at the upper left corner of the organization window, as shown in FIG. 8E. In response to the user operation, the electronic device may exit the organization function, and switch from the organization window to the floating representation of Global Favorites, as shown in a display interface 805 in FIG. 8F. Relative to the floating representation of Global Favorites in the display interface 801, in the display interface 805, the lower two individual icons are grouped together. Therefore, the two individual icons separately displayed in the display interface 801 are displayed as one group icon in the display interface 805. In addition, other content displayed in the two display interfaces is the same.

It may be understood that the foregoing is an example in which the elements are grouped by dragging in the floating representation of Global Favorites.

Optionally, based on the display interface 805 shown in FIG. 8F, the mobile phone may further detect a tap operation on the group icon tb3, and in response to the tap operation, the mobile phone may display a second-level interface corresponding to the group icon tb3. Herein, the group icon tb3 is grouped by the first individual icon tb1 and the second individual icon tb2, and the first individual icon tb1 and the second individual icon tb2 may be displayed in the second-level interface.

It may be understood that for an element and a group of elements, or for two groups of elements, a process of grouping elements by dragging when Global Favorites is in the floating representation is similar to the foregoing process, and details are not described herein again.

It may be understood that a process of grouping elements by dragging when Global Favorites is in the full-screen representation is similar to the foregoing process, and details are not described herein again.

In addition, regardless of whether Global Favorites is in the floating representation or the full-screen representation, displaying of a card including an option "Create a group" may be triggered, and elements are grouped by triggering the option "Create a group".

In this embodiment of this application, regardless of whether a synchronized element of a trusted device is downloaded to the local end, grouping may be performed.

It should be further noted that after grouping, an element grouping result included in the floating representation is synchronized to Global Favorites of the trusted device. That is, an element grouping status displayed on another trusted device is the same as that of the first device.

### 2. Element moving (as shown in FIG. 9A to FIG. 9E)

The following describes an example of an element moving process with reference to the floating representation of Global Favorites.

For example, a mobile phone is the first device. A display interface 901 shown in FIG. 9A is the same as the display interface 801 shown in FIG. 8A, and a display interface 902 shown in FIG. 9B is the same as the display interface 802 shown in FIG. 8B. When Global Favorites is in the floating representation, for a process of selecting the first individual icon, refer to the foregoing descriptions about the display interface 801 and the display interface 802. Details are not described herein again.

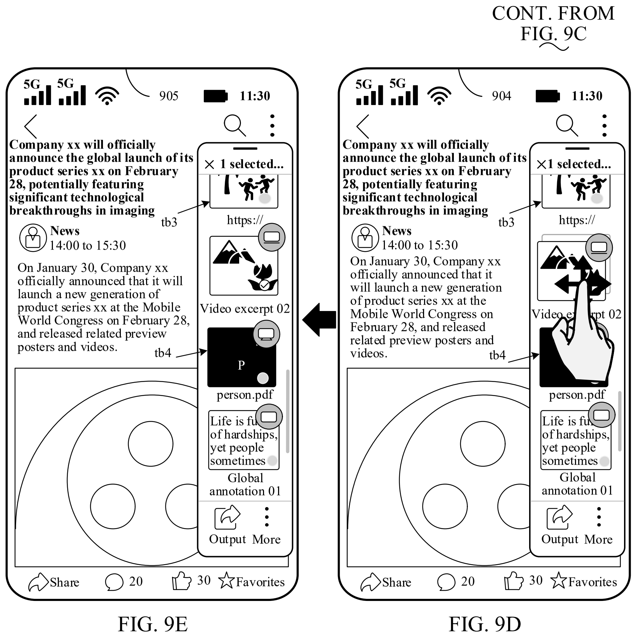

After the mobile phone detects that the first individual icon tb1 is in an icon-selected state, as shown in a display interface 903 in FIG. 9C, in response to a drag operation performed by the user on a foreground icon split from the first individual icon tb1, the foreground icon may be moved to a position in which the foreground icon overlaps a third individual icon tb3 or a fourth individual icon tb4. When the electronic device detects that the foreground icon split from the first individual icon tb1 overlaps a lower half projection of the third individual icon tb3 and/or an upper half projection of the fourth individual icon tb4, as shown in a display interface 904 in FIG. 9D, the mobile phone may move the fourth individual icon tb4 and all icons below the fourth individual icon tb4 downward to respective adjacent next icon positions in sequence. Herein, the background icon split from the first individual icon tb1 is moved with other icons.

Then, the mobile phone may detect that a finger of the user lifts up, to release the foreground icon. In this case, as shown in a display interface 905 in FIG. 9E, the background icon split from the first individual icon tb1 disappears and is no longer displayed, and the first individual icon tb1 is located in an icon position between the third individual icon tb3 and the fourth individual icon tb4. In addition, if there are other icons below before the background icon disappears, the other icons move upward to respective adjacent previous icons in sequence when the background icon disappears.

Optionally, with reference to FIG. 9C and FIG. 9D, when the fourth individual icon tb4 and all icons below the fourth individual icon tb4 move to respective adjacent next icon positions together, an animation effect that the icons are crowded out by the first individual icon tb1 may be presented.

Based on the drag operation, relative to the display interface 901 shown in FIG. 9A, in the display interface 905 shown in FIG. 9E, a position of the first individual icon tb1 changes.

It should be additionally noted that when the mobile phone detects that the foreground icon split from the first individual icon tb1 is dragged by the user to move upward to a position and the user does not release the foreground icon, it may be considered that an icon position displayed in a current organization window is not an icon position to which the user expects to move the icon. Therefore, with reference to FIG. 9C, an icon that is currently displayed in the organization window may be automatically scrolled downward to gradually disappear, and an upper icon that is not displayed previously may be automatically scrolled downward and gradually displayed completely. Scrolling is stopped until the mobile phone completely displays the first icon or the mobile phone detects that a finger of the user lifts up and releases the foreground icon. After the stop, a process in which the released foreground icon crowds out other icons is similar to the foregoing process, and is not described herein again.

It may be understood that the foregoing is an example in which an element is moved by dragging in the floating representation of Global Favorites.

It may be understood that a process of moving an element by dragging when Global Favorites is in the full-screen representation is similar to the foregoing process, and details are not described herein again.

In addition, regardless of whether Global Favorites is in the floating representation or the full-screen representation, a moving control may also be triggered, and an element is moved by triggering the moving control.

In this embodiment of this application, regardless of whether a synchronized element of a trusted device is downloaded to the local end, moving may be performed.

It should be further noted that after the moving, an element moving result included in the floating representation is synchronized to Global Favorites of the trusted device. That is, an element moving status displayed on another trusted device is the same as that of the first device.

### 3. Element renaming (as shown in FIG. 10A to FIG. 10H)

The following describes an example of an element renaming process with reference to the full-screen representation of Global Favorites.

For example, a mobile phone is the first device. Refer to a display interface 1001 shown in FIG. 10A. The interface is a main interface of Global Favorites. The display interface 1001 includes a plurality of individual icons, a name corresponding to each individual icon is further displayed below the individual icon, and a corner mark that can indicate a device source is further displayed at the upper right corner. As shown in FIG. 10A, the display interface 1001 includes a first individual icon tb1, and a corner mark included in the icon indicates that the element is synchronized from a notebook computer.

As shown in FIG. 10B, the mobile phone may detect a touch and hold operation on the first individual icon tb1. In response to the touch and hold operation, in a display interface 1002 shown in FIG. 10C, the first individual icon tb1 may be in an icon-selected state (which may be referred to as a first individual icon tb1' for ease of description). The display interface 1002 may also be referred to as an organization interface.

Optionally, when an icon is in the icon-selected state or an icon-unselected state, the icon may be switched to different colors or a mask layer may be added or removed for distinction. For example, in the icon-selected state, the icon may be switched to gray or a mask layer is added, and in the icon-unselected state, the icon may be switched to white or a mask layer is removed. As shown in FIG. 10B and FIG. 10C, the first individual icon tb1' in the icon-selected state is switched to gray relative to the first individual icon tb1.

Optionally, a circular selection box including a check mark may be further displayed on the lower right side of the first individual icon tb1' in the icon-selected state, and the circular selection box including the check mark also indicates that the current individual icon is in the selected state. A circular selection box including blank content may also be displayed at the lower right corner of another icon. The circular selection box including blank content indicates that the icon is not in the selected state. Other than that, everything else remains unchanged.

Optionally, after the mobile phone detects that the first individual icon tb1 is in the icon-selected state, in a possible implementation, as shown in a display interface 1002 in FIG. 10C, the display interface 1002 may further display a card kp1 including a plurality of options. The plurality of options, for example, may include "Create a new group" and "Rename". In this case, only one individual icon is in the icon-selected state, and one individual icon cannot be grouped. Therefore, use of the option "Create a group" in the card kp1 needs to be restricted, and the option may be set to be in gray, to indicate to the user that a group cannot be created for one individual icon in the icon-selected state. In addition, because the mobile phone detects only one icon in the icon-selected state, the mobile phone may receive an input operation of the user to rename the icon. In this case, use of the option "Rename" in the card kp1 does not need to be restricted, and the option may be set to be in white, to indicate to the user that one icon can be renamed. In another possible implementation, the mobile phone may display a card that includes only the option "Rename".

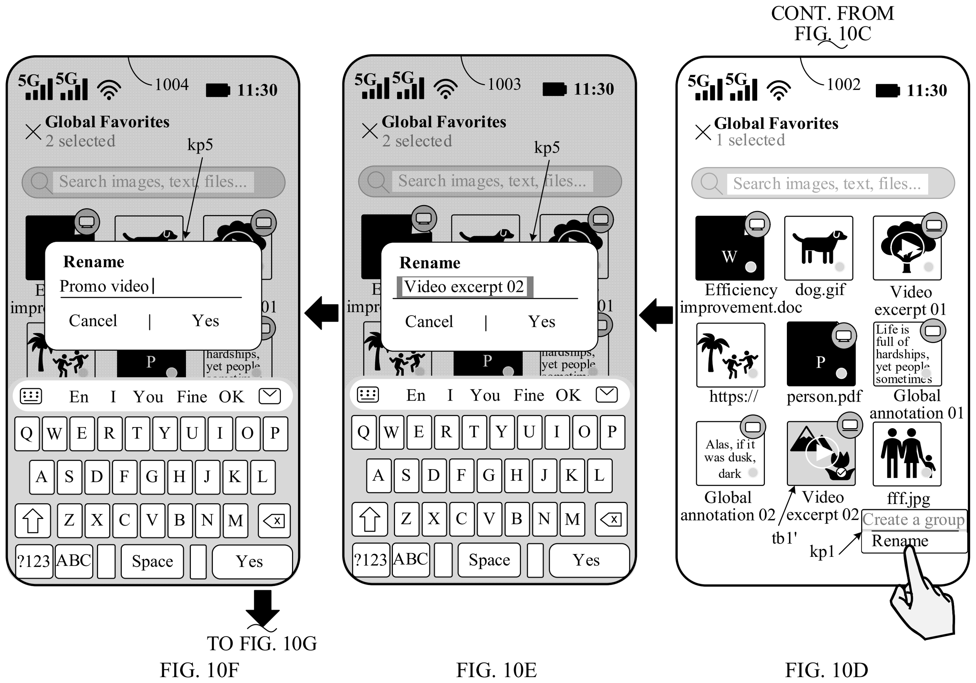

Refer to FIG. 10D. The mobile phone may detect a tap operation on the option "Rename" in the card kp1. In response to the tap operation, the electronic device may display a user interface 1003 shown in FIG. 10E. The display interface 1003 may be formed by four parts, for example, may include a display interface 1002, a mask layer, a soft keyboard, and a card kp5. The mask layer is overlaid on the display interface 1002, to indicate to the user that an operation on the display interface 1002 is restricted in this case. The soft keyboard and the card kp5 are overlaid on the mask layer, and the soft keyboard may be displayed in a lower half part of the display interface 1003, to facilitate receiving an input operation of the user. The card kp5 may be displayed in the middle of the display interface 1004, to facilitate viewing by the user.

Optionally, the card kp5 may include a title "Rename", an input field, a cursor, a cancel button, and an OK button. The input field may display, in response to an input operation of the user, content input by the user. The cursor may indicate a position of text that is being input. The cancel button is used to trigger, in response to a user operation, exit of a rename function. The OK button is used to trigger, in response to a user operation, renaming an icon in an icon-selected state as text input by the user in the input field.

It may be understood that because the original name corresponding to the first individual icon is "Video excerpt 02", when the card kp5 is displayed in the display interface 1003, the original name "Video excerpt 02" is displayed in the input field of the card kp5 by default.

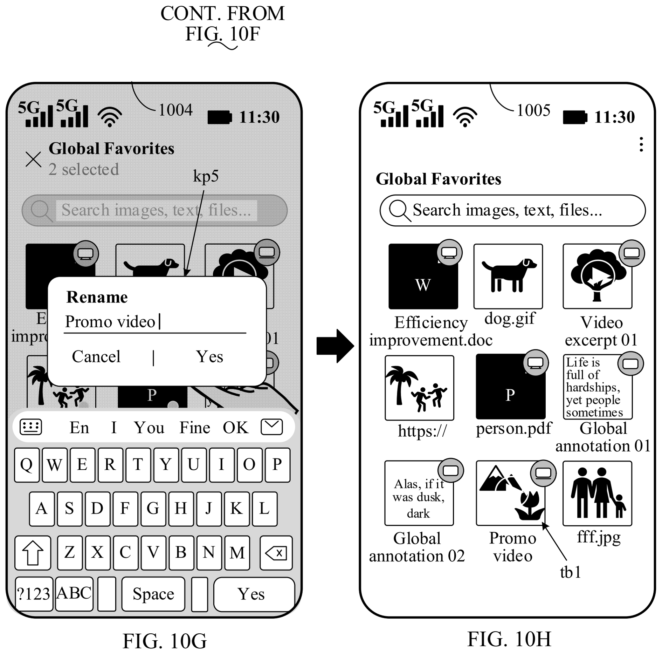

Then, as shown in a display interface 1004 in FIG. 10F, the electronic device may detect an input operation of the user, and display, in the input field, content "Promo element" input by the user. As shown in FIG. 10G, the electronic device may also detect a user operation on the OK button. In response to the user operation, as shown in FIG. 10H, the electronic device may switch to a display interface 1005 for displaying. In the display interface 1005, a name corresponding to the first individual icon tb1 is renamed as "Promo video".

Based on the foregoing rename operation, compared with the display interface 1001 shown in FIG. 10A, in the display interface 1005 shown in FIG. 10H, the name corresponding to the second-to-last icon is changed from "Video excerpt 02" to "Promo video".

It may be understood that the foregoing is an example in which an element is renamed when Global Favorites is in the full-screen representation.

It may be understood that a process of renaming an element when Global Favorites is in the floating representation is similar to the foregoing process, and details are not described herein again.

When Global Favorites is in the full-screen representation or the floating representation, when the first device detects a touch and hold operation on a group icon, the first device may display a card including an option "Rename" in the interface. Based on this, the first device may further detect a user operation on "Rename" in a card, and may rename a group icon in response to the user operation. For details, refer to the foregoing process of renaming an individual icon. Details are not described herein again.

In this embodiment of this application, regardless of whether a synchronized element of a trusted device is downloaded to the local end, renaming may be performed.

It should be further noted that after renaming, an element renaming result included in the floating representation is synchronized to Global Favorites of the trusted device. That is, an element renaming status displayed on another trusted device is the same as that of the first device.

### 4. Element deletion (as shown in FIG. 11A to FIG. 11F)

The following describes an example of an element deletion process with reference to the full-screen representation of Global Favorites.

For example, a mobile phone is the first device. Refer to a display interface 1101 shown in FIG. 11A. The interface is a main interface of Global Favorites. The display interface 1101 includes a plurality of individual icons, a name corresponding to each individual icon is further displayed below the individual icon, and a corner mark that can indicate a device source is further displayed at the upper right corner. The display interface 1101 includes a first individual icon tb1' in the icon-selected state (a corner mark included in the icon indicates that the element is synchronized from a notebook computer), and a plurality of individual icons and a plurality of group icons in the icon-unselected state. The individual icons in the icon-unselected state may include a second individual icon tb2 (no corner mark is included in the icon, to indicate that the element is from the local end, the mobile phone). In addition, a circular selection box including a check mark may be displayed at the lower right corner of the first individual icon tb1' in the icon-selected state, and a circular selection box including blank content may be displayed at the lower right corner of another icon.

As shown in FIG. 11A, the first device may detect a tap operation on the second individual icon tb2. As shown in a display interface 1102 in FIG. 11B, in response to the tap operation, the second individual icon tb2 may be in the icon-selected state (which may be referred to as a second individual icon tb2' for ease of description). A circular select box including a check mark may be displayed in the second individual icon tb2' in the icon-selected state.

In this case, the display interface 1102 may further include a bottom status bar at the bottom, and the bottom status bar may include: share, select all, move, delete, and more controls. The share control is used to trigger output of an element corresponding to an icon in the icon-selected state in a format or share the element to another application, and the select all control is used to trigger all icons to be in the icon-selected state. The move control is used to trigger moving of an element, the delete control is used to trigger deletion of an element, and the more control may trigger more other functions. This is not limited in this application.

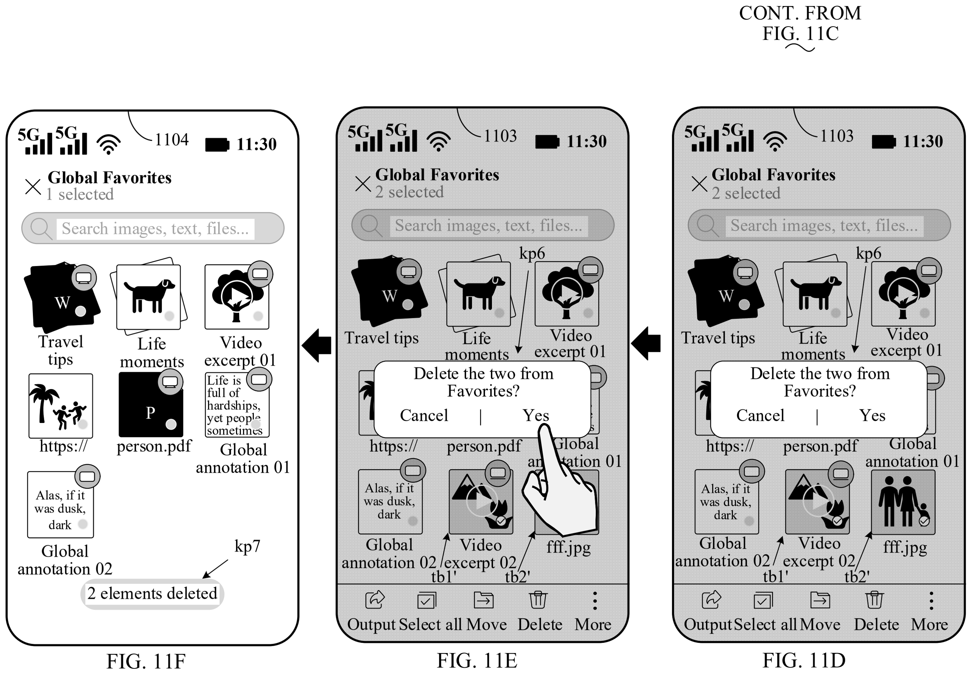

After the first device detects that the first individual icon tb1 and the second individual icon tb2 are in the icon-selected state, as shown in FIG. 11C, the first device may detect a user operation on the delete control. In response to the user operation, the first device may display a user interface 1103 shown in FIG. 11D. The display interface 1103 may be formed by four parts, for example, may include a display interface 1102, a mask layer, a soft keyboard, and a card kp6. The mask layer is overlaid on the display interface 1102, to indicate to the user that an operation on the display interface 1102 is restricted in this case. The soft keyboard and the card kp6 are overlaid on the mask layer, and the soft keyboard may be displayed in a lower half part of the display interface 1103, to facilitate receiving an input operation of the user. The card kp6 may be displayed in the middle of the display interface 1103, to facilitate viewing by the user.

Optionally, the card kp6 may include a prompt "Delete the two from Favorites?", a cancel button, and an OK button. A quantity of prompts may be determined based on a quantity of icons in the icon-selected state. The cancel button is used to trigger exit of a deletion function. The OK button is used to trigger deletion of an element corresponding to an icon in the icon-selected state.

It may be understood that to avoid a misoperation of the user, after an operation on the delete control is detected, the user further needs to be prompted once, to redetermine whether an intention of the user is authentic.

Then, as shown in FIG. 11E, the first device may detect a user operation on the OK button. In response to the user operation, as shown in a display interface 1104 in FIG. 11F, the first individual icon tb1 and the second individual icon tb2 disappear, and respective corresponding elements are deleted.

In addition, optionally, in the display interface 1104, the first device may further display a card kp6 including a prompt, for example, "Two elements deleted", to prompt the user that the deletion operation has been completed.

Based on the foregoing deletion operation, relative to the display interface 1101 shown in FIG. 11A, in the display interface 1104 shown in FIG. 11F, the first to last icon and the second to last icon are removed.

It may be understood that the foregoing is an example in which an element is deleted when Global Favorites is in the full-screen representation.

It may be understood that a process of deleting an element when Global Favorites is in the floating representation is similar to the foregoing process, and details are not described herein again.

When Global Favorites is in the full-screen representation or the floating representation, the first device detects a deletion operation on a group icon in the icon-selected state, or may display a card in the interface to prompt the user whether to delete the group of elements. In response to a tap operation on the OK control in the card, the first device may delete the group of elements corresponding to the group icon. For details, refer to the foregoing process of deleting an element. Details are not described herein again.

In this embodiment of this application, regardless of whether a synchronized element of a trusted device is downloaded to the local end, deleting may be performed.

It should be noted that after the deletion, a remaining element included in the floating representation is synchronized to Global Favorites of the trusted device. That is, the same element is also deleted from another trusted device, and a displayed remaining element is the same as that of the first device.

Optionally, because the deletion operation deletes a same element from all devices in a same trust ring, when the deletion operation is performed, the user may also be prompted that "Delete the two from Favorites? They will be deleted from all devices in a same trust ring". After the deletion, the user may further be prompted that "The element on all devices in the same trust ring has been deleted", and specific text may be changed. This is not limited in this application.

**Finally, the third processing stage (element use and element sharing) is described in detail (as shown in** **FIG. 12A to FIG. 12F** **and** **FIG. 13A to FIG. 13E****).**

### 1. Element use (as shown in FIG. 12A to FIG. 12F)

For example, a mobile phone is the first device. FIG. 12A shows a display interface 1201. The display interface 1201 may include a note content editing interface in the Notes application and the floating representation of Global Favorites. The floating representation may include a plurality of icons (including an individual icon and a group icon), a name corresponding to each icon is further displayed below the icon, and a corner mark that may indicate a device source is further displayed at the upper right corner. As shown in FIG. 12A, the floating representation includes a group icon tb8, a corresponding name "Building.jpg" is further displayed below the group icon, and a corner mark indicating that a device source is a desktop computer is displayed at the upper right corner.

The mobile phone may detect a user operation on the group icon tb8. In response to the user operation, the mobile phone may display a display interface 1202 shown in FIG. 12B. In the display interface 1202, the floating representation of the Global Favorites application may be switched to an organization window, and the group icon tb8 may be in the icon-selected state. In this case, in the organization window, the group icon tb8 in the icon-selected state may be split into two group icons (a foreground icon and a background icon) for displaying. For specific introduction of the foreground icon, the background icon, and the group icon in the icon-selected state and a group icon in the icon-unselected state, refer to the foregoing content. Details are not described herein again. As shown in FIG. 12B, a close control may be further displayed at the upper left corner of the organization window. The close control is used to trigger exit of an organization function of the floating representation.

Then, the electronic device may further detect a user operation on the group icon tb8. In response to the user operation, when detecting that the group icon moves to an edge position of the floating representation of Global Favorites, the electronic device may display a display interface 1203 shown in FIG. 12C. Relative to the display interface 1202, in the display interface 1203, the foreground icon corresponding to the group icon tb8 moves to an edge position of the floating representation of Global Favorites with the user operation. In this case, the background icon corresponding to the group icon tb8 disappears, and positions of other icons in the floating representation are automatically arranged. In addition, a mark "+" may be displayed at the upper left corner of the foreground icon corresponding to the group icon tb8, to prompt the user that an element corresponding to the group icon tb8 may be added to note content included in the display interface 1203. It may be understood that a mark is added only for prompting, and cannot be triggered.

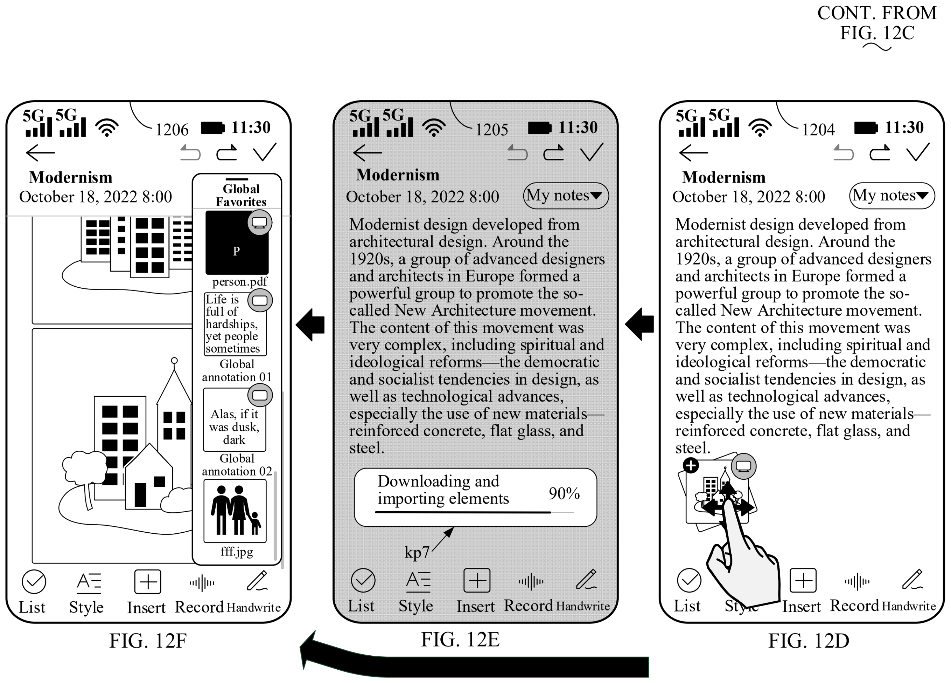

Then, when detecting that the foreground icon corresponding to the group icon tb8 moves out of the floating representation of Global Favorites, the electronic device may display a display interface 1204 shown in FIG. 12D. Relative to the display interface 1203, in the display interface 1204, the foreground icon corresponding to the group icon tb8 moves out of the floating representation of Global Favorites and moves to a position of the note content included in the display interface with the user operation. In this case, the floating representation of Global Favorites is hidden and not displayed.

Optionally, in a process of switching from the display interface 1203 to the display interface 1204, the floating representation of Global Favorites may disappear with animation effect of retracting from left to right.

Optionally, when an image has been downloaded to the mobile phone, and the mobile phone detects that the user lifts up a finger and releases the foreground icon corresponding to the group icon tb8, as shown in a display interface 1206 in FIG. 12F, two images indicated by the group icon tb8 may be sequentially added to a release position in the notebook content in a sequence of icons, and displayed in a size suitable for the notebook content. However, when the image is not downloaded to the mobile phone, and the mobile phone detects that the user lifts up a finger and releases the foreground icon corresponding to the group icon tb8, the mobile phone may first download and then import the image. A display interface 1205 shown in FIG. 12E may be displayed in a downloading process. Relative to the display interface 1204, in the display interface 1205, the group icon tb8 is hidden, a mask layer is overlaid on the note content, and a card kp7 is overlaid on the mask layer. The card kp7 may display text "Element downloading and importing" and a download progress bar. After the downloading is completed, the display interface 1205 is switched to the display interface 1206.

Optionally, after the element is imported, the floating representation of Global Favorites may be further displayed in the display interface 1206 again. It may be understood that because the element corresponding to the group icon tb8 has been added to the note content, relative to the floating representation in the display interface 1201, the floating representation in the display interface 1206 no longer includes the group icon tb8, and other icon content remains unchanged.

It may be understood that the foregoing is an example of synchronizing an element across ends in the floating representation of Global Favorites.

### 2. Element sharing (as shown in FIG. 13A to FIG. 13E)

A display interface 1301 shown in FIG. 13A is similar to a display interface 1102 shown in FIG. 11B. Details are not described herein again. When Global Favorites is in the full-screen representation, for a process of selecting the individual icon tb3 and the individual icon tb4, refer to the foregoing descriptions for FIG. 11A and FIG. 11B. Details are not described herein again. A corner mark included in the individual icon tb3 indicates that the element is synchronized from a notebook computer, and no corner mark is included in the individual icon tb4, to indicate that the element is from the local end, the mobile phone.

After the electronic device detects that the individual icon tb3 and the individual icon tb4 are in the icon-selected state (which may be referred to as an individual icon tb3 'and an individual icon tb4' for ease of description), as shown in FIG. 13B, the electronic device may detect a user operation on a share control. In response to the user operation, because elements indicated by the individual icon tb3' and the individual icon tb4' are both pictures, when sharing a plurality of picture elements, the electronic device may switch to a display interface 1302 shown in FIG. 13B for displaying. The display interface 1302 may include three parts, for example, may include the original display interface 1302, a mask layer, and kp8. The mask layer is overlaid on the display interface 1302, to indicate to the user that an operation on the display interface 1302 is restricted in this case. The card kp8 is overlaid on the mask layer and is displayed on a lower half part of the display interface 1303, to facilitate receiving an input operation of the user.

Optionally, the card kp8 may include, but is not limited to, two options "Merge into a long picture to share" and "Share separately". The two options provide the user with a choice from a dimension of a quantity of to-be-shared pictures. "Merge into a long picture to share" may be splicing picture elements corresponding to a plurality of icons in the icon-selected state, and switching the elements to a long picture to share. "Share separately" may be that image elements corresponding to a plurality of icons in the icon-selected state are not spliced, and are separately shared.

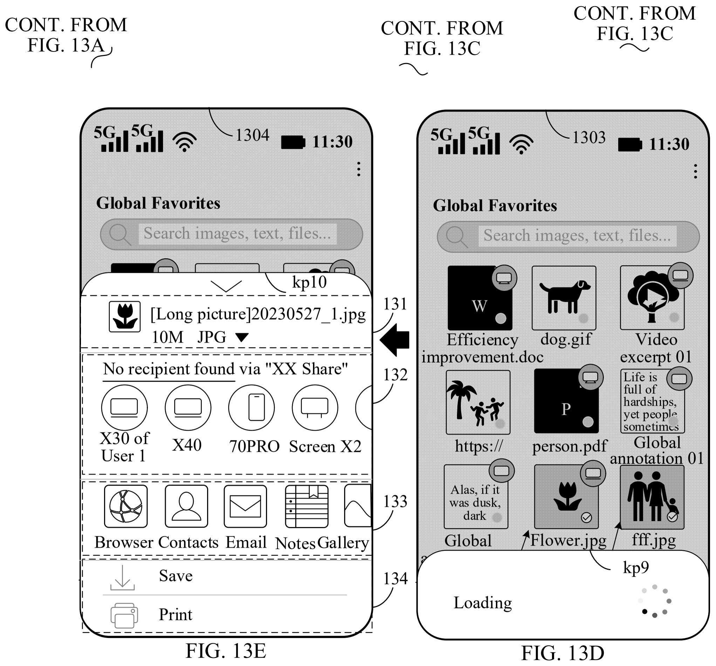

As shown in FIG. 13C, the electronic device may detect a tap operation on the option "Merge into a long picture to share". Optionally, in a possible implementation, in response to the tap operation, the electronic device may display a display interface 1304 as shown in FIG. 13E. Relative to the display interface 1302, in the display interface 1304, only the card kp8 is switched to a card kp10, and other content remains unchanged.

In another possible implementation, in response to the tap operation on the option "Merge into a long picture to share", the electronic device may first display the display interface 1303 shown in FIG. 13D, and then display the display interface 1304 shown in FIG. 13E. Relative to the display interface 1302, in the display interface 1303, only the card kp8 is switched to a card kp9, and other content remains unchanged. The card kp9 may include text "Loading", and is used to prompt the user that long picture merging is being performed. It may be understood that picture elements are usually large in size, and it takes longer time to merge picture elements into a long picture. Therefore, to avoid that the user mistakenly considers that the electronic device has not performed processing, the feedback may be added for prompting.

After the long picture is successfully merged, the electronic device may display the display interface 1304 as shown in FIG. 13E. The card kp10 included in the display interface 1304 may include four display areas sequentially from top to bottom, for example, a first display area 131, a second display area 132, a third display area 133, and a fourth display area 134.

Optionally, the first display area 131 may display an icon corresponding to the merged long picture, text "Long picture", a name of the long picture, a data size of the long picture, and a format of the long picture. A small triangle may be further displayed beside the format of the long picture, and may be referred to as a drop-down menu control, used to display a drop-down menu and provide more picture format options for the user to select. In other words, the picture format of the long picture may be switched by selecting by the user.

Optionally, the second display area 132 may include device icons of a plurality of devices that have established trusted device connections to the local device. A connection manner is not limited in this application. The plurality of device icons may be used to trigger sending of the merged long picture to a corresponding device. For example, the plurality of device icons may include "X30 of User 1", and subsequently, in response to a tap operation on the device icon, the electronic device may send the merged long picture to a device indicated by "X30 of User 1".

Optionally, the third display area 133 may include a plurality of application icons, and the plurality of application icons may be used to trigger sharing of the merged long picture to a corresponding application. For example, the plurality of application icons may include Browser, Contacts, Email, Notes, and Gallery. Subsequently, in response to a tap operation on an icon of the Notes application, the electronic device may send the merged long picture to the Notes application.

Optionally, the fourth display area 134 may include two options "Save" and "Print". "Save" may be used to save the merged long picture to the local device without sharing. "Print" may be used to send the merged long picture to a connected printer for printing.

It may be understood that the foregoing is an example in which two elements with different device source information but of a same type are shared when Global Favorites is in the full-screen representation.

It may be understood that a process of selecting a plurality of elements with same or different device source information and a plurality of elements of a same type or different types for sharing is similar to the foregoing process. Details are not described herein again.

It may be understood that a process of sharing a plurality of elements when Global Favorites is in the floating representation is similar to the foregoing process. For details, refer to the foregoing descriptions. Details are not described herein again.

It should be additionally noted that if two or more elements of a document type are selected for sharing, and a document format is PDF, in response to a tap operation on the share control, the electronic device may display a card kp8. In this case, the card kp8 may include, but is not limited to, two options "Merge into PDF to share" and "Share separately". The two options provide the user with a choice from a dimension of a quantity of to-be-shared elements. Correspondingly, content in a first display area in a card kp10 may display an icon corresponding to the merged PDF, text "Merge", a name of the merged PDF (a name of the first document to be merged may be selected by default), a data size of the merged PDF, and a format of the merged document, such as PDF. A small triangle may be further displayed beside the format of the document, and may be referred to as a drop-down menu control, used to display a drop-down menu and provide more document format options for the user to select. In other words, the user makes a selection, a format of the merged document may be switched.

It should be additionally noted that if only one element (regardless of a type) is selected, the electronic device may directly switch from the display interface 1301 shown in FIG. 13A to the display interface 1302 shown in FIG. 13E without displaying the card kp8. In this case, the display interface 1302 may not include content of the first display area 131.

Optionally, a bottom status bar in the display interface 1301 shown in FIG. 13A may further include a merge control. When an icon corresponding to one element is in the icon-selected state, the merge control may be set to be in gray, and use of the merge control is restricted. When icons corresponding to a plurality of elements are in the icon-selected state, the merge control may be restored for use. Therefore, in response to a tap operation on the merge control, the plurality of elements in the icon-selected state may be merged, and an element generated after merging may be automatically collected into Global Favorites by default.

The sharing method provided in this application combines a plurality of sharing requirements such as quantity, format, device, application, save, and print, and provides a user with choices from a quantity dimension, a format dimension, a device dimension, and an application dimension, to satisfy various requirements of the user and improve user experience.

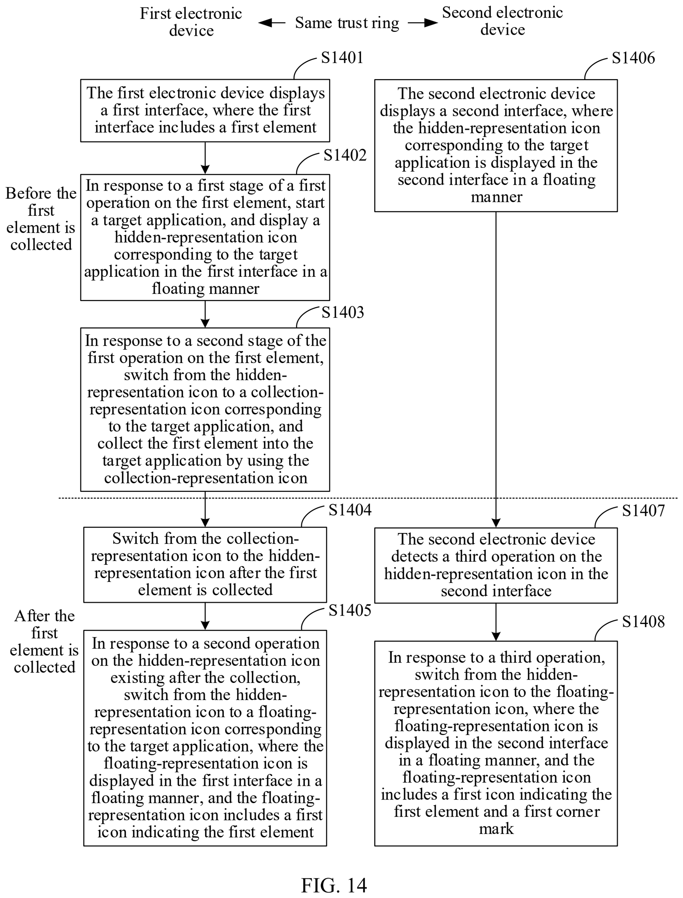

**FIG. 14** **is an example flowchart of an element processing method according to an embodiment of this application.**

In some possible cases, for an example process involved when an electronic device processes an element, refer to the following descriptions of step S1401 to step S1407.

S1401: An electronic device displays a first interface, where the first interface includes a first element.

It may be understood that the first interface may be an interface (for example, a main interface of a news application) that is related in the foregoing content and in which text content is displayed, or the first interface may be an interface (for example, a main interface of a news application) that is related in the foregoing content and in which a picture is displayed.

In a possible implementation, the first interface may be the display interface 301 shown in FIG. 3A in the foregoing content, and the first element is the text a1. In this case, the first element is of a text type.

S1402: In response to a first stage of a first operation on the first element, start a target application, and display a hidden-representation icon corresponding to the target application in a first interface in a floating manner.

It may be understood that the target application is the foregoing Global Favorites application.

It may be understood that the first interface displaying the hidden-representation icon corresponding to the target application may be an interface in which the text is in a text-selected state and the hidden-representation icon of Global Favorites appears in the foregoing. Alternatively, the first interface displaying the hidden-representation icon corresponding to the target application may be an interface in which the picture is in a picture-selected state and the hidden-representation icon of Global Favorites appears in the foregoing.

In a possible implementation, the first stage of the first operation may be a touch and hold operation shown in FIG. 3B, and a second interface may be the display interface 302 shown in FIG. 3B.

S1403: In response to a second stage of the first operation on the first element, switch from the hidden-representation icon to a collection-representation icon corresponding to the target application, and collect the first element into the target application by using the collection-representation icon.

In a possible implementation, the second stage of the first operation may be the drag operation or the throw action shown in FIG. 3C and FIG. 3D.

S1404: Switch from the collection-representation icon to the hidden-representation icon after the first element is collected.

S1405: In response to a second operation on the hidden-representation icon existing after the collection, switch from the hidden-representation icon to a floating-representation icon corresponding to the target application, where the floating-representation icon is displayed in the first interface in a floating manner, and the floating-representation icon includes a first icon indicating the first element.

In a possible implementation, the second operation may be the tap operation shown in FIG. 3G, and the first icon may be the icon 3071 shown in FIG. 3H.

S1406: Before the first element is collected, a second electronic device displays a second interface, where the hidden-representation icon corresponding to the target application is displayed in the second interface in a floating manner.

It may be understood that, in this case, the Global Favorites application is already started, and the hidden-representation icon is always displayed.

In a possible implementation, the second interface may be the display interface 308 shown in FIG. 3I.

S1407: After the first element is collected, the second electronic device detects a third operation on the hidden-representation icon in the second interface.

In a possible implementation, the third operation may be the top operation shown in FIG. 3I.

S1408: In the second electronic device, in response to the third operation, switch from the hidden-representation icon to the floating-representation icon, where the floating-representation icon is displayed in the second interface in a floating manner, and the floating-representation icon includes the first icon indicating the first element and a first corner mark.

In a possible implementation, the first icon and the first corner mark may be the icon 3091 and the corner mark at the upper right corner of the icon 3091 shown in 3J.

For related content related to step S1401 to step S1408, refer to the descriptions of related content of collecting text in a collection stage and synchronously displaying the text in the floating-representation icon on a tablet computer in the foregoing. Details are not described herein again. For an example interface in step S1401 to step S1408, refer to descriptions about FIG. 3A to FIG. 3J and related content in FIG. 3A to FIG. 3J in the foregoing. Details are not described herein again.

**The following describes an apparatus in embodiments of this application.**

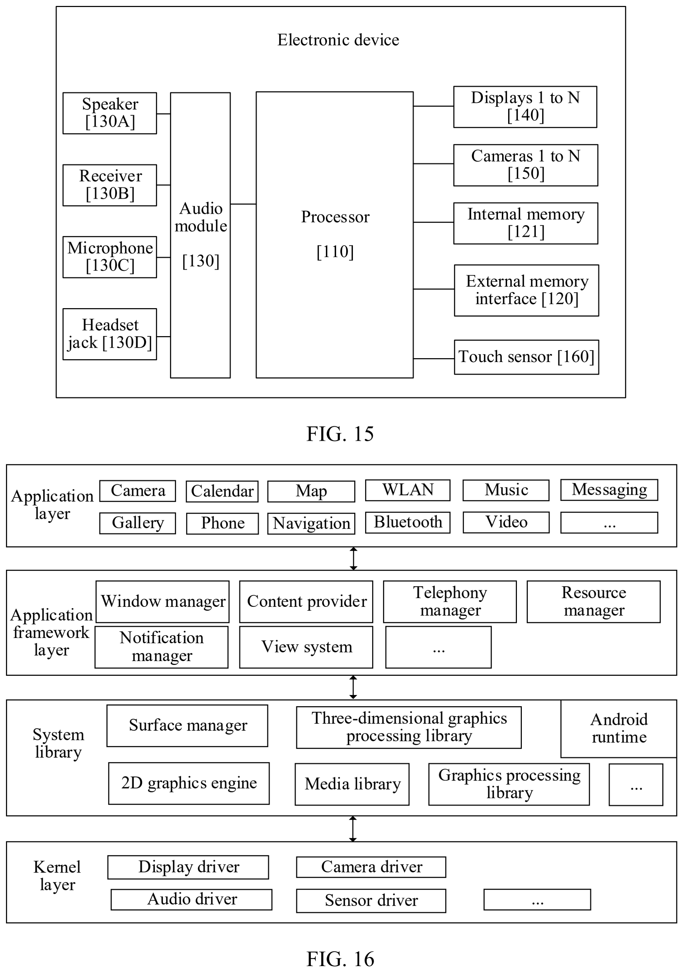

FIG. 15 is a diagram of a hardware structure of an electronic device according to an embodiment of this application.

The electronic device may include a processor 110, an external memory interface 120, an internal memory 121, an audio module 130, a speaker 130A, a receiver 130B, a microphone 130C, a headset jack 130D, a display 140, a camera 150, and a touch sensor 160.

The structure shown in this embodiment of the present invention does not constitute a specific limitation on the electronic device. In some other embodiments of this application, the electronic device may include more or fewer components than those shown in the figure, some components may be combined, some components may be split, or different arrangements may be used. The components shown in the figure may be implemented by hardware, software, or a combination of software and hardware. An interface connection relationship between the modules illustrated in this embodiment of the present invention is merely an example for description, and does not constitute a limitation on a structure of the electronic device.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). A memory may be further disposed in the processor 110, to store instructions and data.

The electronic device implements a display function through the GPU, the display 140, and the application processor.

The GPU is an image processing microprocessor, and is connected to the display 140 and the application processor. The GPU is configured to: perform mathematical and geometric computation, and render an image. The processor 110 may include one or more GPUs that execute program instructions to generate or change display information. The display 140 is configured to display an image, a video, and the like. In some embodiments, the electronic device may include 1 or N displays 140, where N is a positive integer greater than 1.

In this embodiment of this application, a capability of the electronic device to display user interfaces shown in FIG. 3A to FIG. 3J, FIG. 4A to FIG. 4I, FIG. 5A to FIG. 5H, FIG. 6A to FIG. 6D, FIG. 7A to FIG. 7I, FIG. 8A to FIG. 8F, FIG. 9A to FIG. 9E, FIG. 10A to FIG. 10H, FIG. 11A to FIG. 11F, FIG. 12A to FIG. 12F, and FIG. 13A to FIG. 13E relies on a display function provided by the foregoing GPU, the display 140, and the application processor.

The camera 150 is configured to capture a still image or a video. The ISP is configured to process data fed back by the camera 150. Light is transferred to a camera photosensitive element through a lens. An optical signal is converted into an electrical signal. The camera photosensitive element transfers the electrical signal to the ISP for processing, to convert the electrical signal into an image visible to naked eyes. The electronic device may include one or N cameras 150, where N is a positive integer greater than 1. The video codec is configured to: compress or decompress a digital video. The electronic device may support one or more video codecs. In this way, the electronic device can play or record videos in a plurality of encoding formats, such as a moving picture experts group (moving picture experts group, MPEG)1, MPEG2, MPEG3, and MPEG4.

The internal memory 121 may include one or more random access memories (random access memories, RAMs) and one or more non-volatile memories (non-volatile memories, NVMs). The random access memory may be directly read and written by the processor 110, may be configured to store executable programs (for example, device instructions) of an operating system or other running programs, or may be configured to store data of users and applications. The non-volatile memory may also store the executable programs, the data of the users and the applications, and the like, and may be loaded into the random access memory in advance for the processor 110 to perform direct reading and writing.

In this embodiment of this application, code for implementing the information processing method in embodiments of this application may be stored in the non-volatile memory. When running the camera application, the electronic device may load the executable code stored in the non-volatile memory into the random access memory.

The external memory interface 120 may be configured to connect to an external non-volatile memory, to expand a storage capability of the electronic device.

The electronic device may implement an audio function by using the audio module 130, the speaker 130A, the receiver 130B, the microphone 130C, the headset jack 130D, the application processor, and the like.

The audio module 130 is configured to convert digital audio information into an analog audio signal for output, and is also configured to convert an analog audio input into a digital audio signal. The speaker 130A, also referred to as a "loudspeaker", is configured to convert an audio electrical signal into a sound signal. The receiver 130B, also referred to as a "phone receiver", is configured to convert an audio electrical signal into a sound signal. The microphone 130C, also referred to as a "mouthpiece" or a "megaphone", is configured to convert a sound signal into an electrical signal. The headset jack 130D is configured to connect to a wired headset.

In this embodiment of this application, when enabling a voice-to-text conversion function, the electronic device may enable the microphone 130C to collect a sound signal, and convert the sound signal into corresponding text.

The touch sensor 160 is also referred to as a "touch device". The touch sensor 160 may be disposed in the display 140, and the touch sensor 160 and the display 140 constitute a "touchscreen". The touch sensor 160 is configured to detect a touch operation performed on or near the touch sensor. The touch sensor may transmit the detected touch operation to the application processor, to determine a touch event type. A visual output related to the touch operation may be provided by using the display 140. In some other embodiments, the touch sensor 160 may alternatively be disposed on a surface of the electronic device at a position different from that of the display 140.

In embodiments of this application, the electronic device may detect operations such as tap and swipe performed by a user on the display 140 by using the touch sensor 160, to implement the cross-end interaction methods shown in FIG. 3A to FIG. 3J, FIG. 4A to FIG. 4I, FIG. 5A to FIG. 5H, FIG. 6A to FIG. 6D, FIG. 7A to FIG. 7I, FIG. 8A to FIG. 8F, FIG. 9A to FIG. 9E, FIG. 10A to FIG. 10H, FIG. 11A to FIG. 11F, FIG. 12A to FIG. 12F, and FIG. 13A to FIG. 13E.

FIG. 16 is a diagram of a software structure of an electronic device according to an embodiment of this application.

The software system of the electronic device may use a layered architecture, an event-driven architecture, a microkernel architecture, a microservice architecture, or a cloud architecture. In embodiments of this application, a software structure of the electronic device is described by using an Android (Android) system with a layered architecture as an example.

It should be understood that in a layered architecture, software may be divided into a plurality of layers, and each layer has a clear role and task. The layers may communicate with each other through a software interface.

As shown in FIG. 16, the Android system may be divided into four layers: an application layer, an application framework layer, an Android Runtime (Android Runtime) and system library, and a kernel layer from top to bottom. The application layer may include a series of application packages.

As shown in FIG. 16, an application package may include applications such as Camera, Gallery, Calendar, Calls, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 16, the application framework layer may include a window manager, a content provider, a view system, a phone manager, a resource manager, a notification manager, and the like.

A window manager is configured to manage a window application. The window manager may obtain a size of the display, determine whether there is a status bar, perform screen locking, take a screenshot, and the like.

The content provider is configured to store and obtain data, and enable the data to be accessed by an application. The data may include a video, an image, audio, calls that are made and answered, a browsing history and a bookmark, an address book, and the like.

The view system includes visual controls such as a control for displaying text and a control for displaying an image. The view system may be configured to create an application. A display interface may include one or more views. For example, a display interface including an SMS message notification icon may include a text display view and an image display view.

The phone manager is configured to provide a communication function of the electronic device, for example, call status management (including connected, hang-up, and the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or scroll bar text, for example, a notification of an application that is run in the background, or may be a notification that appears on the screen in a form of a dialog window. For example, text information is prompted in the status bar, an alert tone is made, the electronic device vibrates, or an indicator blinks.

The Android runtime includes a kernel library and a virtual machine. The Android runtime is responsible for scheduling and managing the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library includes a plurality of functional modules, for example, a surface manager (surface manager), media libraries (Media Libraries), a three-dimensional graphics processing library (for example, an open graphics library for embedded systems (open graphics library for embedded systems, OpenGL ES) and a 2D graphics engine (for example, a skia graphics library (skia graphics library, SGL)).

The surface manager is configured to: manage a display subsystem, and provide fusion of 2D and 3D layers for a plurality of applications.

The media library supports playback and recording of audio in a plurality of formats, playback and recording of videos in a plurality of formats, and still image files. The media library may support a plurality of audio and video coding formats, for example, MPEG4, H.264, moving picture experts group audio layer III (moving picture experts group audio layer III, MP3), advanced audio coding (advanced audio coding, AAC), adaptive multi-rate (adaptive multi-rate, AMR), joint photographic experts group (joint photographic experts group, JPG), and portable network graphics (portable network graphics, PNG).

The three-dimensional graphics processing library is configured to implement three-dimensional graphics drawing, image rendering, synthesis, layer processing, and the like.

The 2D graphics engine is a drawing engine for 2D drawings.

The core layer is a layer between hardware and software. The kernel layer includes at least a display driver, a camera driver, an audio driver, and a sensor driver.

In embodiments of this application, the electronic device may use the foregoing software system to implement the cross-end interaction methods shown in FIG. 3A to FIG. 3J, FIG. 4A to FIG. 4I, FIG. 5A to FIG. 5H, FIG. 6A to FIG. 6D, FIG. 7A to FIG. 7I, FIG. 8A to FIG. 8F, FIG. 9A to FIG. 9E, FIG. 10A to FIG. 10H, FIG. 11A to FIG. 11F, FIG. 12A to FIG. 12F, and FIG. 13A to FIG. 13E.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments, or equivalent replacements may be made to the part of the technical features, without departing from the scope of the technical solutions of embodiments of this application.

## Claims

1. A cross-end interaction method, applied to a cross-end interaction system comprising a first electronic device and a second electronic device, wherein the method comprises:
displaying, by the first electronic device, a first interface, wherein the first interface comprises a first element;
in the first electronic device, in response to a first stage of a first operation on the first element, starting a target application, and displaying a hidden-representation icon corresponding to the target application in the first interface in a floating manner;
in the first electronic device, in response to a second stage of the first operation on the first element, switching from the hidden-representation icon to a collection-representation icon corresponding to the target application, and collecting the first element into the target application by using the collection-representation icon, wherein a size of the hidden-representation icon is smaller than a size of the collection-representation icon, the collection-representation icon is displayed in the first interface in a floating manner, and the first stage and the second stage are continuous;
in the first electronic device, switching from the collection-representation icon to the hidden-representation icon after the first element is collected;
in the first electronic device, in response to a second operation on the hidden-representation icon existing after the collection, switching from the hidden-representation icon to a floating-representation icon corresponding to the target application, wherein the floating-representation icon is displayed in the first interface in a floating manner, and the floating-representation icon comprises a first icon indicating the first element;
displaying, by the second electronic device, a second interface before the first element is collected, wherein the hidden-representation icon corresponding to the target application is displayed in the second interface in a floating manner;
detecting, by the second electronic device, a third operation on the hidden-representation icon in the second interface after the first element is collected; and
in the second electronic device, in response to the third operation, switching from the hidden-representation icon to the floating-representation icon, wherein the floating-representation icon is displayed in the second interface in a floating manner, the floating-representation icon comprises the first icon indicating the first element and a first corner mark, and the first corner mark indicates that the first element is from an electronic device other than the second electronic device.

2. The method according to claim 1, wherein the floating-representation icon in the second electronic device comprises a first control, and after the floating-representation icon is displayed in the second interface in a floating manner, the method further comprises:
in the second electronic device, in response to a fourth operation on the first control, displaying a first card in the second interface in a floating manner, wherein the first card comprises at least a plurality of invokable service options corresponding to the first electronic device, and the invokable service options comprise a shooting option;
in the second electronic device, in response to a fifth operation on the shooting option, sending, by the second electronic device, a first instruction to the first electronic device, wherein the first instruction instructs to start a camera application of the first electronic device;
after receiving the first instruction, starting, by the first electronic device, the camera application and displaying a shooting interface; and
in the second electronic device, switching from the first card to a multi-screen collaboration interface, wherein the multi-screen collaboration interface is displayed in the second interface in a floating manner, and the multi-screen collaboration interface comprises the shooting interface corresponding to the first electronic device.

3. The method according to claim 2, wherein the shooting interface comprises a shooting control, and the method further comprises:
in the second electronic device, in response to a sixth operation on the shooting control comprised in the multi-screen collaboration interface, sending a second instruction to the first electronic device, wherein the second instruction instructs to perform shooting;
after receiving the second instruction, shooting, by the first electronic device, and collecting a captured second element into the target application of the first electronic device, wherein
after the second element is collected, the floating-representation icon of the first electronic device comprises a second icon indicating the second element; and
sending, by the first electronic device, the second icon and a second corner mark to the second electronic device, wherein the second corner mark indicates that the second element is from an electronic device other than the second electronic device.

4. The method according to claim 2 or 3, wherein the invokable service options further comprise an audio recording option, and the method further comprises:
in the second electronic device, in response to a seventh operation on the audio recording option, sending, by the second electronic device, a third instruction to the first electronic device, wherein the third instruction instructs to start a Recorder application of the first electronic device;
starting, by the first electronic device, the Recorder application, and displaying an audio recording interface after receiving the third instruction; and
in the second electronic device, switching from the first card to the multi-screen collaboration interface, wherein the multi-screen collaboration interface is displayed in the second interface in a floating manner, and the multi-screen collaboration interface comprises the audio recording interface corresponding to the first electronic device.

5. The method according to claim 4, wherein starting, by the first electronic device, the Recorder application, and displaying the audio recording interface after receiving the third instruction comprises:
displaying, by the first electronic device, a lock screen; and
in the first electronic device, in response to an unlock operation on the lock screen, starting the Recorder application and displaying the audio recording interface; and
that in the second electronic device, the multi-screen collaboration interface comprises the audio recording interface corresponding to the first electronic device comprises:
when the first electronic device displays the lock screen, the multi-screen collaboration interface in the second electronic device displays a lock screen prompt interface, wherein the lock screen prompt interface is used to prompt that the first electronic device is locked; and
when the first electronic device starts the Recorder application and displays the audio recording interface, in the second electronic device, switching from the lock screen prompt interface comprised in the multi-screen collaboration interface to the audio recording interface corresponding to the first electronic device.

6. The method according to claim 4 or 5, wherein the audio recording interface comprises an audio recording control, and the method further comprises:
in the second electronic device, in response to an eighth operation on the audio recording control comprised in the multi-screen collaboration interface, sending a fourth instruction to the first electronic device, wherein the fourth instruction instructs to perform audio recording;
after receiving the fourth instruction, performing, by the first electronic device, audio recording, and collecting a recorded third element into the target application of the first electronic device, wherein
after the third element is collected, the floating-representation icon of the first electronic device comprises a third icon indicating the third element; and
sending, by the first electronic device, the third icon and a third corner mark to the second electronic device, wherein the third corner mark indicates that the third element is from an electronic device other than the second electronic device.

7. The method according to any one of claims 2 to 6, wherein the invokable service information further comprises a handwriting option, and the method further comprises:
in the second electronic device, in response to a ninth operation on the handwriting option, sending, by the second electronic device, a fifth instruction to the first electronic device, wherein the fifth instruction instructs to start a Notes application of the first electronic device;
starting, by the first electronic device, the Notes application and displaying a handwriting input interface after receiving the fifth instruction; and
in the second electronic device, switching from the first card to the multi-screen collaboration interface, wherein the multi-screen collaboration interface is displayed in the second interface in a floating manner, and the multi-screen collaboration interface comprises the handwriting input interface corresponding to the first electronic device.

8. The method according to claim 7, wherein starting, by the first electronic device, the Notes application and displaying the handwriting input interface after receiving the fifth instruction comprises:
displaying, by the first electronic device, a lock screen; and
in the first electronic device, in response to an unlock operation on the lock screen, starting, by the first electronic device, the Notes application and displaying the handwriting input interface; and
that in the second electronic device, the multi-screen collaboration interface comprises the handwriting input interface corresponding to the first electronic device comprises:
when the first electronic device displays the lock screen, the multi-screen collaboration interface in the second electronic device displays a lock screen prompt interface, wherein the lock screen prompt interface is used to prompt that the first electronic device is locked; and
when the first electronic device starts the Notes application and displays the handwriting input interface, in the second electronic device, switching from the lock screen prompt interface comprised in the multi-screen collaboration interface to the handwriting input interface corresponding to the first electronic device.

9. The method according to claim 7 or 8, wherein the handwriting input interface comprises a handwriting input area and a complete control, and the method further comprises:
in the second electronic device, in response to an input operation on the handwriting input area comprised in the multi-screen collaboration interface, sending handwritten input content to the first electronic device;
in response to a tenth operation on the complete control, sending a sixth instruction to the first electronic device, wherein the sixth instruction instructs to complete a handwriting input;
after receiving the sixth instruction, collecting, by the first electronic device, a fourth element obtained based on the received handwritten input content into the target application of the first electronic device, wherein
after the fourth element is collected, the floating-representation icon of the first electronic device comprises a fourth icon indicating the fourth element; and
sending, by the first electronic device, the fourth icon and a fourth corner mark to the second electronic device, wherein the fourth corner mark indicates that the fourth element is from an electronic device other than the second electronic device.

10. The method according to claim 3, 6, or 9, wherein the multi-screen collaboration interface further comprises an exit control, and the method further comprises:
in the second electronic device, in response to an eleventh operation on the exit control, closing the multi-screen collaboration interface, and switching to the floating-representation icon, wherein the floating-representation icon is displayed in the second interface in a floating manner, wherein
the floating-representation icon of the second electronic device comprises the second icon and the second corner mark, or comprises the third icon and the third corner mark, or comprises the fourth icon and the fourth corner mark.

11. The method according to any one of claims 1 to 10, wherein the method further comprises:
before the first element is collected, displaying, by the second electronic device, the second interface, wherein the second interface comprises a sidebar displayed in a floating manner, and the sidebar comprises an application icon corresponding to the target application;
after the first element is collected, detecting, by the second electronic device, a twelfth operation on the application icon;
in the second electronic device, in response to the twelfth operation, starting the target application, and switching from the sidebar to the floating-representation icon, wherein the floating-representation icon is displayed in the second interface in a floating manner, and the floating-representation icon comprises the first icon and the first corner mark, wherein
when the second electronic device starts the target application for the first time, the floating-representation icon further comprises a prompt card, and the prompt card is used to prompt that the first element is from an electronic device other than the second electronic device; and
in the second electronic device, in response to a thirteenth operation on a top bar control comprised in the floating-representation icon, switching from the floating-representation icon to the hidden-representation icon, wherein the hidden-representation icon is displayed in the second interface in a floating manner.

12. The method according to claim 3 or 10, wherein the method further comprises:
displaying, by the second electronic device, a third interface, wherein the third interface comprises the floating-representation icon displayed in a floating manner, and the floating-representation icon comprises the first icon, the first corner mark, the second icon, and the second corner mark;
in the second electronic device, in response to a fourteenth operation, switching from the first icon and the second icon to a first group icon after the first icon is moved to a position of the second icon or after the second icon is moved to a position of the first icon; and
in the first electronic device, synchronously switching from the first icon and the second icon to the first group icon.

13. The method according to claim 3, 10, or 12, wherein the method further comprises:
displaying, by the second electronic device, a fourth interface, wherein the fourth interface comprises the floating-representation icon displayed in a floating manner, and the floating-representation icon comprises the first icon, the first corner mark, the second icon, and the second corner mark;
in the second electronic device, in response to a fifteenth operation, moving a position of the first icon or the second icon in the floating-representation icon; and
in the first electronic device, synchronously moving a position of the first icon or the second icon.

14. The method according to any one of claims 3 to 13, wherein the method further comprises:
displaying, by the second electronic device, a full-screen interface corresponding to the target application, wherein the first icon comprised in the full-screen state interface is in an icon-selected state, and the full-screen state interface further comprises a rename control;
in the second electronic device, in response to a sixteenth operation on the rename control, displaying a fifth interface, wherein the fifth interface comprises an input field;
in the second electronic device, in response to an input operation on the input field, naming the first icon as a target name, wherein
in the second electronic device, after the naming, the full-screen state interface comprises the first icon named as the target name; and
in the first electronic device, synchronously naming the first icon as the target name.

15. The method according to claim 3, wherein the method further comprises:
displaying, by the second electronic device, a full-screen interface, wherein the first icon and the second icon in the full-screen state interface are in an icon-selected state, and the full-screen state interface further comprises a delete control;
in the second electronic device, in response to a seventeenth operation on the delete control, deleting the first element and the second element, wherein
in the second electronic device, after the deletion, the full-screen state interface does not comprise the first icon and the second icon; and
in the first electronic device, synchronously deleting the first element and the second element, wherein the first icon and the second icon are not comprised after the deletion.

16. The method according to any one of claims 3 to 15, wherein after the floating-representation icon comprises the first icon indicating the first element and the first corner mark, the method further comprises:
in the second electronic device, in response to an interface switching operation on the second electronic device, displaying, by the second electronic device, a sixth interface, wherein the floating-representation icon is displayed in the sixth interface in a floating manner; and
in the second electronic device, in response to an eighteenth operation on the first icon, downloading, by the second electronic device, the first element indicated by the first icon and displaying a seventh interface, wherein the seventh interface comprises the first element, the floating-representation icon is displayed in the seventh interface in a floating manner, and the floating-representation icon does not comprise the first icon or the first corner mark.

17. The method according to any one of claims 3 to 16, wherein the method further comprises:
displaying, by the second electronic device, a full-screen interface, wherein the first icon and a fifth icon in the full-screen state interface are in an icon-selected state, and the full-screen state interface further comprises a share control; and the fifth icon indicates a fifth element collected by using the target application in the second electronic device;
in the second electronic device, in response to a nineteenth operation on the share control, displaying a second card, wherein the second card comprises a plurality of options indicating different formats, different devices, different applications, save, and print; and
in the second electronic device, in response to a twentieth operation on the second card, sharing the first element and the fifth element based on the selected option.

18. The method according to claim 17, wherein after the response to the nineteenth operation on the share control, before a third card is displayed, the method further comprises:
displaying a third card, wherein the third card comprises a merge option; and
in response to a twenty-first operation on the merge option, merging the first element and the fifth element; and
sharing the first element and the fifth element based on the selected option comprises:
sharing the merged first element and fifth element based on the selected option.

19. The method according to any one of claims 1 to 18, wherein the method further comprises:
in the second electronic device, in response to a twenty-second operation on the first icon, downloading and displaying the first element.

20. The method according to any one of claims 1 to 19, wherein in the first electronic device, switching from the collection-representation icon to the hidden-representation icon comprises:
switching from the collection-representation icon to a feedback-representation icon corresponding to the target application, wherein the feedback-representation icon is used to prompt that collection succeeds; and
switching from the feedback-representation icon to the hidden-representation icon.

21. The method according to any one of claims 1 to 20, wherein types of the first element comprise at least: text, figure, image, audio, or table; and the first stage of the first operation is a touch and hold operation, and the second stage of the first operation is drag or throw.

22. The method according to any one of claims 1 to 21, wherein the hidden-representation icon is in a translucent semi-circular shape, and the collection-representation icon is in a shape of a capsule or a window.

23. The method according to claim 10, wherein the first corner mark, the second corner mark, the third corner mark, and the fourth corner mark are the same.

24. An electronic device, comprising:
one or more processors and a memory, wherein
the memory is coupled to the one or more processors, the memory is configured to store computer program code, the computer program code comprises computer instructions, and the one or more processors invoke the computer instructions, to enable the electronic device to perform the method performed by the first electronic device or the second electronic device according to any one of claims 1 to 23.

25. A cross-end interaction system, wherein the cross-end interaction system comprising a first electronic device and a second electronic device, the first electronic device and the second electronic device perform the method according to any one of claims 1 to 23.

26. A computer-readable storage medium, wherein the computer-readable storage medium stores a computer program, and when the computer program is run on an electronic device, the electronic device is enabled to perform the method according to any one of claims 1 to 23.
